# EUROPÄISCHE PATENTSCHRIFT

(11) **EP 3 004 961 B1**
(45) Veröffentlichungstag und Bekanntmachung des Hinweises auf die Patenterteilung: **27.03.2019**
(21) Anmeldenummer: 14727450.0
(22) Anmeldetag: 23.05.2014
(51) Int. Cl.: G02B 7/00, G02B 7/02, G02B 7/18, G02B 26/08

(54) **OPTISCHE STRUKTUR MIT DARAN ANGEORDNETEN STEGEN UND VERFAHREN ZUR HERSTELLUNG DERSELBEN**
OPTICAL STRUCTURE ON WHICH CONNECTING PIECES ARE MOUNTED AND METHOD FOR PRODUCING SAID OPTICAL STRUCTURE
STRUCTURE OPTIQUE POURVUE D'ÉLÉMENTS DE LIAISON, ET PROCÉDÉ DE PRODUCTION

(30) Priorität: 27.05.2013 DE 102013209829
(43) Veröffentlichungstag der Anmeldung: 13.04.2016
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); REIMANN, Andreas, 99510 Apolda (DE); LANGE, Nicolas, 07743 Jena (DE); BRÄUER, Andreas, 07646 Schlöben (DE)
(74) Vertreter: Zimmermann, Tankred Klaus
(86) Internationale Anmeldenummer: PCT/EP2014/060726
(87) Internationale Veröffentlichungsnummer: WO 2014/191327

(56) Entgegenhaltungen:
- WO-A1-01/89986
- WO-A1-2012/095185
- JP-A- H 099 649
- JP-A- 2007 312 553
- US-A1- 2002 027 487
- US-A1- 2007 064 299
- US-B2- 7 078 778

## Beschreibung

Die vorliegende Erfindung bezieht sich auf eine Vorrichtung mit einer optischen Struktur und Stegen, die die optische Struktur mit einer tragenden Struktur verbinden, bei der die optische Struktur in der Lage ist, eine Bewegung bezüglich einer Bezugsebene auszuführen, und beschreibt auch mögliche Justagen für die Vorrichtung.

Optische Strukturen aus aushärtbarem Material, wie sie beispielsweise aus DE 102009055080 A1 bekannt sind, verändern ihre Eigenschaften bei sich verändernder Umgebungstemperatur. So ändert eine polymere Linse bei sich verändernder Temperatur ihre Ausdehnung, so dass die Brechzahl und die Krümmung der optischen Linse ebenfalls verändert werden. Dies kann dazu führen, dass eine optische Gerätschaft, wie beispielsweise eine Kamera oder ein Projektor eine sich verändernde Bildaufnahme- und/oder Bildwiedergabequalität zur Verfügung stellt.

Um eine sich verändernde Bildwiedergabe- und/oder Bildaufnahmequalität zu kompensieren, werden Linsen und/oder Linsengruppen, die in optischen Gerätschaften eingesetzt werden, nachjustiert, um eine thermisch induzierte Änderung einer Brennweite der optischen Gerätschaft zu kompensieren. Hierfür werden Aktuatoren wie beispielsweise Schwingspulenantriebe, piezomotorische Antriebe oder sonstige motorische Antriebe verwendet. Auch finden Flüssigkeitslinsen Anwendung, die eine Änderung der Linsenkrümmung ermöglichen. Diese Verfahren benötigen jedoch stets eine aktive Justage der Brennweite des optischen Systems.

In Folge von Schwankungen im Herstellungsprozess optischer Komponenten schwanken die Parameter der Komponenten, im Speziellen die Brennweite von Linsen. Werden die Komponenten mit weiteren Komponenten zu komplexeren Aufbauten gefügt, können die Zielparameter der Baugruppe, beispielweise ein Objektiv, gegebenenfalls nicht erreicht werden. Um eine optimale Funktion sicherzustellen, müssen die Komponenten nach erfolgtem Fügen erneut justiert werden, um eine optimale Ausrichtung der einzelnen Komponenten und mithin eine Kompensation der in Folge auftretender Herstellungs- und Fügetoleranzen vorhandenen Ungenauigkeiten sicherzustellen. Das Hauptziel der Justage liegt z. B. in der optimalen Ausrichtung der Bildebene einer Linse bzw. eines Linsenstapels bezüglich einer vorgegebenen Bildebene, in der sich zumeist ein optoelektronischer Bildwandler, ein sogenannt Imager, befindet.

Linsen bzw. Linsengruppen, beispielsweise Objektive, sind in einem oder mehreren Gehäuseteilen gefasst, das unter anderem über Außengewinde verfügt. In ein oder mehrere Gehäuseteile kann eine Halterung mit entsprechendem Innengewinde eingesetzt werden, wobei ein bestimmter Abstand, zumeist eine optimale Fokuslage, eingestellt wird. Nach erfolgter Justierung erfolgt gegebenenfalls eine Fixierung der Position, beispielsweise durch einen Kleber, der unter anderem UV-härtend ausgebildet sein kann. Auf diesem Weg wird die gesamte optische Struktur über gesondert einzubringende und ausschließlich für diesen Schritt ausgebildete zusätzliche Vorrichtungen justiert.
Für die Realisierung der Autofokusfunktion werden u.a. Voicecoil-Motoren eingesetzt. Diese bestehen aus vielen Einzelteilen und können insbesondere nicht in Wafer-Level-Technik hergestellt werden.

Gemäß einem nicht beanspruchten ersten Aspekt nachfolgend beschriebener Beispiele wird eine optische Vorrichtung geschaffen, die in der Lage ist, den durch Temperaturänderungen verursachten Änderungen optischer Eigenschaften selbstregulierend und unabhängig von weiterer Aktuatorik entgegenzuwirken. Vorrichtungen können miniaturisiert und in Wafer-Level-Technik hergestellt werden, sodass eine kleinere Baugröße und/oder geringere Herstellungskosten erzielbar sind. Vorrichtungen können gemäß dieses Aspektes beispielsweise Fertigungstoleranzen kompensieren und/oder durch Induzierung von Wärme eine veränderliche Fokussierung im Betrieb des optischen Gesamtsystems ermöglichen, sodass weitere fokussierenden mechanischen Bauteile substituiert werden.

Gemäß dem ersten Aspekt umfasst eine Vorrichtung eine optische Struktur mit zumindest zwei Stegen, die ausgebildet sind, eine Bewegung der optischen Struktur bezogen auf eine Bezugsebene zu ermöglichen. Gemäß dem ersten Aspekt umfasst ein Verfahren die Ausbildung von Stegen derart, dass sie eine Bewegung einer an ihnen angeordneten optischen Struktur ermöglichen, die einer thermisch induszierten Änderung der optischen Charakteristik der optischen Struktur entgegenwirkt.

Gemäß dem ersten Aspekt wird ausgenutzt, dass die thermisch induzierte Änderung von beispielsweise polymeren Elementen einer optischen Struktur kompensiert werden kann, indem die in den Stegen gleichzeitig auftretenden thermisch induzierten mechanischen Änderungen genutzt werden, um der Änderung der optischen Charakteristik der optischen Struktur entgegenzuwirken.

Änderungen genutzt werden, um der Änderung der optischen Charakteristik der optischen Struktur entgegenzuwirken.

Gemäß einem Beispiel sind die Stege einschichtig bzw. einlagig aufgebaut. In diesem Fall können die Stege aus demselben Material wie die an den Stegen aufgehängte optische Struktur bestehen, was eine einfachere Herstellung ermöglicht. Das Material kann einen höheren Temperaturausdehnungskoeffizienten aufweisen, als die die optische Struktur umgebende tragende Struktur, was bei einer Temperaturerhöhung zu einer Bewegung der optischen Struktur in Richtung entlang der optischen Achse führt. Die Richtung der Bewegung der optischen Struktur wird durch eine Wölbung der Stege definiert, die in der Ebene liegt, die die optische Achse der optischen Struktur liegt.

Gemäß einem alternativen Beispiel sind die Stege mehrschichtig bzw. mehrlagig aufgebaut, was eine gerade, ungewölbte Ausführung der Stege ermöglicht und die Kombination der Stegmaterialien unabhängig vom Temperaturausdehnungskoeffizienten der umgebenden tragenden Struktur, an denen die Stege angebracht sind, gebildet sein kann, da die Durchbiegung der Stege durch die unterschiedlichen Temperaturausdehnungskoeffizienten der Stegmaterialien erfolgt. Auch kann eine Entkopplung von mechanischen und optischen Eigenschaften der Schichtmaterialien erreicht werden, wenn die Schichten diskontinuierlich und in mehr als zwei Lagen angeordnet werden.

Gemäß einem Beispiel schneiden die Längsmittellinien der Stege die optische Achse der optischen Struktur und die Stege sind stirnseitig mit der optischen Struktur verbunden. Gemäß einem alternativen Beispiel schneiden die Längsmittellinien der Stege die optische Achse der Struktur nicht und die Stege sind seitlich über Ausformungen mit der optischen Struktur verbunden. Letzteres Beispiel erlaubt größere Längsausdehnung der Stege und somit die Vergrößerung des erzielbaren Stellweges der optischen Struktur.

Weitere Beispiele zeigen die Möglichkeit, elektrische Heizelemente an den Stegen anzuordnen. Dies ermöglicht eine Auslenkung der Stege und mithin eine Positionierung der optischen Struktur abhängig von einer induzierten Temperatur und unabhängig von der Umgebungstemperatur, was unter anderem für eine aktive Fokussierung wechselnder Objektabstände, bzw. einen Autofokus genutzt werden kann. Durch eine von einander verschiedene Auslenkung der Stege kann auch eine Verkippung der optischen Struktur oder eine gesteuerte Fokussierung der optischen Struktur erzielt werden. Es kann insbesondere eine Steuerung (nicht gezeigt) vorgesehen oder zumindest anschließbar sein,
die die Heizelemente entweder steuert, um bspw. einen bekannten Objektabstand zu fokussieren, oder regelt, wie z.B. abhängig von einer Auswertung eines von der optischen Eigenschaft der optischen Struktur abhängigen Signals, wie z.B. der Schärfe eines in einer Bildebene gewonnen Bilds, die zumindest teilweise durch die optische Struktur definiert wird, wie z.B. ein Linsensystem, das die an den Stegen aufgehängte Linse umfasst.

Ein nicht beanspruchter zweiter Aspekt nachfolgend beschriebener Beispiele bezieht sich auf ein Konzept, das es ermöglicht, eine Initialposition einer optischen Struktur nach erfolgter Justierung leichter, wie z. B. ohne eine Anordnung von Gewinden oder die Einbringung dazugehöriger weiterer mechanischer Komponenten, in Gehäusestrukturen beizubehalten, so dass der Abschluss der Justage bei beispielsweise der Herstellung erleichtert wird.

Gemäß dem zweiten Aspekt umfasst eine Vorrichtung zumindest zwei Stege, die eine optische Struktur mit einer tragenden Struktur verbinden und an der ein ausheilbarer Kleber angeordnet ist, der eine Fixierung einer vorbestimmten Ausrichtung der optischen Struktur bewirken. Gemäß dem zweiten Aspekt umfasst ein Verfahren die Ausbildung von Stegen derart, dass sie eine Bewegung einer an ihnen angeordneten optischen Struktur ermöglichen, die einer thermisch induzierten Änderung der optischen Charakteristik der optischen Struktur entgegenwirkt, das Anordnen eines ausheilbaren Klebers zwischen der tragenden Struktur und den Stegen sowie das Ausheilen des Klebers, um eine vorbestimmte Ausrichtung der optischen Struktur bezüglich einer Bezugsebene zu bewirken.

Gemäß dem zweiten Aspekt wird ausgenutzt, dass Stege durch einen Kleber, der zwischen den Stegen und der tragenden Struktur angeordnet ist, ein Auslenken der optischen Struktur in eine initiale Justierung und Ausheilen des Klebers die eingestellte Initialposition nach der Ausheilung des Klebers von der optischen Struktur beibehalten wird.

Gemäß einem nicht beanspruchten dritten und beanspruchtenvierten Aspekt nachfolgend beschriebener Ausführungsbeispiele wird eine Aufgabe gelöst, ein Konzept für optische Vorrichtungen zu schaffen, das in der Lage ist, Bewegungen in eine über Stege mit einem Rahmen verbundene optische Struktur unabhängig von der Umgebungstemperatur und mit einer großen Dynamik induzieren zu können, wobei die dafür eingesetzten Aktoren miniaturisiert und in Wafer-Level-Technik herstellbar sind, sodass eine kleinere Baugröße und/oder geringere Herstellungskosten erzielbar sind. Vorrichtungen können gemäß dieser Aspekte beispielsweise Fertigungstoleranzen kompensieren und/oder eine veränderliche Fokussierung im Betrieb des optischen Gesamtsystems ermöglichen.
Gemäß dem nicht beanspruchten dritten Aspekt umfasst eine Vorrichtung zumindest zwei Stege, die eine optische Struktur mit einer tragenden Struktur verbinden und einen elektrostatischen Antrieb mit einer ersten und einer zweiten Elektrode, die zumindest teilweise gegenüberliegend angeordnet sind und die erste Elektrode auf einem der Stege angeordnet ist, um bei Anlegen eines elektrischen Feldes zwischen der ersten und zweiten Elektrode eine Verformung der Stege zu bewirken. Gemäß dem dritten Aspekt umfasst ein Verfahren die Ausbildung von Stegen derart, dass sie eine Bewegung einer an ihnen angeordneten optischen Struktur ermöglichen, eine Anordnung der ersten Elektrode an oder in einem der Stege und eine Anordnung der zweiten Elektrode derart, dass sie der ersten zumindest teilweise gegenüberliegt und ein elektrisches Feld zwischen der ersten und der zweiten Elektrode eine Verformung der Stege bewirkt.

Gemäß dem dritten Aspekt nachfolgend beschriebener Beispiele wird ausgenutzt, dass ein elektrostatischer Antrieb mit einer ersten und einer zweiten Elektrode an mindestens einem der Stege so angeordnet werden kann, dass ein Anlegen eines elektrischen Feldes zwischen der ersten und der zweiten Elektrode des elektrostatischen Antriebs eine Verformung des Steges bewirkt.

Gemäß einem Beispiel ist eine erste Elektrode eines elektrostatischen Antriebes an den Stegen, die eine optische Struktur mit einer tragenden Struktur verbinden, und eine zweite Elektrode an einem Formbauteil, welches an die tragende Struktur gefügt wird, angeordnet.

Gemäß einem alternativen Beispiel ist die zweite Elektrode des elektrostatischen Antriebs an der tragenden Struktur angeordnet, so dass die Anordnung eines Formbauteils entfallen kann.

Gemäß einem Beispiel ist die erste Elektrode an einer Oberfläche des Steges angeordnet und über eine Isolationsschicht von der zweiten Elektrode beabstandet. Gemäß einem alternativen Beispiel ist die erste Elektrode in den Steg eingebettet, sodass das Stegmaterial, welches die erste Elektrode bedeckt gleichzeitig als Isolationsschicht fungiert.

Gemäß dem vierten Aspekt umfasst eine Vorrichtung nach Anspruch 1
zumindest zwei Stege, die eine optische Struktur mit einer tragenden Struktur verbinden und einen elektrostatischen Antrieb mit einer Auslegerelektrode und einer von der Auslegerelektrode elektrisch isolierten stationären Elektrode, die zumindest teilweise gegenüberliegend angeordnet sind. Die Auslegerelektrode ist auf oder in zumindest einem Abschnitt zumindest eines Steges angeordnet. Die Auslegerelektrode ragt zumindest teilweise aus einer Ebene des zumindest einen Steges heraus und ist in Richtung der stationären Elektrode ausgelenkt, um bei Anlegen eines elektrischen Feldes zwischen der Auslegerelektrode und stationären Elektrode eine Verformung des Steges zu bewirken. Der der Abstand zwischen der Auslegerelektrode und der stationären Elektrode nimmt ausgehend von einer Position benachbart zu der tragenden Struktur im unausgelenkten Zustand des Aktuators in Richtung der optischen Struktur zu. Gemäß dem vierten Aspekt umfasst ein Verfahren nach Anspruch 1
die Ausbildung von Stegen derart, dass sie eine Bewegung einer an ihnen angeordneten optischen Struktur ermöglichen, die Anordnung der Auslegerelektrode auf oder in einem Abschnitt der Stege und eine Anordnung der stationären Elektrode derart, dass sie der Auslegerelektrode zumindest teilweise gegenüberliegt sowie ein Auslenken der Auslegerelektrode zumindest teilweise aus einer Ebene zumindest eines Steges heraus und in Richtung der stationären Elektrode, wobei ein Anlegen eines elektrischen Feldes zwischen der Auslegerelektrode und der stationären Elektrode eine Verformung des Steges und eine Bewegung der optischen Struktur bewirkt. Die Auslegerelektrode oder die stationäre Elektrode werden so angeordnet werden, dass der der Abstand zwischen der Auslegerelektrode und der stationären Elektrode ausgehend von einer Position benachbart zu der tragenden Struktur im unausgelenkten Zustand des Aktuators in Richtung der optischen Struktur zunimmt

Gemäß dem vierten Aspekt wird ausgenutzt, dass ein elektrostatischer Antrieb mit einer Auslegerelektrode und einer stationären Elektrode an mindestens einem der Stege angeordnet werden kann, ein als innerer Teil geformter Abschnitt des Steges aus der Ebene des restlichen Steges in Richtung der stationären Elektrode ausgelenkt ist und dass ein Anlegen eines elektrischen Feldes zwischen der Auslegerelektrode und der stationären Elektrode des elektrostatischen Antriebs eine Verformung des Steges bewirkt.

Ausführungsbeispiele der Erfindung werden nachfolgend näher erläutert. In den Figuren sind gleiche oder gleichwirkende Elemente mit den gleichen Bezugszeichen versehen.

Bevorzugte Ausführungsbeispiele der vorliegenden Erfindung werden nachfolgend Bezug nehmend auf die beiliegenden Zeichnungen erläutert. Es zeigen:
- Fig. 1a: eine Querschnittdarstellung einer Vorrichtung mit einer Linse, die über zwei Stege an einer tragenden Struktur befestigt ist,
- Fig. 1b: einen theoretischen Zustand der Vorrichtung mit einer Linse, deren optische Charakteristik durch thermische Einflüsse verändert sind;
- Fig. 1c: einen Zustand der Vorrichtung mit einer aus der ursprünglichen Lage bewegten Linse, deren Bewegung der Veränderung der optischen Charakteristik entgegenwirkt;
- Fig. 2a-b: schematische Querschnittdarstellungen mit alternativen Linsenformen, wobei Fig. 2a eine plan-konvexe Linse und Fig. 2b eine konkav-konvexe Linse zeigt;
- Fig. 3: eine perspektivische Ansicht einschichtiger Stege mit einer Wölbung;
- Fig. 4: eine schematische Querschnittdarstellung einer Vorrichtung mit dreischichtigen Stegen;

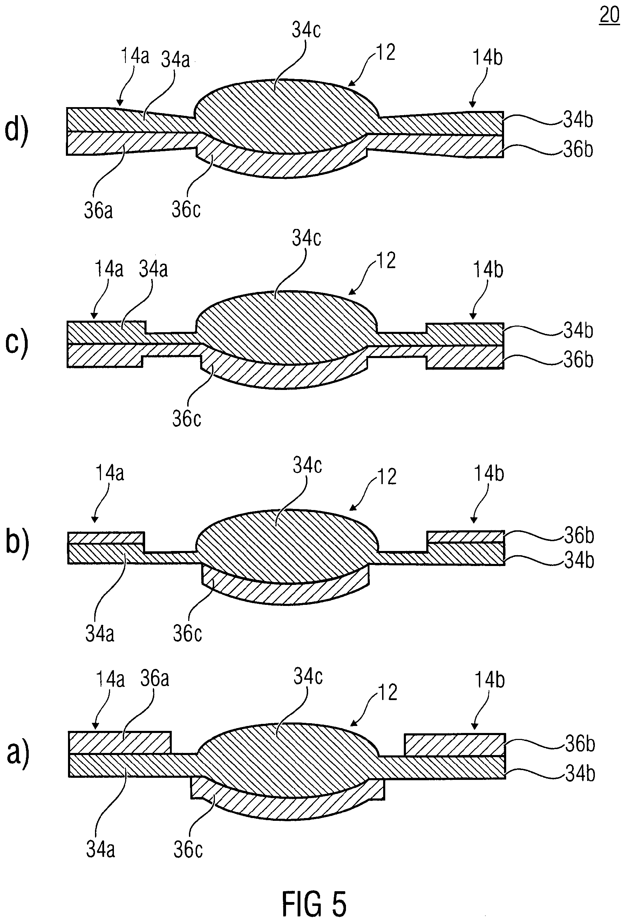

- Fig. 5a-d: schematische Seitenansichten unterschiedlicher Ausführungsformen zweischichtiger Linsen und Stege, wobei Fig. 5a die diskontinuierliche Anordnung einer zweiten Materialschicht an der Linse und den Stegen zum Aufbau eines dreilagigen Gesamtaufbaus, Fig. 5b eine Vorrichtung analog Fig. 5a mit Stegen, die einen unstetigen Verlauf der Dicke umfassen, Fig. 5c eine Vorrichtung mit einer einstückigen zweiten Materialschicht, welche unstetige Änderungen der Schichtdicke umfasst, und Fig. 5d eine Vorrichtung analog Fig. 5c, bei der die Schichtdicken im Bereich der Stege eine stetige Änderung umfassen, zeigt;
- Fig. 6a: eine schematische Seitenansicht einer sammelnden zweischichtigen Linse mit einer konstanten Dicke der zweiten Schicht;
- Fig. 6b: eine schematische Seitenansicht einer sammelnden zweischichtigen Linse mit einem symmetrischen Schichtdickenverlauf der ersten und zweiten Schicht;
- Fig. 6c: eine schematische Seitenschnittansicht einer sammelnden zweischichtige Linse mit einer konstanten Dicke der ersten Schicht;
- Fig. 6d: eine schematische Seitenschnittansicht einer streuenden zweischichtigen Linse, bei der die erste Schicht in Form einer sammelnden Linse ausgebildet ist und die zweite Schicht in einer variablen Schichtdicke an der ersten Schicht angeordnet ist;
- Fig. 6e: eine schematische Seitenschnittansicht einer streuenden zweischichtigen Linse analog Fig. 6d. bei der die erste Schicht in Form einer plan-konvexen Linse ausgebildet ist;
- Fig. 6f: eine schematische Seitenschnittansicht einer streuenden zweischichtigen Linse, bei der die zweite Schicht in Form einer konkav-konvexen Linse ausgebildet ist;
- Fig. 7: eine Aufsicht auf eine Vorrichtung mit einer Linse und vier Stegen, bei der die Längsmittellinien der Stege die optische Achse der Linse schneiden;
- Fig. 8: eine Aufsicht auf eine Vorrichtung mit einer Linse und zwei Stegen, bei der die Längsmittellinien der Stege die optische Achse der Linse schneiden;
- Fig. 9: eine Aufsicht auf eine Vorrichtung mit einer Linse und diagonal angeordneten Stegen;
- Fig. 10: eine Aufsicht auf eine Vorrichtung mit einer Linse und vier Stegen, bei der die Längsmittellinien der Stege an der optischen Achse der Linse vorbeilaufen;
- Fig. 11: eine Aufsicht auf eine Vorrichtung mit einer Linse und zwei Stegen, bei der die Längsmittellinien an der optischen Achse der Linse vorbeilaufen;
- Fig. 12: eine Aufsicht auf eine Vorrichtung mit einer Linse und drei Stegen, bei der die Längsmittellinien der Stege an der optischen Achse der Linse vorbeilaufen;
- Fig. 13: eine Aufsicht auf eine Vorrichtung analog Fig. 7, bei der elektrische Heizelemente an den Stegen angeordnet sind;
- Fig. 14: eine Aufsicht auf eine Vorrichtung analog Fig. 8, bei der elektrische Heizelemente an den Stegen angeordnet sind;
- Fig. 15: eine Aufsicht auf eine Vorrichtung analog Fig. 9, bei der elektrische Heizelemente an den Stegen angeordnet sind;
- Fig. 16: eine Aufsicht auf eine Vorrichtung analog Fig. 10, bei der elektrische Heizelemente an den Stegen angeordnet sind;
- Fig. 17: eine Aufsicht auf eine Vorrichtung analog Fig. 11, bei der elektrische Heizelemente an den Stegen angeordnet sind;
- Fig. 18: eine Aufsicht auf eine Vorrichtung analog Fig. 12 bei der elektrische Heizelemente an den Stegen angeordnet sind;
- Fig. 19: eine schematische Aufsicht einer Vorrichtung mit vier Linsen, die über je vier Stege mit der tragenden Struktur verbunden sind;
- Fig. 20: eine schematische Aufsicht auf eine Vorrichtung mit vier Linsen, die über je vier Stege mit der tragenden Struktur verbunden sind und die tragende Struktur einen umlaufenden Rahmen aus mindestens einem Material der Stege umfasst;
- Fig. 21: eine Aufsicht auf eine Vorrichtung mit vier Linsen, die je über vier Stege mit der tragenden Struktur verbunden sind, die tragende Struktur einen umlaufenden Rahmen aus mindestens einem Material der Stege umfasst und bei der die tragende Struktur ferner Aussparungen umfasst;
- Fig. 22: eine Aufsicht auf eine Vorrichtung mit vier Linsen, die über je vier Stege mit der tragenden Struktur verbunden sind und bei der die tragende Struktur vollständig aus einem umlaufenden Rahmen aus mindestens einem Material der Stege gebildet ist;
- Fig. 23: eine Aufsicht auf eine Vorrichtung mit vier Linsen, die über je vier Stege mit der tragenden Struktur verbunden sind, bei der die tragende Struktur vollständig aus einem umlaufenden Rahmen aus mindestens einem Material der Stege gebildet ist und die tragende Struktur Aussparungen umfasst;
- Fig. 24: eine Aufsicht auf eine Vorrichtung mit einem Linsenfeld, welches über acht Stege mit der tragenden Struktur verbunden ist;
- Fig. 25: eine Querschnittansicht einer Vorrichtung, bei der eine einschichtige mitbewegte Linse mit der bewegten Linse einen Linsenstapel bildet;
- Fig. 26: eine Querschnittansicht einer Vorrichtung, bei der eine zweischichtige mitbewegte Linse mit der bewegten Linse einen Linsenstapel bildet und die mitbewegte Linse zu einer Bezugsebene eine größere Distanz als die bewegte Linse aufweist;
- Fig. 27: eine Querschnittansicht einer Vorrichtung, bei der die mitbewegte zweischichtige Linse des Linsenstapels eine geringe Distanz zu einer Bezugsebene aufweist, als die bewegte Linse;
- Fig. 28: eine Querschnittansicht einer Vorrichtung mit einem Linsenstapel, bei der der Linsenstapel eine Klebschicht umfasst;
- Fig. 29: eine Querschnittansicht einer Vorrichtung, bei der zwei voneinander verschiedene Linsenstapel mit der tragenden Struktur verbunden sind;
- Fig. 30a-b: zwei Querschnittansichten je einer Vorrichtung, bei der an der tragenden Struktur eine unbewegte Linse angeordnet ist, wobei Fig. 30a die Anordnung der bewegten Linse mit einem geringerem Abstand und Fig. 30b mit einem größeren Abstand zur Bezugsebene zeigt;
- Fig. 31a-b: zwei Querschnittansichten mit je einer Vorrichtung mit einer bewegten und einer unbewegten Linse, bei der an der tragenden Struktur ein umlaufender Rahmen aus mindestens einem Material der Stege gebildet ist, wobei Fig. 31a die Anordnung der bewegten Linse mit einem geringerem Abstand und Fig. 31b mit einem größeren Abstand zur Bezugsebene zeigt;
- Fig. 32a-b: zwei Querschnittansichten mit je einer Vorrichtung, bei der die unbewegte Linse eine Glasschicht umfasst und sich der Querschnitt der tragenden Struktur über den Verlauf des Schichtstapels ändert, wobei Fig. 32a die Anordnung der bewegten Linse mit einem geringerem Abstand und Fig. 32b mit einem größeren Abstand zur Bezugsebene zeigt;
- Fig. 33: eine Querschnittansicht einer Vorrichtung, bei der die unbewegte Linse eine Glasschicht umfasst und die bewegte Linse sowie die peripher angeordnete Abstandshalterstruktur aus demselben Material bestehen;
- Fig. 34: eine Querschnittansicht einer Vorrichtung, bei der die unbewegliche Linse auf einer Glasschicht angeordnet ist,die Bereiche um die optische Funktionsfläche der unbeweglichen Linse herum diskontinuierlich ausgebildet sind und die bewegte Linse sowie die peripher angeordnete Abstandshalterstruktur aus demselben Material bestehen;
- Fig. 35: eine Querschnittansicht einer Vorrichtung mit einer beweglichen und zwei unbeweglichen Linsen, bei der die unbeweglichen Linsen je eine Glasschicht kontinuierlich ausgeprägte Bereiche um die optische Funktionsfläche der unbeweglichen Linse herum umfassen und zwischen Linsenlagen Abstandshalterstrukturen aus anderem Material als die optischen Funktionsflächen gebildet sind;
- Fig. 36: eine Querschnittansicht einer Vorrichtung mit einer beweglichen und zwei unbewegten Linsen, bei der die unbewegten Linsen je eine Glasschicht und, diskontinuierlich ausgebildete Bereiche um die optische Funktionsfläche der unbeweglichen Linse herum umfassen;
- Fig. 37: eine Querschnittansicht einer Vorrichtung, bei der die bewegliche Linse und die daran angeordneten Stege einstückig aus einem Material gebildet sind und in der restlichen Vorrichtung ausschließlich andere Materialien ausgebildet sind;
- Fig. 38: eine Querschnittansicht einer Vorrichtung, bei der einzelne Teile der tragenden Struktur mit einer Klebschicht gefügt sind;
- Fig. 39: eine Querschnittansicht einer Vorrichtung mit einer beweglichen und zwei, jeweils eine Glasschicht umfassenden, unbewegten Linsen, bei der die tragende Struktur eine Klebschicht umfasst;
- Fig. 40: eine Querschnittansicht einer Vorrichtung analog Fig. 30 mit einer beweglichen Linse, daran angeordneter mitbewegter Linse und einer unbewegten Linse mit kurzen Stegen, die ohne eine Glasschicht an der tragenden Struktur angeordnet ist;
- Fig. 41: eine Querschnittansicht einer Vorrichtung analog Fig. 40, bei der die unbewegte Linse, die daran angeordneten kontinuierlich ausgeprägten Bereiche und die tragende Struktur lateral zur unbewegten Linse und den kontinuierlich ausgeprägten Bereichen eine Glasschicht umfassen;
- Fig. 42: eine Querschnittansicht einer Vorrichtung analog Fig. 40 bei der die tragende Struktur im Bereich zwischen der bewegten und der unbewegten Linse eine Klebschicht umfasst;
- Fig. 43: eine Querschnittansicht einer Vorrichtung analog Fig. 41, bei der die tragende Struktur analog Fig. 42 eine Klebschicht umfasst;
- Fig. 44: eine Querschnittansicht einer Vorrichtung analog Fig. 42, bei der die die bewegte und die mitbewegte Linse verbindenden Strukturen eine Klebschicht umfassen;
- Fig. 45: eine Querschnittansicht einer Vorrichtung analog Fig. 44, bei der die unbewegte Linse eine Glasschicht umfasst analog Fig. 43 und die die bewegte und die mitbewegte Linse verbindenden Strukturen eine Klebschicht umfassen ;
- Fig. 46: eine Querschnittansicht einer Vorrichtung analog Fig. 44, bei der ein zusätzlicher, innenliegender Rahmen analog Fig. 31 aus mindestens einem Material der Stege ebenfalls angeordnet und durch eine Klebschicht gefügt ist;
- Fig. 47a: ein Blockschaltbild des Verfahrens zur Fixierung einer Initialposition der Linse mittels Kleber;
- Fig. 47b: eine Querschnittansicht einer Vorrichtung während des Verfahrens zur Fixierung einer neuen Initialposition mit einem Verfahren gemäß Fig. 47a;
- Fig. 47c: eine Querschnittansicht, die den Verfahrensschritt des Anordnens von Klebstoff zwischen den Stegen und der tragenden Struktur zeigt;
- Fig. 48: eine Aufsicht auf eine Vorrichtung mit einer Linse und vier Stegen, bei der an den Stegen Kleber angeordnet ist;
- Fig. 49: eine perspektivische Ansicht einer Vorrichtung mit einer Linse und Stegen, bei der die Stege einen konkav-konvexen Querschnitt aufweisen;
- Fig. 50a-c: Querschnittansichten einer Vorrichtung mit einer Linse und Stegen sowie einer tragenden Struktur, welche derart ausgebildet ist, dass Kleber an ihr angeordnet werden kann, wobei Fig. 50a eine konvex-konvexe Linse, Fig. 50b eine plankonvexe Linse und Fig. 50c eine konvex-konkave Linse zeigt;

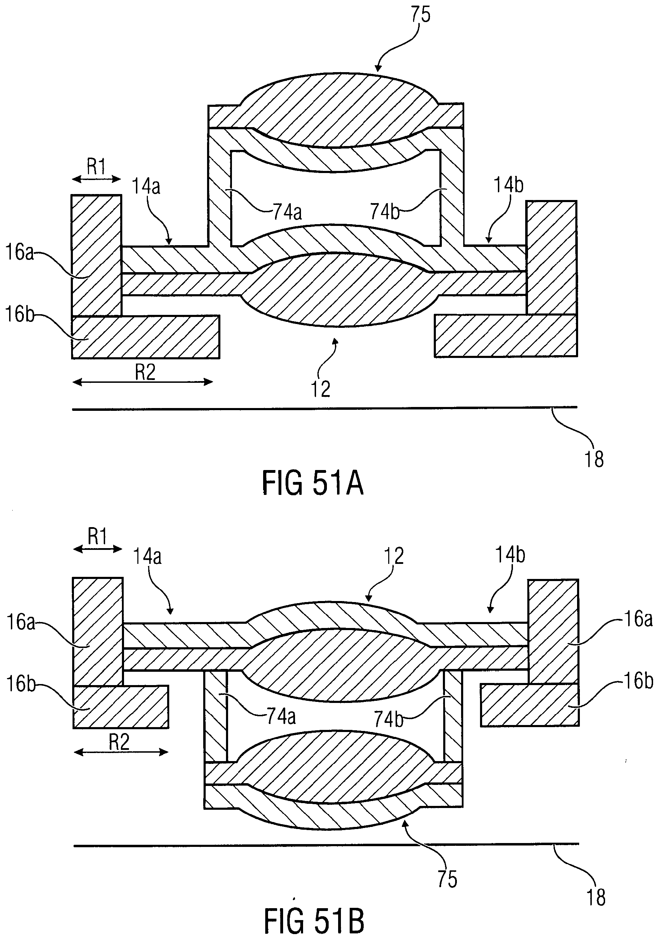

- Fig. 51a-b: Querschnittansichten einer Vorrichtung mit einem Linsenstapel und Stegen sowie einer tragenden Struktur, welche derart ausgebildet ist, dass Kleber an ihr angeordnet werden kann, wobei Fig. 51 a die Anordnung der bewegten Linse des Stapels mit einem geringerem Abstand und Fig. 51b mit einem größeren Abstand zur Bezugsebene zeigt;

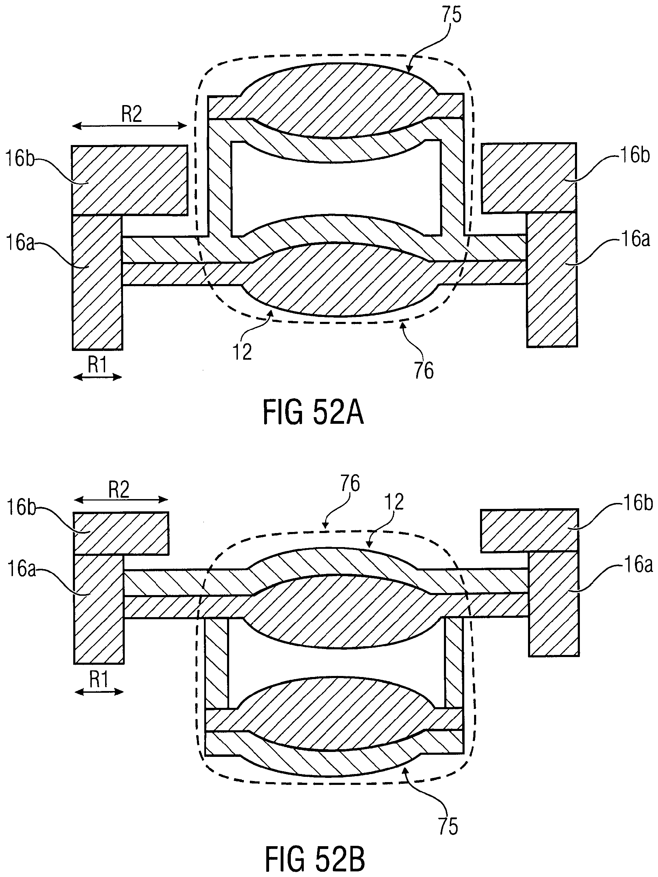

- Fig. 52a-b: Querschnittansichten einer Vorrichtung mit einem Linsenstapel und Stegen sowie einer tragenden Struktur, welche alternativ ausgebildet ist, dass ebenfalls Kleber an ihr angeordnet werden kann, wobei Fig. 52a die Anordnung der bewegten Linse des Stapels mit einem geringerem Abstand und Fig. 52b mit einem größeren Abstand zur Bezugsebene zeigt;
- Fig. 53: eine Querschnittansicht einer Vorrichtung mit zwei Linsenstapeln und Stegen sowie einer tragenden Struktur, welche derart ausgebildet ist, dass Kleber bezüglich beider Linsenstapel an ihr angeordnet werden kann;
- Fig. 54a: Querschnittansichten einer mit unterschiedlichen Breiten ausgebildeten tragenden Struktur,, einer unbewegten Linse an einem Glasträger, wobei die tragende Struktur aus demselben Material wie die unbewegte Linse an dem Glasträger besteht sowie einer an Stegen angeordneten beweglichen Linse;
- Fig. 54b: eine Querschnittansicht einer Anordnung zweier Aufbauten analog Fig. 54a nebeneinander, wobei die tragende Struktur in den Bereichen zwischen den Aufbauten durchgängig an dem Glasträger angeordnet ist;
- Fig. 54c: eine Querschnittansicht einer Anordnung zweier Aufbauten analog Fig. 54a nebeneinander, wobei die tragende Struktur in den Bereichen zwischen den Aufbauten unterbrochen ist und Bereiche auf dem Glasträger bestehen, die nicht von der tragenden Struktur überdeckt sind;
- Fig. 55a-b: Querschnittansichten einer Vorrichtung mit einer tragenden Struktur, welche mehrere Breiten und einen Glaswafer mit zwei optischen Strukturen umfasst, wobei die Vorrichtung in Fig. 55a eine einschichtige bewegte Linse und die Vorrichtung in Fig. 55b eine zweischichtige bewegte Linse umfasst;
- Fig. 56a-b: Querschnittansichten einer Vorrichtung mit einer tragenden Struktur, welche zwei Glaswafer und eine mit Stegen einstückig gefertigte Linse umfasst, wobei ein Abschnitt der tragenden Struktur benachbart zu den Stegen in Fig. 56a zweistückig und aus einem anderen Material als die Stege und in Fig. 56b einstückig und aus dem gleichen Material wie die Stege gebildet ist;
- Fig. 57a: eine Querschnittansicht einer Vorrichtung mit elektrostatischen Antrieben, bei der eine Isolationsschicht an einer zweiten Elektrode angeordnet ist im gefügten Zustand;
- Fig. 57b: eine Querschnittansicht der ungefügten Teilvorrichtungen der Vorrichtung gemäß Fig. 57a;
- Fig. 57c: die Anordnung eines ausheilbaren Klebers zwischen dem Formbauteil und der tragenden Struktur
- Fig. 58: eine Querschnittansicht einer Vorrichtung, bei der die Isolationsschicht an der ersten Elektrode angeordnet ist;
- Fig. 59: eine Querschnittansicht einer Vorrichtung, bei der an den Elektroden des elektrostatischen Antriebes eine elektrische Spannung angelegt ist;
- Fig. 60a: eine Aufsicht auf eine Vorrichtung mit einer Linse und vier Stegen, bei der auf den Stegen und der tragenden Struktur Elektroden angeordnet sind;
- Fig. 60b: eine Aufsicht auf ein Formbauteil mit einer Isolationsschicht, unter der Elektroden angeordnet sind;
- Fig. 61a: eine Querschnittansicht einer Vorrichtung mit zwei Stegen und einem optischen Array in Form mehrerer nebeneinanderliegender Linsen mit einem Durchmesser;
- Fig. 61b: eine Querschnittansicht einer Vorrichtung analog Fig. 61a, bei der das optische Array Ausschnitte aus Linsen umfasst;
- Fig. 61c: eine Querschnittansicht eines Formbauteils, dessen innerer Durchmesser kleiner als der Durchmesser der optischen Arrays gemäß Fig. 61a und 61b ausgebildet ist;
- Fig. 62a: eine Querschnittansicht einer Vorrichtung mit zwei nebeneinanderliegenden Zellen, die je eine bewegliche Linse sowie periphere Strukturen umfassen;
- Fig. 62b: eine Querschnittansicht einer Formbauteils, welches ausgebildet ist, an die Vorrichtung der Fig. 62a gefügt zu werden;
- Fig. 62c: eine Querschnittansicht einer Vorrichtung der Vorrichtung gemäß Fig. 62a und des Formbauteils gemäß Fig. 62b in gefügtem Zustand, mit zwei Zellen mit je einer beweglichen Linse und zwei elektrostatischen Antrieben;
- Fig. 63a: eine Querschnittansicht eines beidseitig gekrümmten Formbauteils, an welchem Elektroden angeordnet sind;
- Fig. 63b: eine Querschnittansicht einer Vorrichtung, bei der zwei Teilvorrichtungen über das beidseitig gekrümmtes Formbauteil der Fig. 63a aneinandergefügt sind und bei der zwei Abschnitte einer tragenden Struktur über das Formbauteil gefügt sind;
- Fig. 64: eine Querschnittansicht einer Vorrichtung, bei der das Formbauteil und die tragende Struktur einstückig gebildet sind;
- Fig. 65: eine Aufsicht auf eine Vorrichtung analog Fig. 7 mit rechteckig an den Stegen angeordneten gebildeten Elektroden;
- Fig. 66: eine Aufsicht auf eine Vorrichtung analog Fig. 65, mit dreieckig an den Stegen gebildeten Elektroden;
- Fig. 67: eine Aufsicht auf eine Vorrichtung analog Fig. 65 mit freiförmig an den Stegen gebildeten Elektroden;
- Fig. 68: eine Aufsicht auf eine Vorrichtung analog Fig. 11 mit an den Stegen gebildeten Elektroden, deren Außenkanten parallel zu den Stegkanten verlaufen;
- Fig. 69: eine Aufsicht auf eine Vorrichtung analog Fig. 8 mit dreieckig an den Stegen gebildeten Elektroden;
- Fig. 70: eine Aufsicht auf eine Vorrichtung analog Fig. 9 mit dreieckig an den Stegen gebildeten Elektroden;
- Fig. 71: eine Aufsicht auf eine Vorrichtung analog Fig. 11 mit freiförmig an den Stegen gebildeten Elektroden;
- Fig. 72: eine Aufsicht auf eine Vorrichtung analog Fig. 12 mit freiförmig an den Stegen gebildeten Elektroden;
- Fig. 73: eine Querschnittansicht einer Vorrichtung, bei der ein Linsenstapel durch einen elektrostatischen Antrieb bewegt wird und der Linsenstapel über eine bewegte und eine mitbewegte Linse verfügt
- Fig. 74: eine Querschnittansicht einer Vorrichtung, bei der eine bewegliche Linse durch elektrostatische Antriebe gegenüber einer unbeweglichen Linse bewegt wird, wobei die unbewegliche Linse an einer Glasplatte gebildet ist;
- Fig. 75: eine Querschnittansicht zweier Teilvorrichtungen, die über eine Klebschicht gefügt sind, so dass die optischen Achsen aller Linsen im Wesentlichen übereinstimmen;
- Fig. 76: eine Querschnittansicht einer Vorrichtung, bei der eine Linse durch einen elektrostatischen Antrieb gegenüber einem Glaswafer bewegt wird, der an einer Oberfläche eine einschichtige Linse umfasst;
- Fig. 77: eine Querschnittansicht einer Vorrichtung mit mehreren, nebeneinanderliegenden Linsen, die getrennt voneinander gegenüber einem Glaswafer bewegt werden können;
- Fig. 78: eine Querschnittansicht einer Vorrichtung, bei der an der tragenden Struktur ein Bildwandler angeordnet ist;
- Fig. 79: eine Querschnittansicht einer Vorrichtung, bei der zwei Linsen getrennt voneinander gegenüber je einem Glaswafer und einem Bildwandler bewegt werden können;
- Fig. 80: eine Querschnittansicht einer Vorrichtung, bei der eine Elektrode in einen Steg eingebettet ist;
- Fig. 81: eine Aufsicht auf eine Vorrichtung mit einer Linse und zwei Stegen, bei der Aussparungen in den Stegen einen inneren Teil der Stege ausbilden;
- Fig. 82a: eine Querschnittansicht einer Vorrichtung mit einer Linse und in Richtung der statischen Elektroden ausgelenkten Auslegerelektroden, bei der die statischen Elektroden an einem transparenten Formbauteil angeordnet sind;
- Fig. 82b: eine Querschnittansicht analog Fig. 82a, bei der die Linse eine Auslenkung erfährt;
- Fig. 83a: eine Querschnittansicht einer Vorrichtung analog Fig. 82a, bei der das Formbauteil als opaker Körper mit einer Materialaussparung ausgebildet ist;
- Fig. 83b: eine Querschnittansicht einer ausgelenkten Linse analog Fig. 82b mit einem Formbauteil analog Fig. 83a;
- Fig. 84a-c: Aufsichten auf eine Vorrichtung mit einer Linse und einem Steg und unterschiedlichen Ausformungen der inneren Teile der Stege, wobei die Ausformung in Fig. 84a rechteckig, in Fig. 84b dreieckig und in Fig. 84c trapezförmig ausgebildet ist;
- Fig. 85a: eine Aufsicht auf einen Teil einer Vorrichtung mit einer Linse und einem Steg, bei dem der innere Teil analog Fig. 84a ausgebildet ist;
- Fig. 85b: eine Aufsicht auf eine Vorrichtung analog Fig. 85a, bei der der innere Teil kleiner und beabstandet von der Linse ausgebildet ist;
- Fig. 85c: eine Aufsicht auf eine Vorrichtung analog Fig. 85a, bei der der innere Teil kleiner und benachbart zur Linse ausgebildet ist;
- Fig. 85d: eine Aufsicht auf eine Vorrichtung, bei der der Steg einen inneren Teil analog Fig. 85b und einen inneren Teil analog Fig. 85c umfasst;
- Fig. 85e: eine Aufsicht auf eine Vorrichtung, bei der der Steg einen inneren Teil umfasst, dessen mit dem Stege verbundenes Ende parallel entlang der Richtung von der tragenden Struktur hin zur Linse verläuft;
- Fig. 86a: eine Querschnittansicht der ungefügten Teilvorrichtungen einer Gesamtvorrichtung mit einer Linse und zwei Stegen an einer tragenden Struktur sowie einem Formbauteil mit daran angeordneten stationären Elektroden;
- Fig. 86b: eine Querschnittansicht der Teilvorrichtungen analog Fig. 86b, mit an der tragenden Struktur angeordnetem Klebstoff;
- Fig. 86c: eine Querschnittansicht einer aus den Teilvorrichtungen analog den Fig. 86a und 86b mittels Klebstoff gefügten Gesamtvorrichtung mit elektrostatischen Antrieben, die jeweils eine Auslegerelektrode umfassen;
- Fig. 87a-b: Querschnittansichten einer Vorrichtung mit einer Linse, die analog Fig. 86c über an den Stegen angeordnete Auslegerelektroden eines elektrostatischen Antriebes gegenüber einem als Glasplatte ausgeführten Formbauteil bewegt, wobei an dem Formbauteil in Fig. 87b unbewegte Linsen angeordnet sind;
- Fig. 88a-b: Querschnittansichten einer Vorrichtung mit einer Linse, die über elektrostatische Antriebe, die über Auslegerelektroden verfügen, gegenüber einem opaken Formbauteil mit Materialaussparungen bewegt wird, wobei die die Materialaussparung in Fig. 88b eine optische Wirkfläche umfasst;
- Fig. 89: eine Querschnittansichten einer Vorrichtung, bei der Teilvorrichtungen mit bewegten Linsen, unbewegten Linsen und optischen Wirkflächen über eine Klebschicht aneinander gefügt sind und elektrostatische Antriebe mit Auslegerelektroden ausgebildet sind;
- Fig. 90a: Querschnittansichten einer Vorrichtung mit zwei nebeneinanderliegenden Zellen analog Fig. 87, wobei die Zellen jeweils Nuten umfassen;
- Fig. 90b: eine Querschnittansicht eines Formbauteils mit zwei Abschnitten, wobei jeder Abschnitt ein Formbauteil mit einer optischen Wirkfläche umfasst;
- Fig. 90c: eine Querschnittansicht einer Vorrichtung, welche die Vorrichtung aus Fig. 90a mit einem daran mittels eines Klebers gefügten Formbauteils gemäß Fig. 90b umfasst;
- Fig. 91a: eine Querschnittansicht einer Vorrichtung, analog Fig. 61a, bei der die elektrostatischen Antriebe Auslegerelektroden umfassen;
- Fig. 91b: eine Querschnittansicht einer Vorrichtung analog Fig. 61b, bei der die elektrostatischen Antriebe Auslegerelektroden umfassen;
- Fig. 91c: eine Querschnittansicht eines Formbauteils analog Fig. 61c, das eben ausgebildet ist;
- Fig. 92a: eine Aufsicht auf eine Vorrichtung mit einer Linse und vier Stegen analog Fig. 7, an deren Stege und Teile der tragenden Struktur rechteckig gebildete Elektroden mit einem inneren Teil angeordnet sind;
- Fig. 92b: eine Aufsicht auf eine Vorrichtung analog Fig. 92a, bei der die tragende Struktur einen umlaufenden Rahmen aus mindestens einem Material der Stege umfasst;
- Fig. 93: eine Aufsicht auf eine Vorrichtung analog Fig. 7 an deren Stegen Elektroden ausgebildet sind, deren innerer Teil trapezförmig ausgebildet ist;
- Fig. 94: eine Aufsicht auf eine Vorrichtung analog Fig. 8 an deren Stegen Elektroden ausgebildet sind, deren innerer Teil trapezförmig ausgebildet ist;
- Fig. 95: eine Aufsicht auf eine Vorrichtung analog Fig. 10 an deren Stegen Elektroden ausgebildet sind, deren innerer Teil rechteckig ausgebildet ist;
- Fig. 96: eine Aufsicht auf eine Vorrichtung analog Fig. 9 an deren Stegen Elektroden ausgebildet sind, deren innerer Teil trapezförmig ausgebildet ist;
- Fig. 97: eine Aufsicht auf eine Vorrichtung analog Fig. 11 an deren Stegen Elektroden ausgebildet sind, deren innerer Teil trapezförmig ausgebildet ist;
- Fig. 98: eine Aufsicht auf eine Vorrichtung analog Fig. 12 an deren Stegen Elektroden ausgebildet sind, deren innerer Teil trapezförmig ausgebildet ist;
- Fig. 99: Querschnittansichten einer Vorrichtung, bei der ein Formbauteil mit optischer Wirkfläche über Nuten und Federn an die tragende Struktur gefügt ist und die elektrostatischen Antriebe eine Auslegerelektrode umfassen;
- Fig. 100: Querschnittansichten einer Vorrichtung, bei der eine Linse durch elektrostatische Antriebe, die eine Auslegerelektrode umfassen, gegenüber einem Glaswafer bewegt wird, auf welchen eine unbewegte Linse angeordnet ist und die Fügezone zwischen der tragenden Struktur der bewegten Linse und der die Gegenelektrode umfassende Struktur als Nut und Feder ausgeprägt ist;
- Fig. 101: Querschnittansichten einer Gesamtvorrichtung, die aus zwei Teilvorrichtungen besteht, die Teilvorrichtungen über eine Klebschicht aneinandergefügt sind und die optischen Achsen der bewegten, mitbewegten und unbewegten Linsen sowie der optischen Wirkfläche im Wesentlichen übereinstimmen und die elektrostatischen Antriebe eine Auslegerelektrode umfassen sowie die als Nut und Feder ausgeführten Fügezonen, an denen Klebstoff zur Verbindung der Teilvorrichtungen angeordnet ist;
- Fig. 102: Querschnittansichten einer Vorrichtung, bei der die tragende Struktur aus einem polymeren Werkstoff gebildet ist und die Linse gegenüber einem Glaswafer bewegt wird, der an einer Oberfläche eine unbewegte Linse umfasst;
- Fig. 103: Querschnittansichten einer Vorrichtung mit zwei Zellen, die je eine mittels elektrostatischem Antrieb gegenüber einem Glaswafer bewegbare Linse umfassen und die elektrostatischen Antriebe eine Auslegerelektrode umfassen;
- Fig. 104: Querschnittansichten einer Vorrichtung, bei der eine Linse mittels elektrostatischer Antriebe gegenüber einem Glaswafer und einem Bildwandler bewegt wird und die elektrostatischen Antriebe Auslegerelektroden umfassen;
- Fig. 105: eine Querschnittansicht einer Vorrichtung, die zwei nebeneinanderliegende Zellen umfasst, die je eine Linse gegenüber einem Glaswafer und einem Bildwandler mittels elektrostatischer Antriebe bewegen und die elektrostatischen Antriebe Auslegerelektroden umfassen.

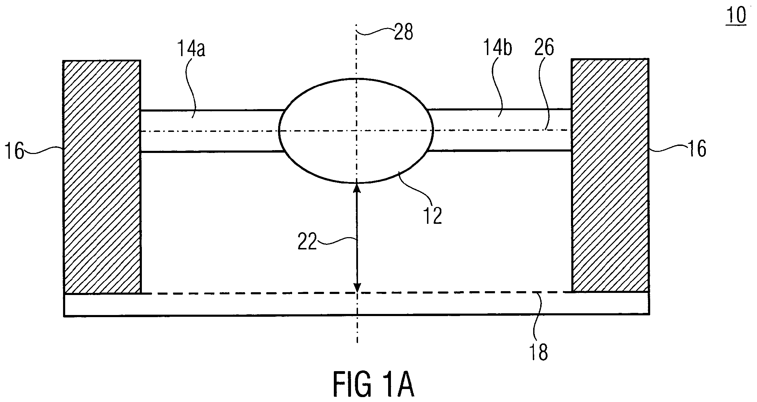

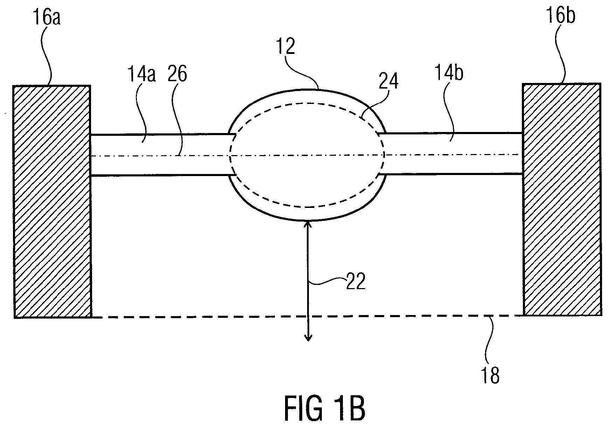

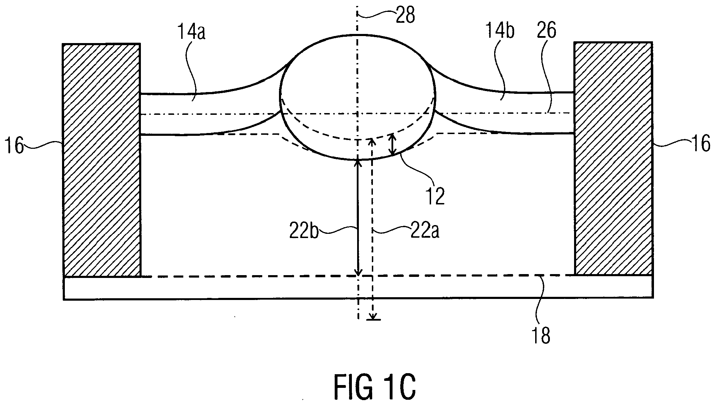

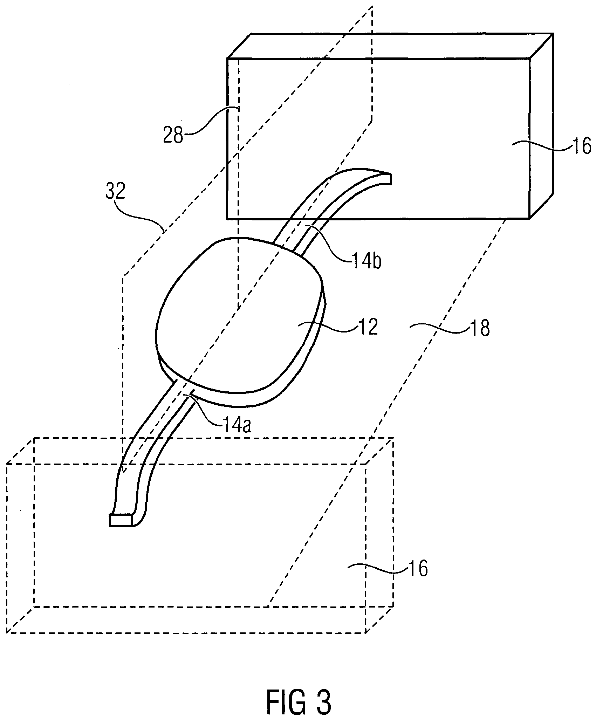

Fig. 1a zeigt eine Querschnittdarstellung einer Vorrichtung 10 gemäß einem Ausführungsbeispiel der Erläuterung. Die Vorrichtung umfasst eine Linse 12, die über zwei Stege 14a und 14b an einer tragenden Struktur 16, zum Beispiel einem Rahmen, befestigt ist und mit einem Abstand 22 zu einer Bezugsebene 18 angeordnet ist, die in Fig. 1 schematisch dargestellt ist. Die Linse 12 und die Stege 14a und 14b sind in einer gemeinsamen Positionsebene 26 angeordnet. Die Bezugsebene 18 kann zum Beispiel eine Bildebene darstellen, in welcher ein Bildsensor angeordnet ist, welche die Vorrichtung 10 umfasst. Der Abstand 22 ist entsprechend der Brennweite der Linse 12 gewählt. Die Stege 14 sind einlagig aus einem Material aufgebaut, welches einen größeren Temperaturausdehnungskoeffizienten umfasst, als die tragende Struktur 16. Im Falle einer Temperaturerhöhung dehnen sich die Stege folglich insbesondere entlang der Richtung von tragender Struktur 16 zur Linse 12 stärker aus als die tragende Struktur und können so eine Auslenkung der Linse aus der ursprünglichen Lage bewirken. Die Richtung der Bewegung wird dabei unabhängig von den Materialien, bspw. über eine Wölbung, wie sie in Fig. 3 erläutert ist, definiert.

Fig. 1b zeigt die in Fig. 1a gezeigte Linse 12 im Falle eines Anstiegs der Temperatur, z. B. der Umgebungstemperatur. Der Anstieg der Temperatur bewirkt eine Verformung der Linse 12, die eine veränderte Linsenkrümmung und zusätzlich eine Änderung des Brechungsindices damit eine veränderten Brennweite der Linse 12 bewirkt. In Fig. 1b ist durch die gestrichelte Linie 24 die ursprüngliche Form der Linse 12 angedeutet. Wie angedeutet ist, hat der Temperaturanstieg eine Verdickung der Linse und zusätzlich eine Verringerung des Brechungsindices bewirkt, was zum einen den Abstand 22 zwischen der Linse 12 und der Bezugsebene 18 reduziert und infolge der veränderten Oberflächenkrümmung und der gleichzeitigen Änderung des Brechungsindices zu einer veränderten Brennweite der Linse 12 führt. Dies bewirkt, dass der resultierende Fokus der Linse, der durch die gestrichelte Linie 22a angedeutet ist, außerhalb der Bezugsebene 18 liegt.

Eine durch einen Anstieg der Umgebungstemperatur bewirkte Veränderung der optischen Charakteristik der Linse 12, wie sie in der Beschreibungseinleitung der vorliegenden Anmeldung beschrieben wurde, wird dadurch kompensiert, dass die Stege so ausgestaltet sind, dass durch den Temperaturanstieg eine Bewegung der Stege 14a und 14b und damit der Linse 12 bewirkt wird, die der Veränderung der optischen Charakteristik entgegenwirkt. Bei dem in den Fig. 1a-b beschriebenen Ausführungsbeispiel bewirken die Stege 14a und 14b eine Bewegung der Linse 12 weg von der Bezugsebene 18, so dass die ursprüngliche Position des Fokus der Linse 12 unabhängig von der Temperaturänderung beibehalten wird. Die Stege 14a und 14b sind so ausgestaltet, dass eine Temperaturänderung, zum Beispiel ein Temperaturanstieg, zu einer Verformung der Stege 14a und 14b führt, die ihrerseits zu einer Bewegung beziehungsweise einer thermisch beeinflussten Position der Linse 12 führt. Die thermisch induzierte Längenänderung der Stege 14a und 14b führt zu einer Bewegung der Linse 12 in Richtung außerhalb der ursprünglichen Positionsebene 26 entlang der optischen Achse 28 der Linse 12. Eine geeignete Dimensionierung der Stege 14a und 14b führt dazu, dass die Linse 12 derart bewegt wird, dass die unpassend fokussierte Brennweite der Linse 12 wieder auf die Bezugsebene 18 fokussiert ist. Damit wird eine Athermisierung der Vorrichtung 10 erreicht.

Nachfolgend werden Ausführungsbeispiele für die Ausgestaltung der Stege 14a und 14b näher erläutert, die die Kompensation der optischen Charakteristik der Linse 12 ermöglichen. An dieser Stelle sei darauf hingewiesen, dass die obigen und nachfolgenden Ausführungen im Zusammenhang mit einem Temperaturanstieg stehen, der beschriebene Ansatz aber gleichermaßen für einen Temperaturabfall gilt.

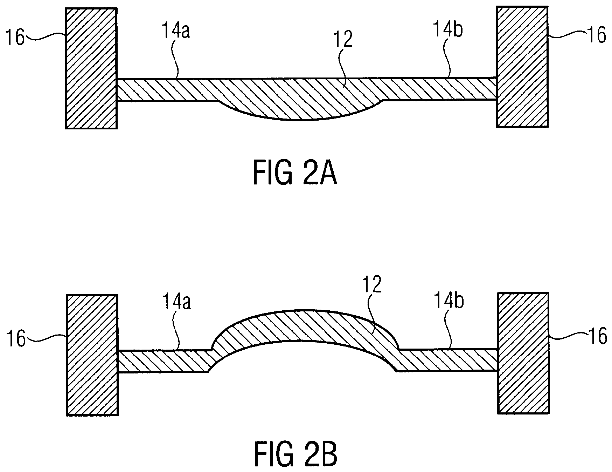

Fig. 2 zeigt ein erstes Ausführungsbeispiel zur Ausgestaltung der Stege 14a und 14b als einlagige bzw. einschichtige Struktur. Die Linse 12 ist über die Stege 14a und 14b an der tragenden Struktur 16 befestigt. Durch die einlagige Ausgestaltung der Stege 14a und 14b ist eine einstückige Ausführung der Stege 14a, 14b und der Linse 12 möglich. Fig. 2a zeigt eine plan-konvexe Linse 12 und Fig. 2b eine konkav-konvexe Linse 12. Die Linse kann jede denkbare Ausgestaltung aufweisen, wie konkav, konvex, bikonkav, bikonvex, konkav-konvex, konvex-konkav oder eine ebene Seite.

Fig. 3 zeigt die Vorrichtung aus Fig. 1 in einer perspektivischen Ansicht. Die einschichtigen Stege 14a und 14b weisen eine Wölbung entlang ihrer Geometrie in der Ebene 32 auf, die die optische Achse 28 der Linse 12 enthält. Steigt die Temperatur und werden die Linse 12 und die Stege 14a und 14b erwärmt, so definiert die Wölbung der Stege 14a und 14b in vorliegendem Ausführungsbeispiel eine Bewegung der Linse entlang der optischen Achse 28 weg von der Bezugsebene 18, wobei die Linse ihre Orientierung zur Bezugsebene 18 beibehält. Wären die Stege 14a und 14b gerade ausgeführt, so wäre die Bewegungsrichtung der Linse 12 im Falle einer Temperaturänderung undefiniert. Eine im Falle einer Temperaturerhöhung zur Bezugsebene 18 hin weisende Bewegungsrichtung der Linse 12 kann durch eine Änderung der Ausbildung der Wölbung der Stege 14a und 14b erzielt werden. Vorteilhaft an dieser Ausführungsform ist die Ausbildung von Linse 12 und den Stegen 14a und 14b aus einem Material, wobei die Ausbildung einstückig erfolgen kann. Eine einstückige Ausbildung kann zu einer starken Vereinfachung des Herstellungsprozesses der Linse 12 und der Stege 14a und 14b führen, da keine Fügung unterschiedlicher Komponenten erfolgen muss. Eine derartige Anordnung kann im Vielfachnutzen auf Wafer-Level gefertigt werden und ermöglicht eine nennenswerte Kostenreduktion.

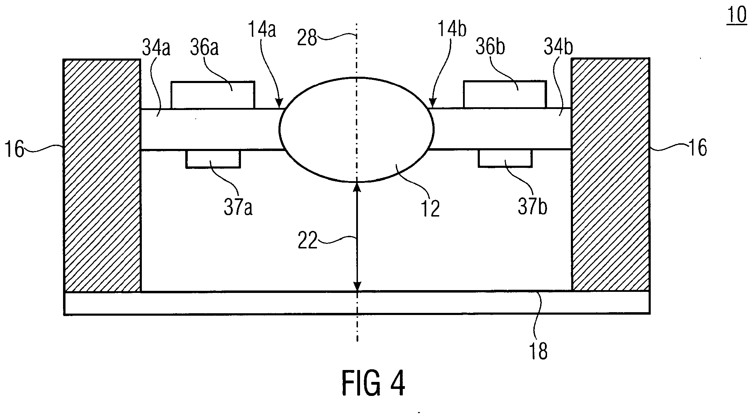

Fig. 4 zeigt ein Ausführungsbeispiel zur Ausgestaltung der Stege 14a und 14b als dreilagige bzw. zweischichtige Struktur. Der Steg 14a wird aus einer ersten Schicht 34a und einer zweiten Schicht 36a gebildet. Der Steg 14b wird aus einer ersten Schicht 34b und aus einer zweiten Schicht 36b gebildet. Die zweiten Materialschichten 36a und 36b sind dabei diskontinuierlich auf den ersten Materialschichten 34a und 34b und sowohl beabstandet von der Linse 12 als auch von der tragenden Struktur 16 gebildet. Sie können jedoch auch über die gesamten ersten Materialschichten 34a und 34b ausgebildet sein und an der Linse 12 oder der tragenden Struktur 16 angeordnet sein. Ein diskontinuierlicher Schichtaufbau erlaubt eine Abstimmung der mechanischen Eigenschaften der zweiten Materialschichten 36a und 36b, bezüglich der Auslenkung der Stege bei einer Temperaturänderung. Auch können die Temperaturausdehnungskoeffizienten der Materialien, aus denen die Stege 14 gebildet sind, unabhängig vom Temperaturausdehnungskoeffizienten der tragenden Struktur 16 ausgebildet sein, da Amplitude und Richtung der Bewegung durch die unterschiedlichen Temperaturausdehnungskoeffizienten der Materialschichten 34 und 36 definiert werden und sich die Materialschichten 34 und 36 bei einer Temperaturerhöhung unterschiedlich ausdehnen. An den Stegen können auch weitere Materialschichten 37a; 37b angeordnet sein, die die Funktionsweise der Stege 14 erweitern.

Die Fig. 5a-d zeigen eine Vorrichtung 20, bei der sowohl die Stege 14a und 14b als auch die Linse 12 zwei Materialschichten umfassen bzw. zwei Materialschichten sowohl die Stege als auch die Linse bilden. Fig. 5a zeigt eine Anordnung der zweiten Materialschichten 36a und 36b auf den ersten Materialschichten 34a und 34b analog zur Fig. 4, wobei die Materialschichten 34a, 34b und 34c eine erste Lage der Anordnung und die Materialschichten 36a und 36b eine zweite Lage der Anordnung bilden. Die Materialschichten 34a und 34b sind bis zum der Linse 12 abgewandten Ende der Stege 14a und 14b mit der zweiten Materialschicht 36a und 36b bedeckt. Die Linse 12 ist ebenfalls aus einer ersten Materialschicht 34c und einer diskontinuierlich daran angebrachten zweiten Materialschicht 36c gebildet, wobei sich die Materialschicht 36c in einen Bereich der Stege 14a und 14b erstreckt. Die Materialschicht 36c ist auf einer den Schichten 36a und 36b abgewandten Seite an den Materialschichten 34a, 34b und 34c angeordnet und stellt dadurch eine dritte Lage des Gesamtaufbaus dar. Durch die diskontinuierliche Anordnung der zusätzlichen Stegschichten 36a, 36b und dem zusätzlichen Linsenmaterial 36c sowie den dreilagigen Aufbau können optische Eigenschaften der Linse 12 entkoppelt von den mechanischen Eigenschaften der Stege 14a und 14b definiert werden.

In Fig. 5b weisen die Schichten 34a und 34b der Stege 14a und 14b eine unstetige Vergrößerung der Schichtdicke auf. An den so verstärkten Bereichen der Schichten 34a und 34b sind die zweiten Materialschichten 36a und 36b angeordnet und nehmen eine mechanische Funktion war. Im Gegensatz zu Fig. 5a ist die die dritte Lage des Aufbaus bildende Schicht 36c lediglich im Bereich der Linse 12 ausgebildet, womit die Verformung der Stege lediglich durch die Stegmaterialien 34a, 34b, 36a und 36b definiert wird.

In Fig. 5c sind die Materialschichten 36a, 36b und 36c einstückig geformt und an den Materialschichten 34a, 34b und 34c angeordnet und bilden so einen zweilagigen Gesamtaufbau. Die Schichten 34a, 34b, 36a und 36b weisen eine unstetige Veränderung der Schichtdicke auf, was beispielsweise mechanische Gründe haben kann.

Fig. 5d zeigt eine Vorrichtung gemäß Fig. 5c, bei der sich die Dicken der Schichten 34a, 34b, 36a und 36b über einen Bereich der Stege 14a und 14b stetig ändern und in einem anderen, der Linse 12 abgewandten Bereich, eine konstante Schichtdicke aufweisen.

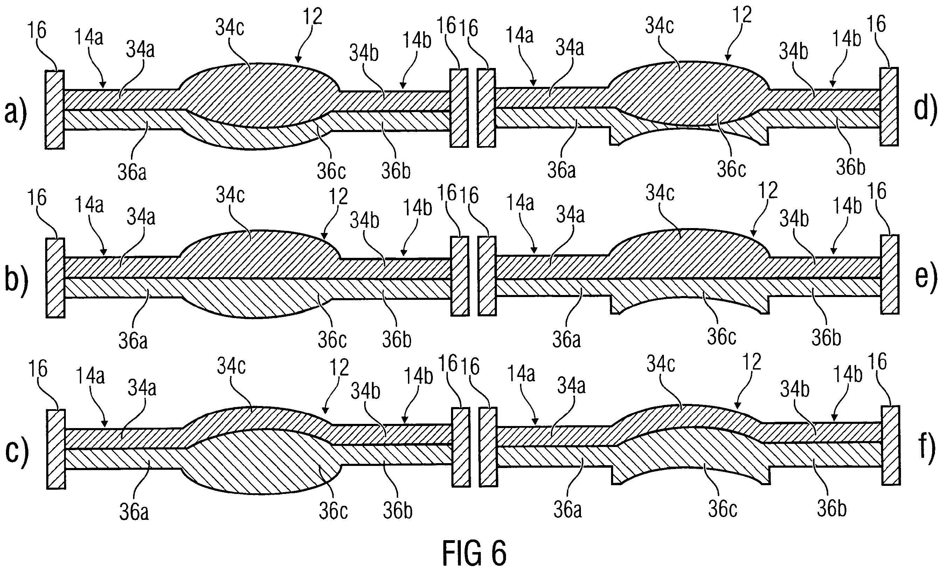

Fig. 6 stellt unterschiedliche Ausführungsbeispiele zweilagiger Stege 14a und 14b sowie zweilagiger Linsen 12 dar, wobei die Fig. 6a-c je eine sammelnde Linse 12 und die Fig. 6d-f eine zerstreuende Linse zeigen. Das Verhältnis der Dicke der ersten Schicht 34a-c zur zweiten Schicht 36a-c ist dabei beliebig. So kann eine der beiden Schichten 34a-c und 36a-c eine konstante Dicke, wie Schicht 34a-c in Fig. 6c, oder eine veränderliche Dicke, wie Schicht 36a-c in Fig. 6f, aufweisen. Auch können die Schichten 34a-c und 36a-c jeweils ein konstantes Verhältnis der Dicken zueinander aufweisen, wie in den Fig. 6b, wo das Verhältnis 1:1 liegt.

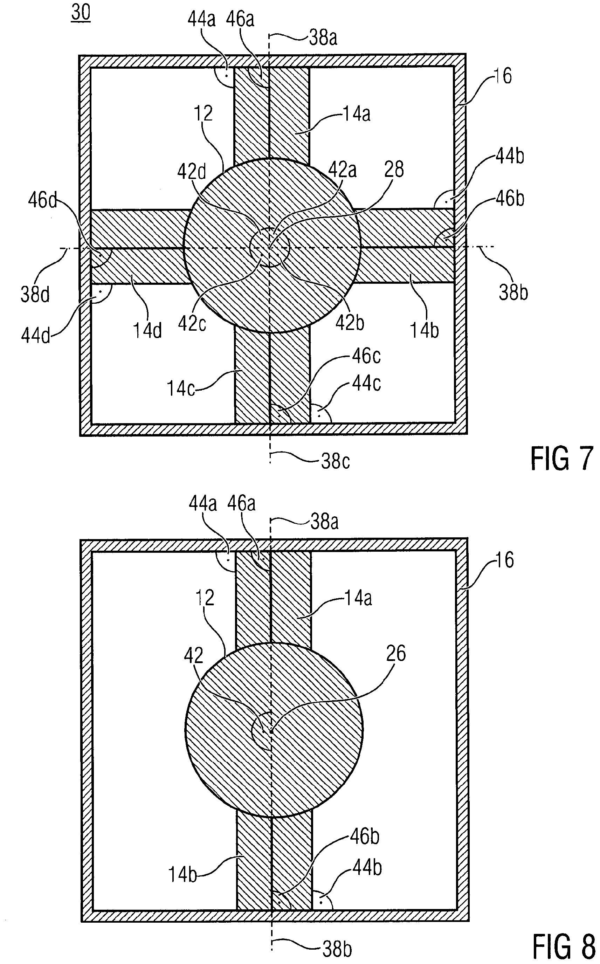

Fig. 7 zeigt eine Aufsicht auf eine Vorrichtung 30, mit einem Ausführungsbeispiel, bei der die Linse 12 über vier Stege 14a-d mit einer tragenden Struktur 16 verbunden ist. Die Stege 14a-d sind derart angeordnet, dass ihre Längsmittellinien 38a-d die optische Achse 28 der Linse 12 schneiden und dass sich die Stege 14a-d paarweise gegenüber liegen und die Winkel 42a-d einen rechten Winkel zwischen zwei benachbarten Längsmittellinien 38a-d bilden. In diesem Ausführungsbeispiel münden die Stege 14a-d in einem rechten Winkel in die mit einer ebenen Oberfläche ausgebildete tragende Struktur 16, sodass die Winkel 44a-d zwischen der Außenkante der Stege 14a-d und der tragenden Struktur 16 ebenso wie zwischen den Längsmittellinien 46a-d und der tragenden Struktur 16 jeweils ein rechter Winkel gebildet wird.

Fig. 8 zeigt eine Ausführungsform gemäß Fig. 7, bei der lediglich zwei Stege 14a und 14b einander gegenüberliegend angeordnet sind und die Linse 12 mit der tragenden Struktur 16 verbinden. In diesem Fall bilden die Längsmittellinien einen Winkel 42 von 180 Grad zueinander aus.

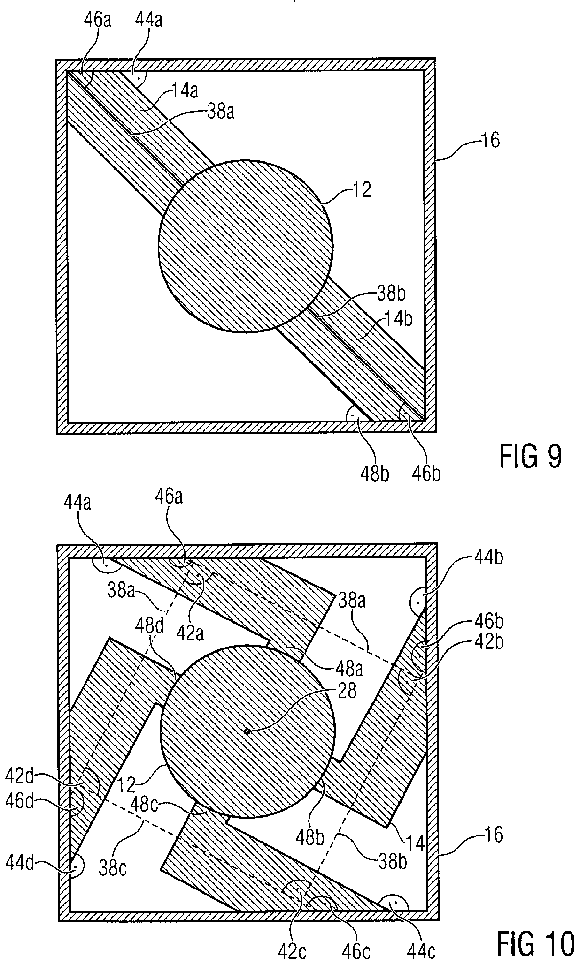

Fig. 9 zeigt eine Ausführungsform gemäß Fig. 8, bei der die Stege 14a und 14b diagonal zur tragenden Struktur 16 angeordnet sind und je in zwei Flächen der tragenden Struktur münden, womit die Winkel 46a, 46b, 48a und 48b einen von 90 Grad verschiedenen Winkel ausbilden.

Fig. 10 zeigt ein zu den Fig. 7 und 8 alternatives Ausführungsbeispiel, bei dem die Stege 14a-d derart angeordnet sind, dass sie schräg in die tragende Struktur 16 münden, sodass die Winkel 44a-d und 46a-d einen von 90 Grad verschiedenen Winkel bilden und ihre Längsmittellinien 38a-d an der optischen Achse 28 der Linse 12 vorbei laufen. Die Stege 14a-d weisen an ihrem, der Linse 12 zugewandten Ende, Ausformungen 48a-d auf, die die Stege 14a-d mit der Linse 12 verbinden.

Gegenüber den Fig. 7-9 erlaubt eine solche Ausführungsform eine größere Längsausdehnung der Stege 14. Die größere Längsausdehnung kann dazu genutzt werden, einen größeren erzielbaren Stellweg der Stege 14 zu erzielen, da die Amplitude der Auslenkung der an den Stegen 14 befestigten Linse 12 entlang der optischen Achse 28 von der Länge der Stege 14 abhängig ist.

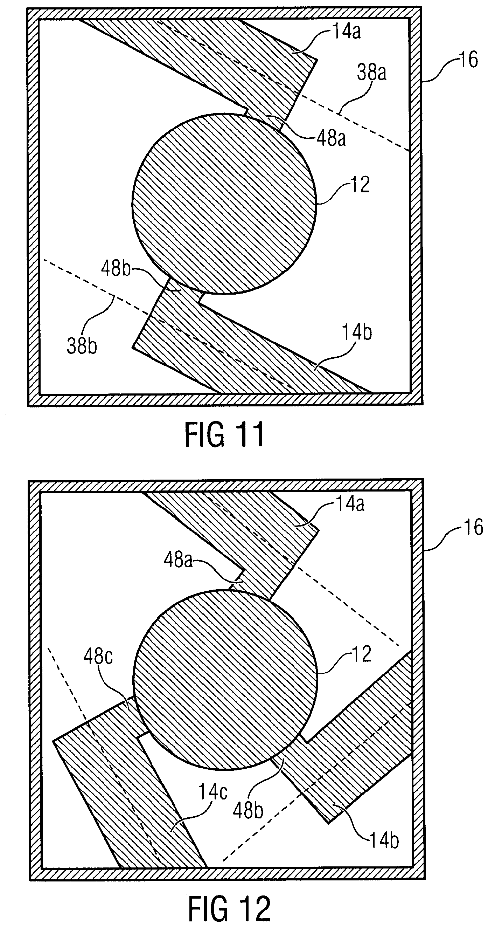

Fig. 11 zeigt eine zur Fig. 10 alternative Ausführungsform, bei der lediglich zwei versetzt parallel zueinander liegende Stege 14a und 14b die Linse 12 über Ausformungen 48a und 48b mit der tragenden Struktur verbinden.

Fig. 12 zeigt eine weitere Ausführungsform gemäß den Fig. 10 und 11, bei der drei symmetrisch um die Linse 12 angeordnete Stege 14a-c mit Ausformungen 48a-c die Linse 12 mit der tragenden Struktur verbinden.

Die Anzahl der Stege und deren Anordnung können für den Einsatz der Stege 14 prinzipiell beliebig sein. An dieser Stelle sei darauf hingewiesen, dass obwohl vorangegangene und nachfolgende Ausführungsbeispiele eine gerade Ausformung der Stege 14 entlang des Verlaufs von der tragenden Struktur 16 zur Linse 12 beschreiben, auch eine andere, zum Beispiel in lateraler Richtung, d. h. in einer Projektion entlang der Schichtdickenrichtung bzw. der optischen Achse, gekrümmte Ausformung möglich ist. In diesem Fall können die Winkel 44 und 46 von einander verschiedene Werte annehmen. Auch wird in allen Ausführungen stets eine rechteckige respektive quadratische Ausbildung des Grundrisses der tragenden Struktur 16 auf der Bezugsebene 18 dargestellt. Die Ausbildung der Geometrie der tragenden Struktur ist jedoch generell beliebig.

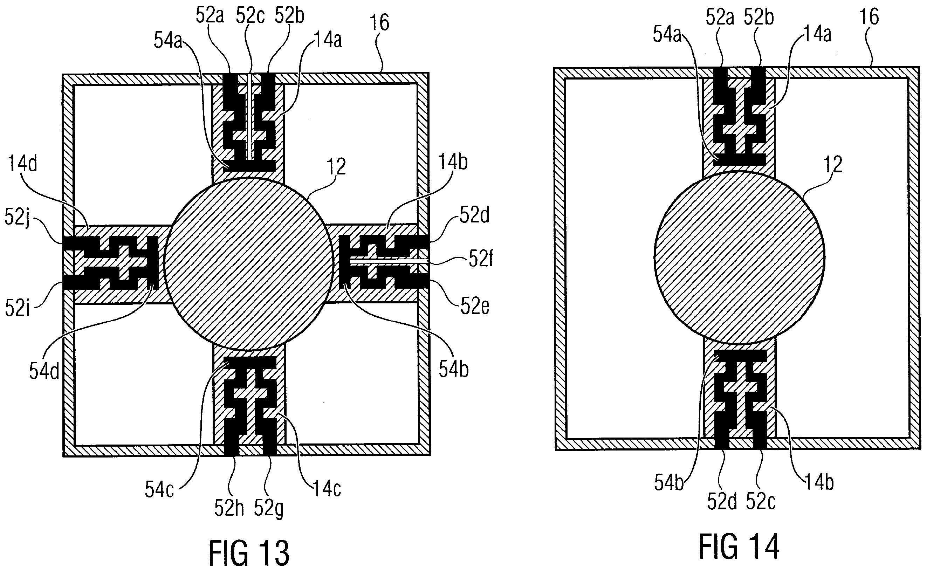

Fig. 13 zeigt die Vorrichtung aus Fig. 7, bei der an einer Seite der Stege 14a-d Heizelemente 52a-j angeordnet sind. Die Heizelemente 52a-j können beispielsweise elektrisch in Form von ohmschen Leiterbahnen ausgeführt sein und sind ausgebildet, um die Stege 14a-d lokal und unabhängig von der Umgebungstemperatur zu erwärmen und damit eine Auslenkung der Stege 14a-d und mithin eine Bewegung der Linse 12 zu bewirken. Die Form der Heizelemente kann wie die Heizelemente 52c und 52f gerade verlaufen oder wie beispielsweise das Heizelement 52a einen eckigen Verlauf aufweisen. Alternativ ist auch eine meanderartige Ausformung eines oder mehrerer Heizelemente 52a-j möglich. An jedem Steg 14a-d ist elektrisch leitender Sammelsteg 54a-d angeordnet, in dem die auf einem der Stege 14a-d angeordneten Heizelemente 52a-j münden. Die Kontaktierung der Heizelemente 52a-j erfolgt in diesem Ausführungsbeispiel am unbeweglichen Ende der Stege 14a-d und benachbart zur tragenden Struktur 16, sie kann jedoch prinzipiell an einer beliebigen Stelle der Elektroden erfolgen. Die Heizelemente 52a-j können sowohl unterschiedlich ausgeformt als auch mit unterschiedlichen elektrischen Potentialen und Strömen beaufschlagt werden, sodass je Heizelement 52a-j eine individuelle Heizleistung einstellbar ist.

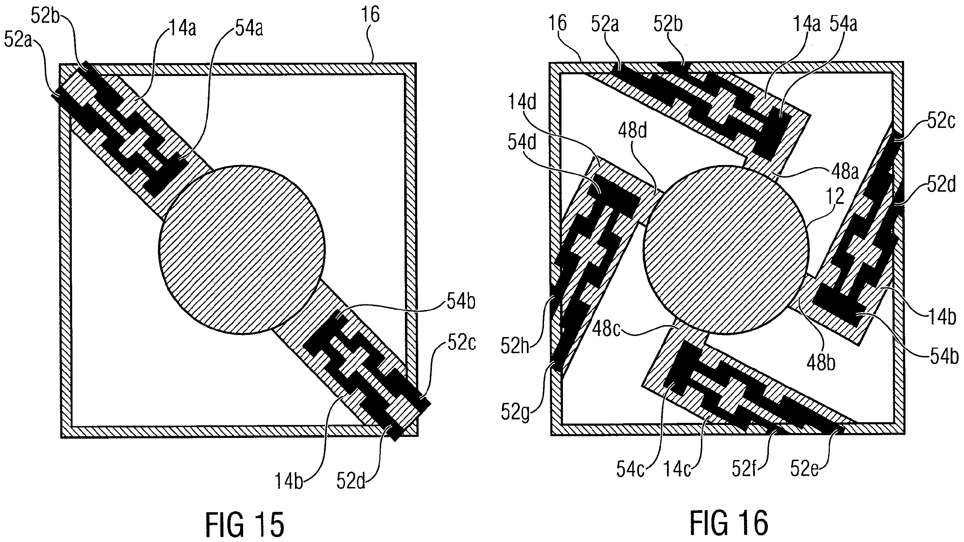

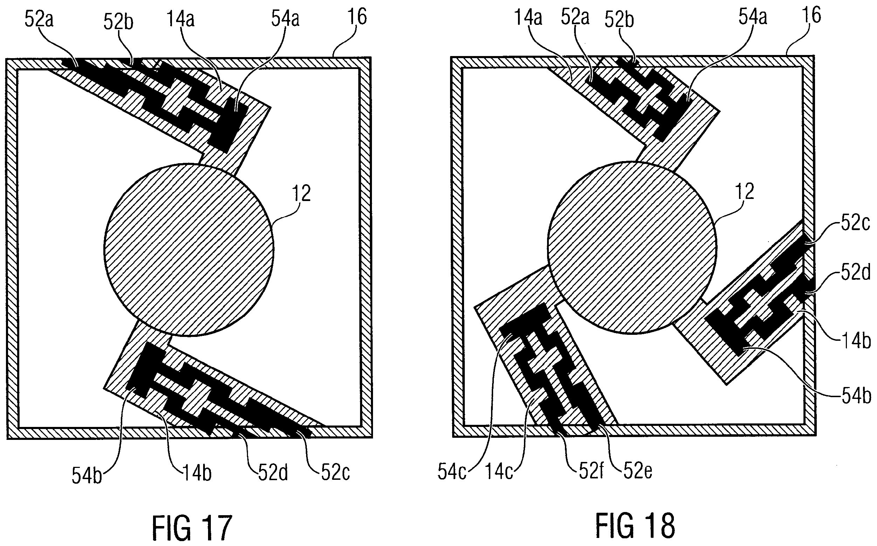

Die Fig. 14-18 zeigen Vorrichtungen analog zu den Fig. 7-12, bei denen an einer Seite der Stege 14 vorangegangen beschriebene Heizelemente 52 und Sammelstege 54 angeordnet sind. Die elektrischen Heizelemente 52 durch ein Druckverfahren oder Bedampfung mittels einer Schablone an die Stege 14 angebracht oder gesputtert werden.

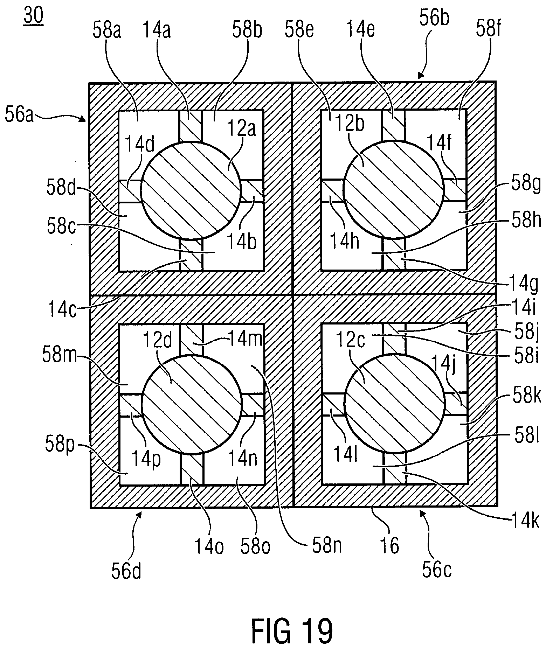

Fig. 19 zeigt eine Vorrichtung 30 mit vier Linsen 12a-d, die jeweils über Stege 14a-d, 14e-h, 14i-l und 14m-p mit der tragenden Struktur 16 verbunden sind. Jede der so von der tragenden Struktur 16 umschlossenen Zellen 56a-d stellt eine Vorrichtung analog Fig. 7 dar. In Bereichen, in denen Licht von Linsen 12a-d, Stegen 14a-p oder der tragenden Struktur 16 unbeeinflusst bleibt, ergeben sich Durchgangsbereiche 58a-p. Die tragende Struktur 16 ist aus einem lichtabsorbierenden Material gebildet und stellt für jede Zelle 56a-d eine Barriere für Licht, welches in einer benachbarten Zelle 56a-d von der dort befindlichen Linse verarbeitet wird, dar.

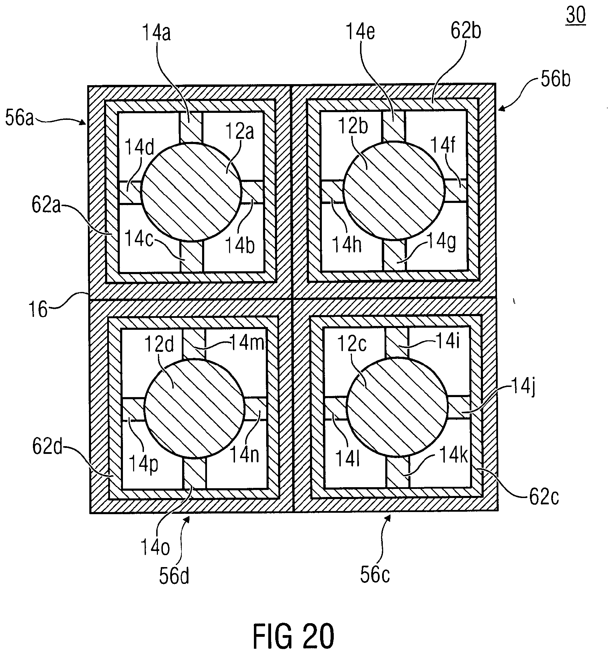

Fig. 20 zeigt Vorrichtung 30, bei der die in einer Zelle angeordneten Stege 14a-d, 14e-h, 14i-l und 14m-p je in einem Teil der tragenden Struktur 16 münden, der als umlaufender Rahmen 62a-d ausgeführt ist und aus mindestens einem Material, aus welchem die Stege 14a-p gebildet sind, besteht. Die Rahmen 62a-d schließen sich an das lichtabsorbierende Material der tragenden Struktur 16 an. Dieses Ausführungsbeispiel kann eine einfachere Kontaktierung der Stege 14a-p an die tragende Struktur ermöglichen, da zwischen den Stegen 14a-p und der tragenden Struktur 16 kein direkter Materialübergang ausgeführt ist, sondern der Materialübergang zwischen dem Rahmen 62 und dem lichtabsorbierendem Material ausgebildet ist, wobei der Rahmen 62a-d lückenlos an der restlichen tragenden Struktur 16 anliegt und die Zellen nebeneinander angeordnet sind.

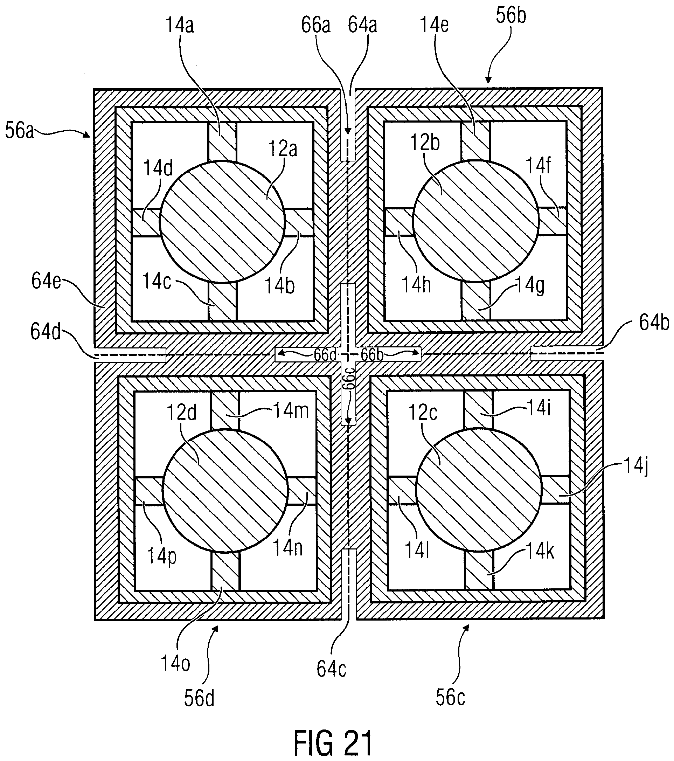

Fig. 21 zeigt eine Vorrichtung analog Fig. 20, bei der die tragende Struktur 16 Aussparungen 64a-e umfasst, sodass die Zellen 56a-d nur über als Stege 66a-d ausgebildete Bereiche der tragenden Struktur 16 mit einander verbunden sind. Dies ermöglicht Material- und somit Kosteneinsparungen während der Herstellung der Vorrichtung und kann auch zu besseren Eigenschaften bezüglich der Stabilität zwischen den Zellen führen, insbesondere können durch thermische Veränderungen induzierte Materialspannungen in der tragenden Struktur 16 reduziert werden. Weiterhin kann das gegebenenfalls in einem weiteren Bearbeitungsschritt erforderliche Trennen der Zellen 56a-d voneinander zeitsparend erfolgen, da nur wenig Material zu durchtrennen ist.

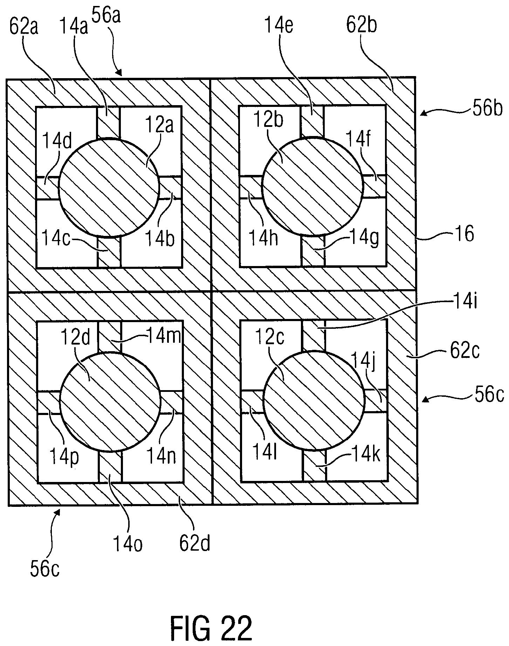

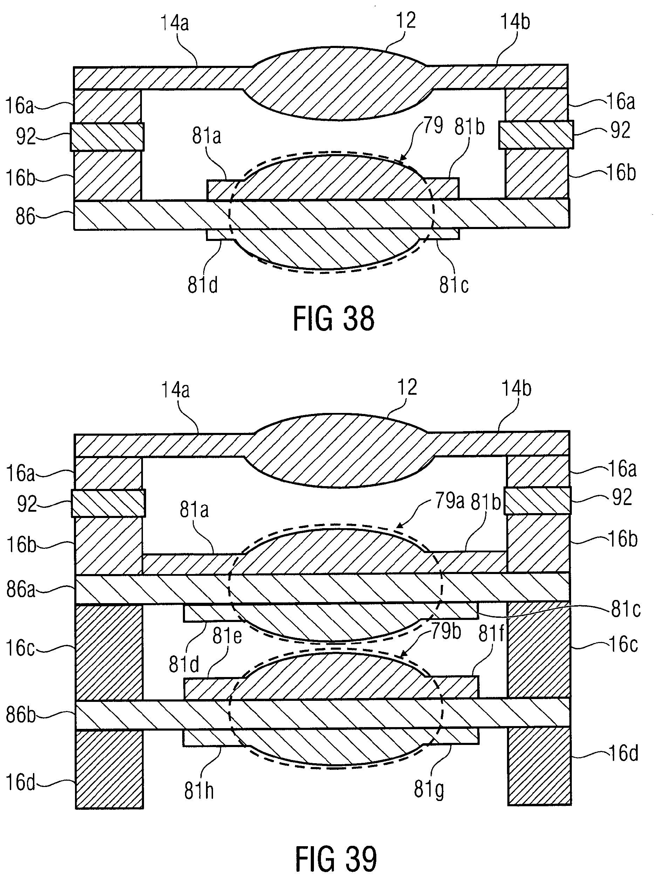

Fig. 22 zeigt eine Vorrichtung analog Fig. 19, bei der die tragende Struktur 16 vollständig aus den Rahmen 62a-d gebildet ist. Durch eine vollständige Ausbildung der tragenden Struktur 16 aus den Rahmen 62a-d kann möglicherweise eine einfachere oder kostengünstigere Herstellung der Vorrichtung während der Fertigung oder größere Freiheitsgrade bei der Bildung einer optischen Gesamtstruktur resultieren. So können beispielsweise entlang der optischen Achse der Linse weitere Abschnitte der tragenden Struktur 16 angeordnet sein, wie es nachfolgend unter anderem in den Fig. 38 und 39 dargestellt ist. Die Stege 14 können wie in allen vorangegangenen und nachfolgenden Ausführungsbeispielen einlagig, also monomorph, oder zweilagig, also bimorph, ausgeführt sein.

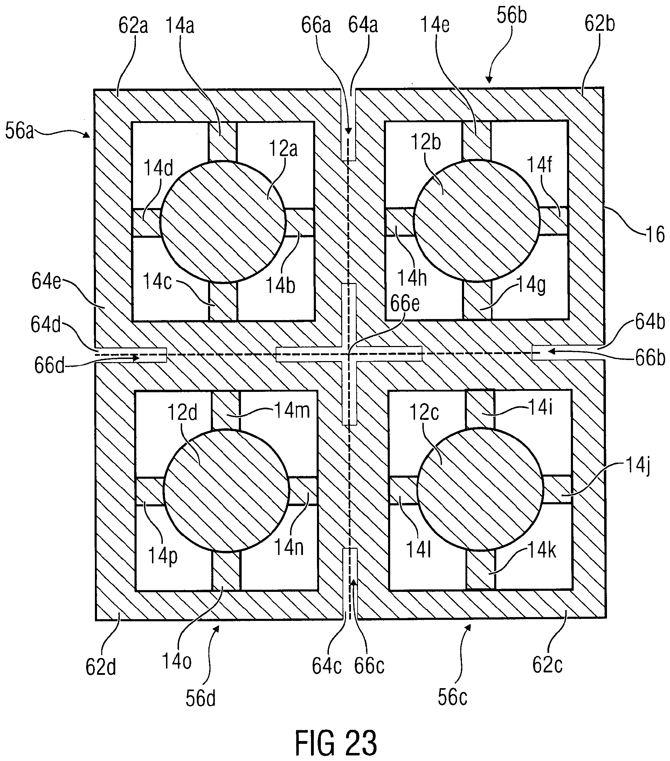

Fig. 23 zeigt eine Vorrichtung analog Fig. 21, bei der die tragende Struktur 16 vollständig aus den Rahmen 62a-d gebildet ist und bei der Aussparungen 64a-e ausgebildet sind, sodass die Zellen 56a-d nur über als Stege 66a-d ausgebildete Bereiche der tragenden Struktur 16 bzw. des Rahmens 62a-d mit einander verbunden sind.

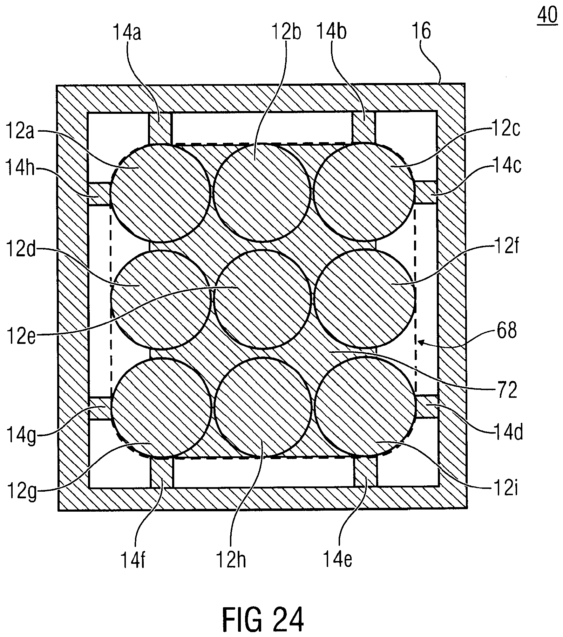

Fig. 24 zeigt eine schematische Aufsicht einer Vorrichtung 40 bei der ein Linsenarray 68 über acht Stege 14a-h mit der tragenden Struktur 16 verbunden ist und das Linsenarray eine Trägerebene 72 und neun Linsen 12a-i umfasst, die in drei Zeilen und drei Spalten auf der Trägerebene 72 angeordnet sind. Die optische Struktur der Vorrichtung ist in vorliegendem Ausführungsbeispiel als eine Kombination mehrerer optischer Elemente ausgeführt, welche als identische Linsen 12a-i ausgebildet sind. Prinzipiell ist es jedoch möglich, dass alternativ zu Linsen Asphären, Freiformflächen, diffraktive Strukturen, Spiegel, Prismen oder, wie dargestellt, Linsenarrays, welche aus mehreren gleichen oder unterschiedlichen, auch beliebig kombinierbaren, gerade aufgelisteten optischen Elementen mit beliebiger Anzahl von Zeilen und Spalten bestehen. Werden mehrere Linsen 12 in einem Array 68 angeordnet, so können alle darauf befindlichen Linsen 12 gemeinsam über die Stege 14 bewegt und damit Abweichungen innerhalb der Bewegungen einzelner Linsen 12 reduziert werden.

In Anordnungen, die mehrere optische Strukturen 12 umfassen, wie sie beispielsweise in den Fig. 19 bis 23 gezeigt werden, können anstelle der oben beschriebenen Linsen auch Linsenarrays 68, analog Fig. 24 angeordnet sein. Ausführungsbeispiele umfassen Linsenarrays 68, eine tragende Struktur 16, einen umlaufenden Rahmen 62 aus mindestens einem Linsenmaterial, der Stege 66 zwischen einzelnen Zellen 56 umfasst, die eine einfache Trennung der Zellen am Ende eines Herstellungsprozesses ermöglichen.

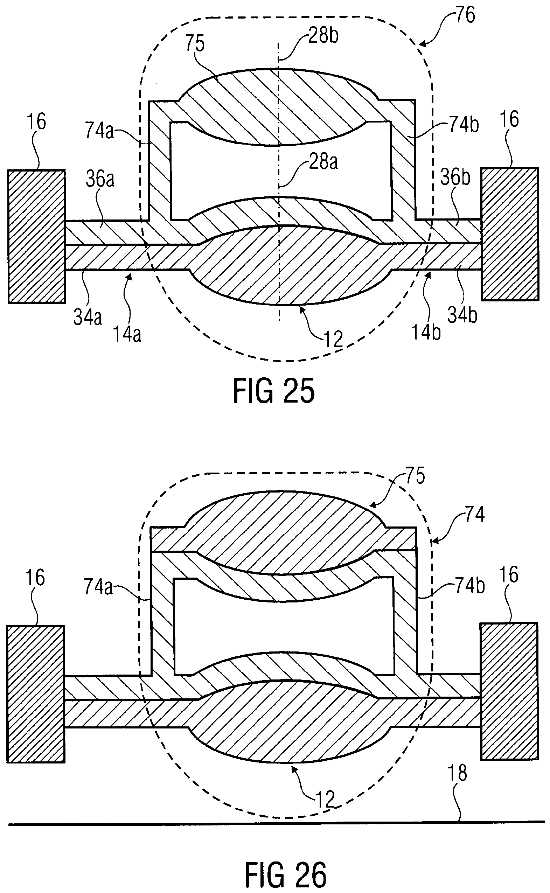

Fig. 25 zeigt eine Querschnittansicht einer Vorrichtung analog zu Fig. 6 bei der an den Stegen 14a und 14b hierzu senkrecht verlaufende Strukturen 74a und 74b angeordnet sind, die eine mitbewegte Linse 75 gegenüber der Linse 12 derart positionieren, dass die mitbewegte Linse 75 bei einer Verformung der Stege 14a und 14b mitbewegt wird und die optischen Achsen 28a und 28b der Linsen 12 und 75 im Wesentlichen übereinstimmen. Die Linsen 12 und 75 bilden mit den Strukturen 74a und 74b einen Linsenstapel 76. Die Strukturen 74a und 74b sind in diesem Ausführungsbeispiel einstückig und aus dem gleichen Material gebildet wie die mitbewegte Linse 75 und die zweite Materialschicht 36a und 36b der Stege 14a und 14b. Durch die Anordnung der mitbewegten Linse 75 an die Stege 14a und 14b kann bei einer Temperaturänderung die thermisch induzierte Änderung der Brennweite der Linsen 12 und 75 auch gegenüber der jeweils anderen Linse kompensiert werden und gleichzeitig eine zusätzliche Anordnung von Stegen 14 an die tragende Struktur 16 entfallen.

Bei den Strukturen 74a und 74b kann es sich, wie in Fig. 25 gezeigt, um Stege handeln. Alternativ oder zusätzlich können sie Strukturen 74a und 74b auch in Form einer umlaufenden und/oder Kontur ausgebildet sein, die in einem Abstand zur beweglichen Linse 12 oder direkt benachbart zur Linse 12 an den Stegen 14a und 14b angeordnet ist. Eine umlaufende Kontur ermöglicht eine exaktere Positionierung einer mitbewegten Linse 75 gegenüber einer bewegten Linse 12.

Fig. 26 zeigt eine Vorrichtung gemäß Fig. 25, bei der die mitbewegte Linse 75 zweischichtig ausgeführt ist und gegenüber der Bezugsebene 18 weiter entfernt angeordnet ist als die Linse 12.

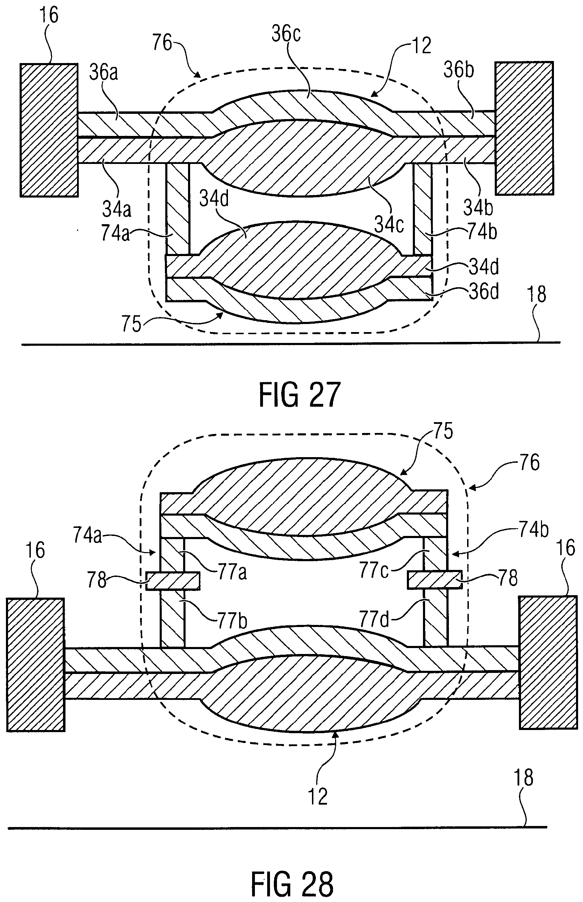

Fig. 27 zeigt eine Vorrichtung gemäß Fig. 26, bei der die mitbewegte Linse 75 gegenüber der Bezugsebene 18 näher angeordnet ist als die Linse 12. Die weiteren Strukturen 74a und 74b sind aus einem beliebigen Material, u.a. dem der zweiten Schicht 36 gebildet und zwischen der ersten Materialschicht 34a respektive 34b der Stege 14a respektive 14b und der ersten Materialschicht 34d der weiteren Linse 75 angeordnet, womit die weiteren Strukturen 74a und 74b mit den Linsen 12 und 75 mehrstückig gebildet sind.

Fig. 28 zeigt eine Vorrichtung gemäß den Fig. 25-27, bei der die weiteren Strukturen 74a und 74b eine Klebschicht 78 umfassen, die die Abschnitte 77a und 77b respektive 77c und 77d fügt. Die Fügung der Strukturen 74a und 74b über eine Klebschicht 78 erlaubt die Herstellung der Vorrichtung in mehreren, voneinander getrennten Herstellungsschritten.

Prinzipiell können sowohl die Linse 12 als auch die mitbewegte Linse 75 beliebig viele Materialschichten umfassen. Auch die Linsenstapel 76 können aus beliebig vielen Linsen bestehen, die mit einander über weitere Strukturen 74 verbunden sind. Die weiteren Strukturen 74 können an einer beliebigen Schicht der Stege 14 angeordnet sein.

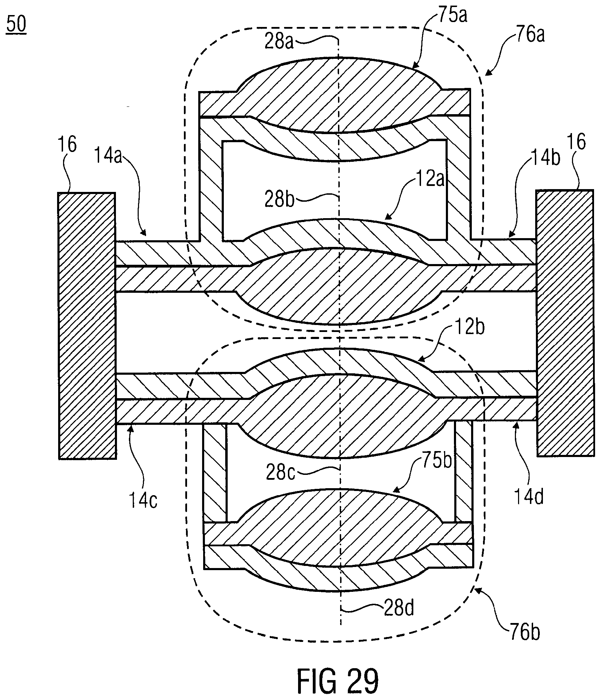

Fig. 29 zeigt eine Vorrichtung 50, bei der zwei voneinander verschiedene Linsenstapel 76a und 76b über die Stege 14a-d mit der tragenden Struktur 16 verbunden sind und die optischen Achsen 28a-d der Linsen 12a, 12b, 75a und 75b im Wesentlichen übereinstimmen. Die Richtung und der Stellweg der Bewegung eines Linsenstapels 76a oder 76b bei einer Temperaturänderung ist abhängig von der Ausprägung der Stege 14a und 14b respektive 14c und 14d und unabhängig von der Bewegung des jeweils anderen Stapels 76a oder 76b.

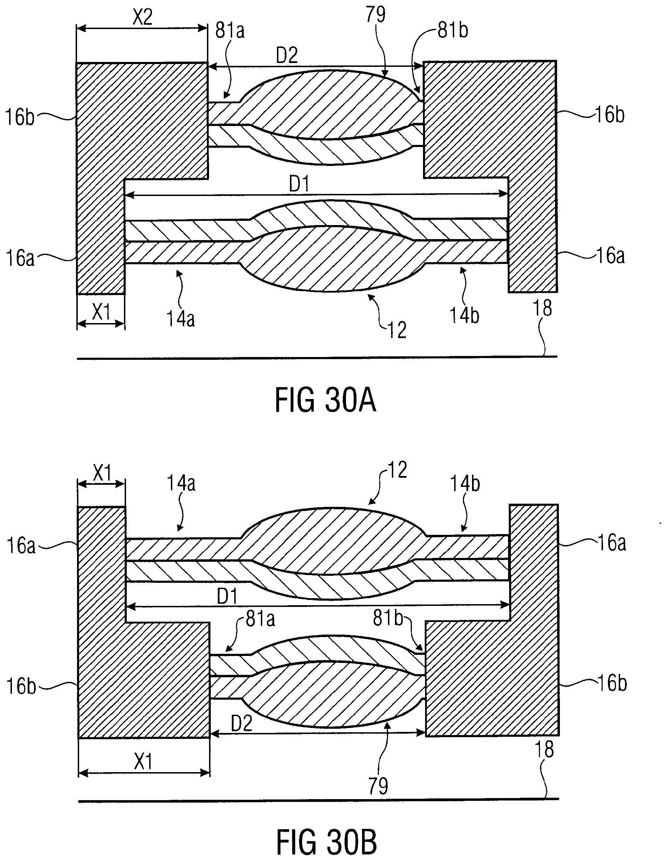

Die Fig. 30a zeigt eine Vorrichtung aus Fig. 6c, bei der an der tragenden Struktur 16 eine unbewegte Linse 79 angeordnet ist. Die tragende Struktur 16 umfasst einen ersten Abschnitt 16a, an welchem die Linse 12 über die Stege 14a und 14b angeordnet ist, und einen sich zu dem ersten weiteren Abschnitt 16a nach oben entrichteten Abschnitt 16b. Ein Durchmesser X1 des ersten Abschnittes 16a ist kleiner als ein Durchmesser X2 des zweiten Abschnitts 16b, so dass ein durch den ersten Abschnitt 16a definierter Zwischenraum Dl, in dem die Linse 12 und die Stege 14a und 14b angeordnet sind, größer ist als der durch den zweiten Abschnitt 16b definierte Zwischenraum D2, in dem die unbewegte Linse 79 und die daran angeordneten als Stege ausgeführten Schichten 81a und 81b angeordnet sind. Auch die unbewegte Linse 79 ist über mehrschichtige Stege 81a und 81b an der tragenden Struktur 16 befestigt und hat im Wesentlichen die gleiche Form wie die Linse 12. Aufgrund des kleinen Zwischenraumes sind die Schichten 81a und 81b der unbewegte Linse 79 kleiner als die Stege 14a und 14b der Linse 12, sodass die Stege der unbewegten Linse 79 bei einer Veränderung der Temperatur keine oder eine geringere Bewegung der unbewegten Linse 79 bezüglich der Bezugsebene 18 erwirken. Alternativ kann die unbewegte Linse 79 ohne die Schichten 81a und 81b direkt an der tragenden Struktur 16 befestigt sein. Auch kann die Linse eine andere Form als die Linse 12 aufweisen. Die Durchmesser X1 und X2 sowie die Zwischenräume D1 und D2 können prinzipiell jede Form aufweisen also neben rund beispielsweise auch oval oder rechteckig. Die unbewegte Linse 79 ist mit größerem Abstand zur Bezugsebene 18 angeordnet als die bewegliche Linse 12.

Fig. 30b zeigt eine der Fig. 30a ähnliche Vorrichtung, bei der die unbewegte Linse 79 unter der Linse 12 und mit einem geringeren Abstand als die Linse 12 zur Bezugsebene 18 angeordnet ist.

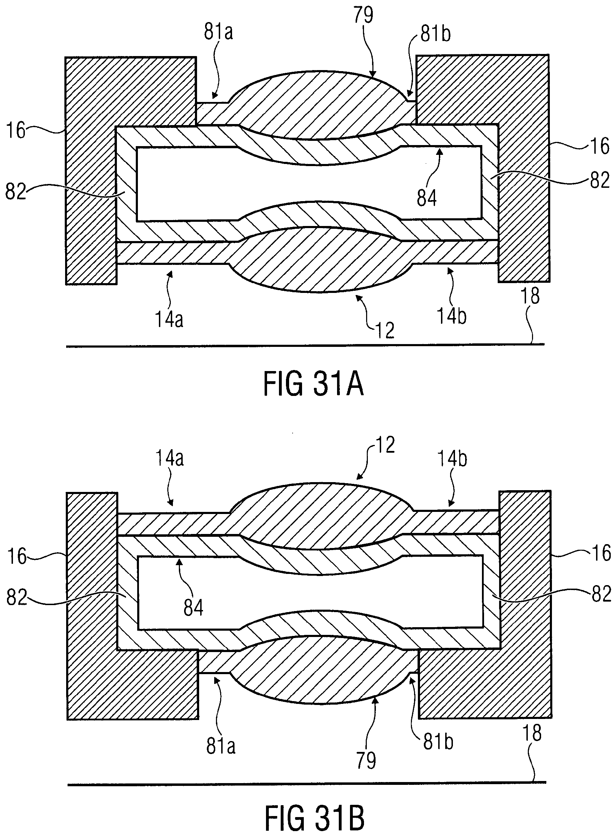

Die Fig. 31a und 31b zeigen eine Vorrichtung analog zu den Fig. 30a und 30b, bei der zwischen der Linse 12 und der unbewegten Linse 79 ein Segment 82 aus einem Linsenmaterial derart an der tragenden Struktur 16 angeordnet ist, dass ein umlaufender Rahmen entsteht. Das Segment 82 ist aus einem Material gebildet, aus dem auch eine der Schichten der Linsen ausgebildet ist.

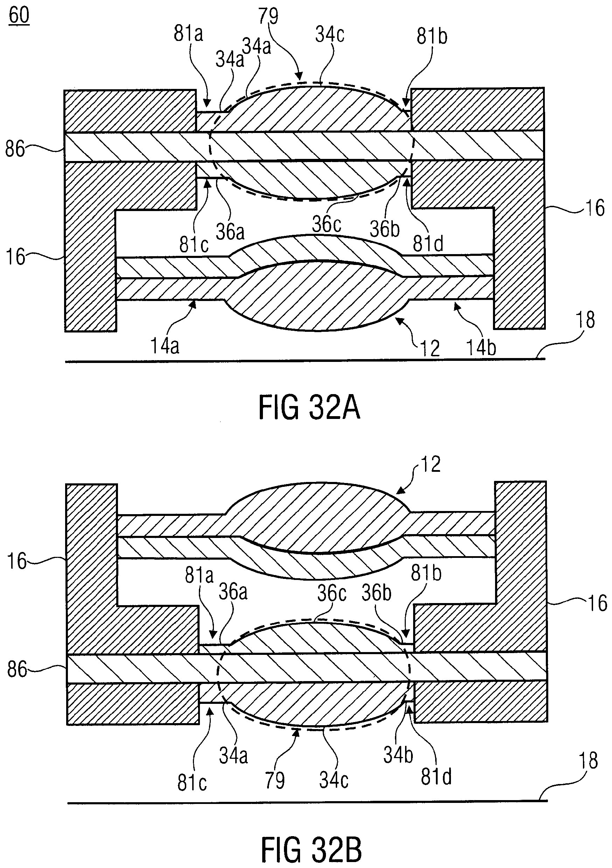

Fig. 32 zeigt eine Vorrichtung 60 analog der Vorrichtung der Fig. 30 und 31. Die unbeweglich an der tragenden Struktur 16 angeordnete unbewegte Linse 79 ist zweischichtig aufgebaut und umfasst neben den beiden Materialschichten 34 und 36 einen Glaswafer 86, der zwischen den Materialschichten 34 und 36 angeordnet ist und in die tragende Struktur 16 hineinragt. Mit dem Glaswafer 86 kann die unbewegte Linse 79 sowohl um weitere optische Eigenschaften, beispielsweise in Form eines in den Glaswafer 86 eingebrachten diffraktiven Gitters, oder um weitere mechanische Eigenschaften, beispielsweise mit zusätzlichen Versteifungen, erweitert werden.

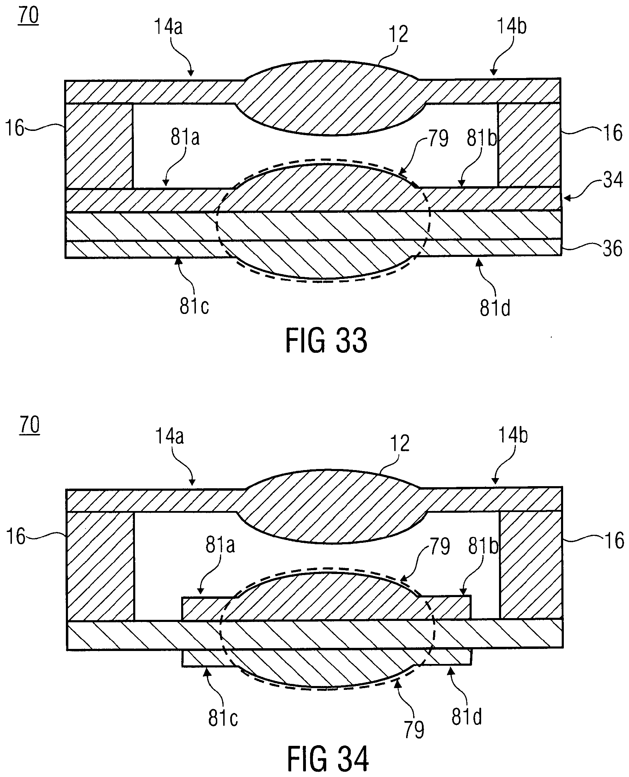

Fig. 33 zeigt eine Seitenansicht einer Vorrichtung 70 mit einer beweglichen Linse 12 mit den Stegen 14a und 14b. Die unbewegte Linse 79 ist zweischichtig aufgebaut und umfasst einen Glaswafer 86, der die Linse 79 trotz der an ihr angeordneten durchgehenden Schichten 81a-d unbeweglich ausgestaltet und zwischen den beiden Materialschichten 34 und 36 der unbewegten Linse 79 angeordnet ist. Die tragende Struktur 16 ist einstückig mit den Schichten 81a und 81b ausgebildet.

Fig. 34 zeigt Vorrichtung 70, bei der die an der unbewegten Linse 79 angeordneten Schichten 81a-d nur teilweise auf dem Glaswafer 86 sowie beabstandet von der tragenden Struktur 16 angeordnet sind. Die Anordnung der unbewegten Linse 79 an die tragende Struktur ist über den Glaswafer 86 ausgebildet.

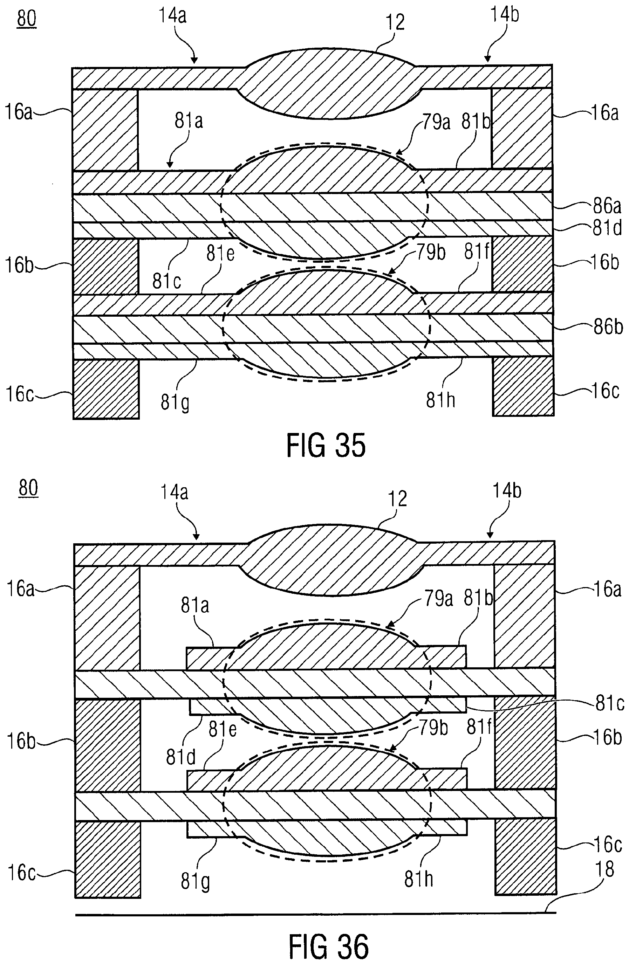

Fig. 35 zeigt eine Vorrichtung 80 analog Vorrichtung 70 aus Fig. 33, bei der weitere Abschnitte der tragenden Struktur 16b und 16c an der Vorrichtung 70 angeordnet sind, welche einen Glaswafer 86b und eine unbewegte Linse 79b mit Schichten 81e-h umfassen. Die Elemente der tragenden Struktur 16b und 16c sind aus einem anderen Material ausgebildet als die tragende Struktur 16a. Durch eine Aneinanderfügung unterschiedlicher tragender Strukturen 16a-c und die Kombination der Linse 12 und unbewegten Linsen 79a und 79b können beliebig ausgestaltete optische Systeme ausgebildet werden. Eine beliebige Reihenfolge und Anzahl von beweglichen, mitbewegten und unbeweglich angeordneten Linsen 12, 75 und 79 ist realisierbar.

Fig. 36 zeigt Vorrichtung 80, bei der die an den unbeweglichen Linsen 79a und 79b angeordneten Schichten 81a-h nur teilweise an den Glaswafern 86a und 86b angeordnet sind.

Denkbar ist auch, dass an den Glaswafern 86a und 86b lediglich die Linsen 79a und 79b in Abwesenheit von Schichten 81 angeordnet sind.

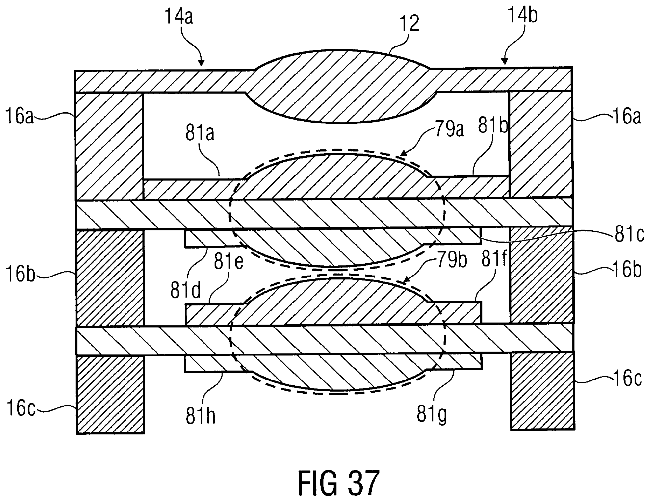

Fig. 37 zeigt eine Vorrichtung analog Fig. 36, bei der die bewegliche Linse 12 und die daran angeordneten Stege 14a und 14b einstückig aus einem Material gefertigt sind und in der restlichen Vorrichtung ausschließlich andere Materialien ausgebildet sind.

Fig. 38 zeigt eine Vorrichtung 70, bei der einzelne Teile 16a und 16b der tragenden Struktur 16 mit einer Klebschicht 92 mit einander gefügt sind.

Fig. 39 zeigt eine Vorrichtung analog Fig. 37, bei der einzelne Teile 16a und 16b der tragenden Struktur 16 mit der Klebschicht 92 mit einander gefügt sind.

Das Aneinanderfügen von Teilen einer tragenden Struktur 16 mittels der Klebschicht 92 kann einen Aufbau von Strukturen und Vorrichtungen ermöglichen, deren Komponenten in verschiedenen Teilprozessen ausgebildet werden. Auch können beliebige Materialübergänge innerhalb der tragenden Struktur 16 ausgebildet werden, wenn unterschiedliche gefügte Teile unterschiedliche Materialen oder Schichtfolgen umfassen.

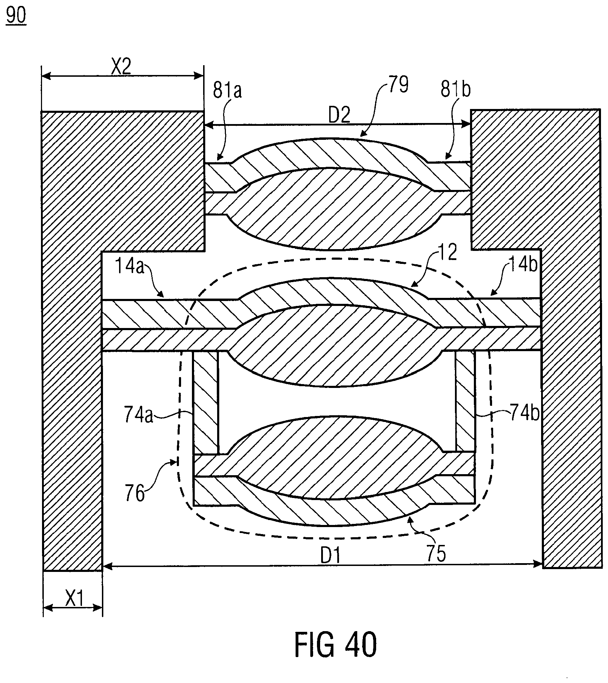

Fig. 40 zeigt eine Vorrichtung 90 analog Fig. 30, bei der anstelle einer Linse ein Linsenstapel 76 an der tragenden Struktur 16 angeordnet ist.

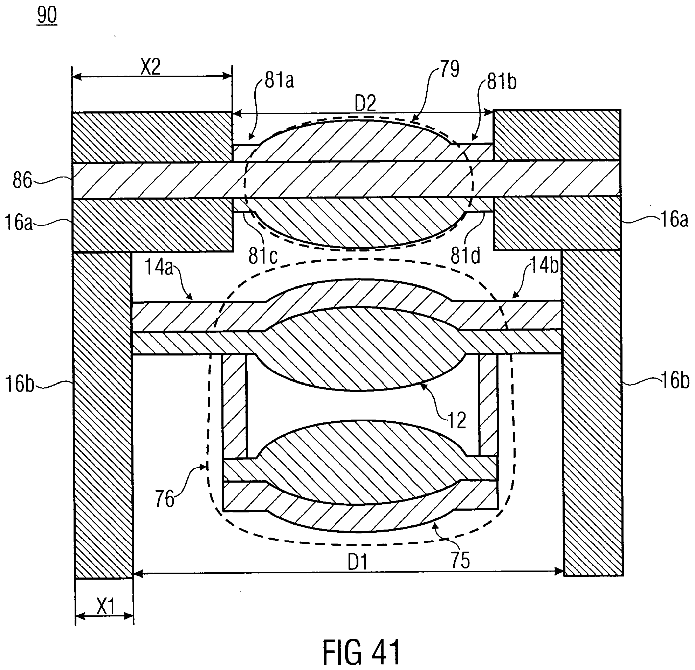

Fig. 41 zeigt Vorrichtung 90, bei der die unbeweglich angeordnete Linse 79 einen Glaswafer 86 umfasst, welcher in die tragende Struktur 16 hineinragt.

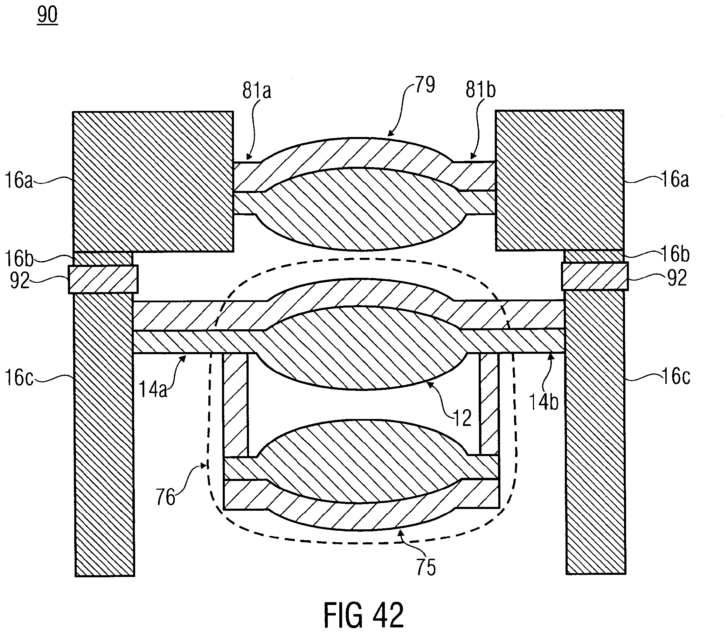

Fig. 42 zeigt Vorrichtung 90 analog zu Fig. 40, bei der die Teile 16b und 16c der tragenden Struktur 16 mit einander über die Klebschicht 92 gefügt sind.

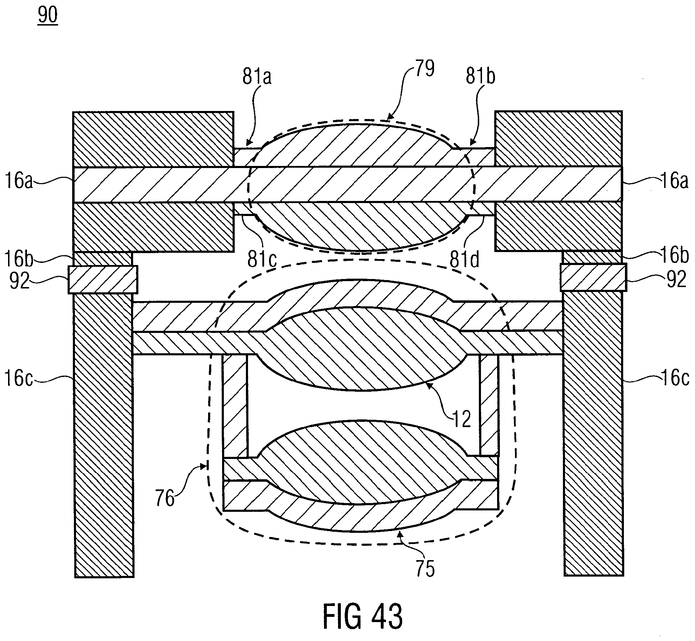

Fig. 43 zeigt Vorrichtung 90 analog Fig. 42, bei der die unbewegliche Linse 79 analog Fig. 41 einen Glaswafer umfasst, welcher in die tragende Struktur 16 hineinragt und bei der die Teile 16b und 16c der tragenden Struktur 16 mit einander über die Klebschicht 92 gefügt sind.

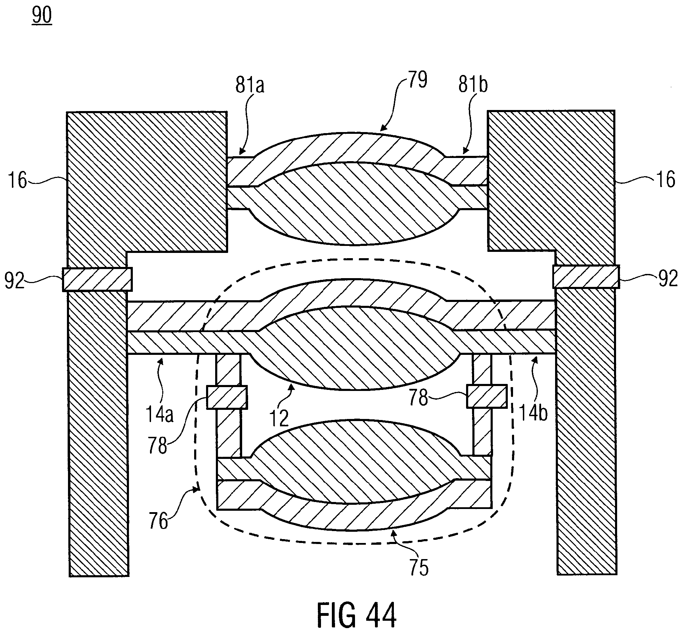

Fig. 44 zeigt Vorrichtung 90 analog Fig. 42, bei der die Strukturen 74a und 74b die Klebschicht 78 umfassen.

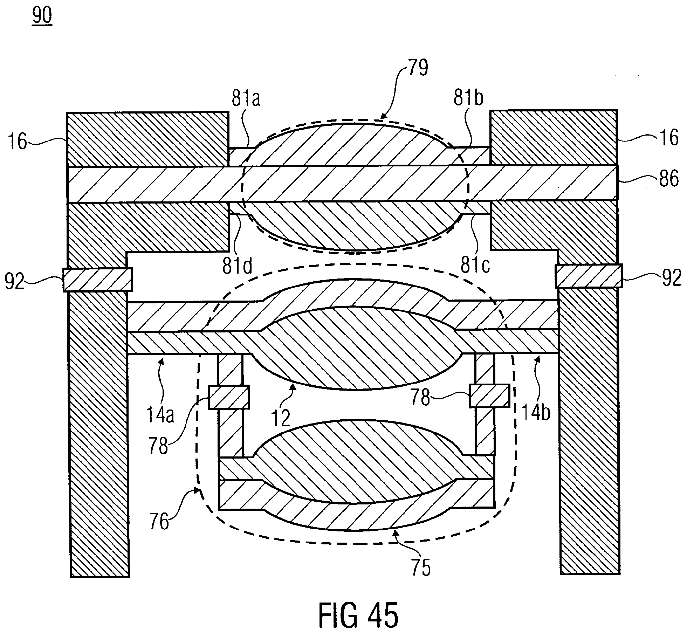

Fig. 45 zeigt Vorrichtung 90 analog Fig. 44, bei der die unbewegliche Linse 79 analog Fig. 43 einen Glaswafer 86 umfasst, welcher in die tragende Struktur 16 hineinragt.

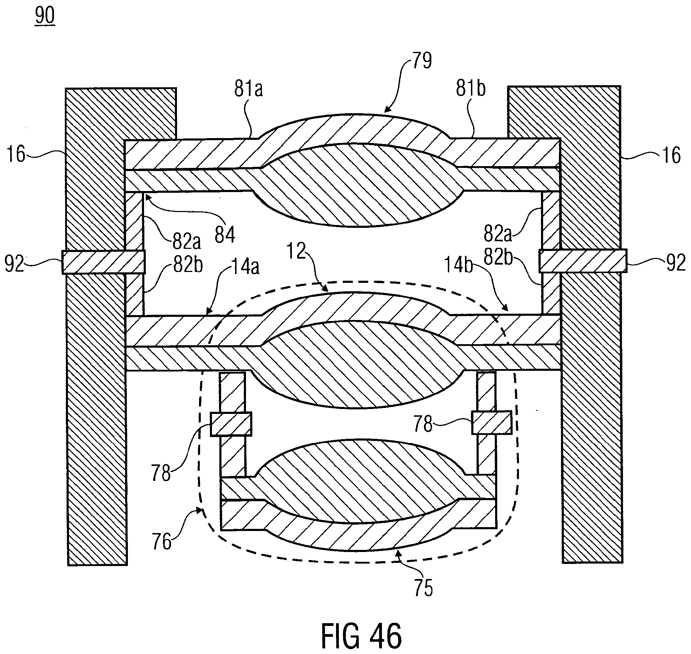

Fig. 46 zeigt eine Vorrichtung 90 analog Fig. 44, bei der weitere Segmente 82a-d aus einem Linsenmaterial zwischen der bewegten Linse 12 und der unbewegten Linse 79 angeordnet sind und einen umlaufenden Rahmen 84 bilden, wobei die Segmente 82a und 82b über die Klebschicht 92 gefügt sind und die Klebschicht 92 zugleich die Einzelteile 16b und 16c der tragenden Struktur 16 fügt.

Obige, aber auch nachfolgend beschriebene Ausführungsbeispiele sind ohne weiteres auch auf Fälle übertragbar, bei denen es sich nicht um eine Linse, sondern um eine andere optische Struktur handelt, wie z. B. ein Beugungsgitter.

Die bisher beschriebenen Ausführungsbeispiele konzentrierten sich auf die Schaffung einer Möglichkeit für eine Kompensation der Temperaturabhängigkeit von optischen Eigenschaften einer optischen Struktur, wie z.B. der Temperaturabhängigkeit der Brennweite einer Linse durch monomorphe oder bimorphe Auslenkung der Stege, mit denen die Linse bzw. die optischen Struktur aufgehängt ist, so dass beispielsweise eine Bildebene oder Zwischenbildebene einer optischen Abbildung, an der die Linse beteiligt ist, seine Lage weniger aufgrund von Temperaturänderungen ändert. Obwohl obige Ausführungsbeispiele stets eine Auslenkung aus der Schichtebene der die Stege bildendenden Schicht(en) zeigten, wonach die optische Struktur beispielsweise in einer Schichtdickerichtung bewegt wird, wäre es auch möglich, das Prinzip auch auf Auslenkungen in der Schichtebene zu übertragen. Dadurch könnten auch Bewegungen anderer Art als translatorische Bewegungen entlang der optischen Achse oder Verkippungen erzielt werden. Zusätzlich zur quasi passiven Kompensationswirkung zur Erzielung einer Athermisierung der Eigenschaften des optisches Aufbaus können die vorherig beschriebenen Aufbauten mit Heizelementen versehen sein, um eine Bewegung der optischen Komponenten aktiv und unabhängig von der Umgebungstemperatur herbeizuführen.

Obige Ausführungsbeispiele sind kombinierbar mit dem Aspekt nachfolgend beschriebener Ausführungsbeispiele, wonach ausheilbarer Klebstoff verwendet wird, um eine Justage der über Stege einstellbaren Lage einer optischen Struktur zu fixieren. Die nachfolgenden Ausführungsbeispiele sind aber auch losgelöst von dem Temperaturkompensationseffekt obiger Ausführungsbeispiele einsetzbar.

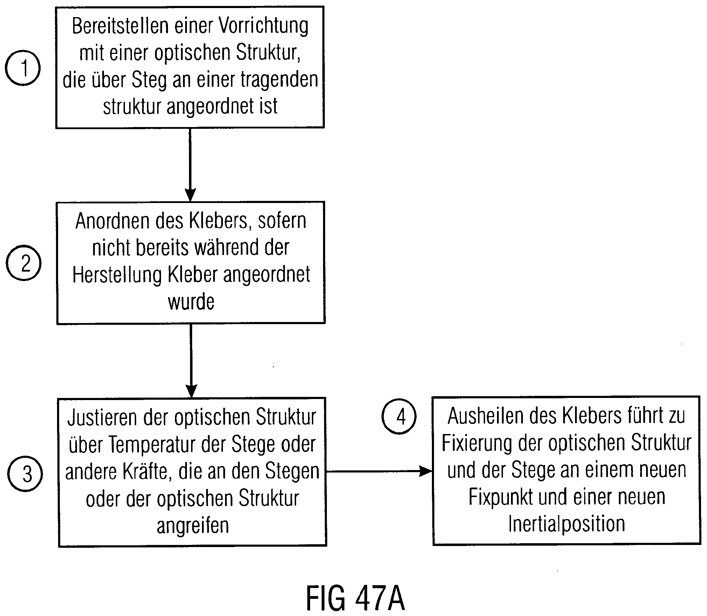

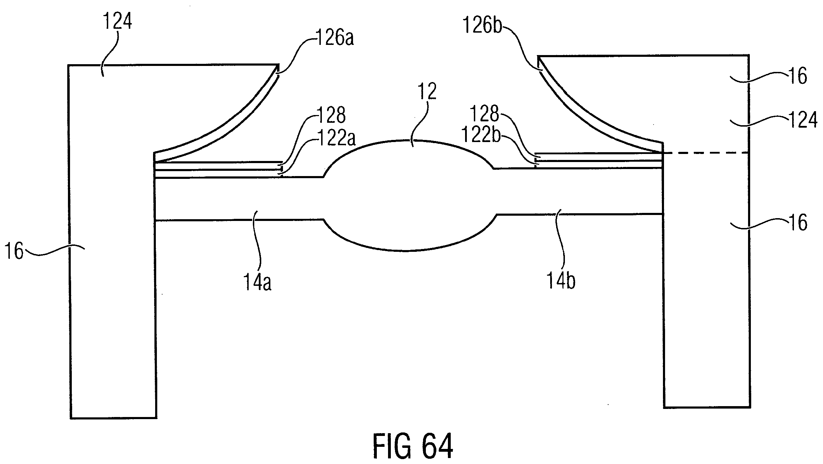

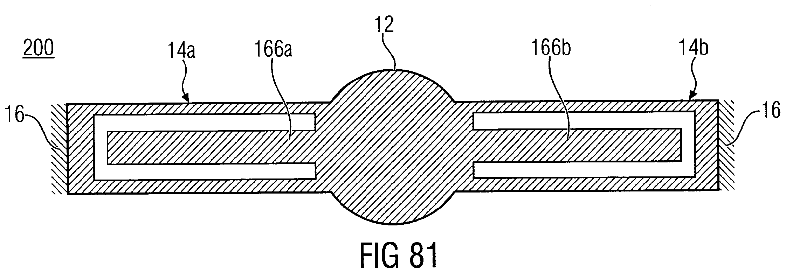

Fig. 47a zeigt ein schematisches Blockschaltbild bezüglich des Justierens und Fixierens einer neuen Initialposition einer optischen Struktur 12 bezüglich seiner Lage zur Bezugsebene 18. Schritt 1 beinhaltet das Bereitstellen einer zu justierenden Vorrichtung, welche eine optische Struktur enthält. Das Bereitstellen kann auch die Herstellung der Vorrichtung mit der optischen Struktur 12 und der Stege 14 beinhalten. Während der Herstellung der Vorrichtung kann auch bereits ein später ausheilbarer Kleber 102 mit in die Vorrichtung eingebracht werden. Ist der Kleber 102 während der Bereitstellung der Vorrichtung noch nicht an der Vorrichtung angeordnet, so wird er in einem zweiten Schritt an der Vorrichtung angeordnet, so dass er zwischen den Stegen 14 und der tragenden Struktur 16 angeordnet ist. In einem dritten Schritt erfolgt das Justieren der optischen Struktur bezüglich der Bezugsebene 18, so dass ein gewünschter Abstand oder eine gewünschte Orientierung der Linse 12 zur Bezugsebene 18 erreicht wird. Beispielsweise kann die gewünschte Ausrichtung eine optimale Fokuslage der Linse 12 bezüglich der Bezugsebene 18 umfassen. Die Justierung erfolgt durch einen justierenden Einfluss 104, der die Linse 12 aus ihrer ursprünglichen Position P1 in eine justierte Position P2 bewegt. Beispielsweise kann dies über eine Aktivierung von auf den Stegen befindlichen Heizelementen geschehen, die eine Verformung der Stege 14 initiieren. Auch andere Einwirkungen sind denkbar, beispielsweise elektrostatische Kräfte, die an den Stegen angreifen, und solche, die über elektrostatische Antriebe, wie sie beispielsweise in Fig. 64 und 81 dargestellt sind, erzeugt werden. Es ist weiterhin denkbar, dass externe Mechaniken auf die Struktur einwirken und eine Auslenkung Stege 14 und mithin der daran befestigten Linse 12 bewirken. Während der Justierung kann ein oder mehrere Male eine zwischenzeitliche Kontrolle erfolgen, ob die gewünschte Orientierung erreicht wurde. Wird zur Justage eine Veränderung der Umgebungstemperatur verwendet, also der oben beschrieben Effekt der temperaturabhängigen Auslenkung von entsprechend ausgestalteten Stegen verwendet, so wird bei der Justage ein vorher ermittelter bzw. bekannter Zusammenhang zwischen Temperatur und optischer Eigenschaft der optischen Struktur ausgenutzt, um die optimale Justage bezogen auf eine vorbestimmte Einsatz- bzw. Betriebstemperatur zu bestimmen, für die die optische Struktur vorgesehen ist. Wird die Stegauslenkung bei der Justage anderweitig erwirkt, erfolgt die Justage beispielsweise bei der Betriebstemperatur oder in einem Intervall von erlaubten Betriebstemperaturen.

Unter Beibehaltung der justierten Position P2 erfolgt in einem vierten Schritt ein Ausheilen des Klebers 102, was zu einer Fixierung der Linse 12 und der Stege 14 führt, wobei am Ort des ausgeheilten Klebers 102 ein neuer Fixierpunkt der Stege 14 gebildet ist, der eine neue Bewegungsform der Stege 14 definiert. Es kann sein, dass nach Fixierung die Linse 12 gemäß obiger Temperaturabhängigkeit noch durch die Verformung der Stege im Bereich zwischen dem neuen Fixierpunkt und der Linse 12 bewegbar sind. Diese Restbewegbarkeit sollte bei der Justage bereits im vorhergehenden Justageschritt mitberücksichtigt werden. Sind beispielsweise die Stege mittels lokaler Erwärmung der Stege gemäß einem obiger Ausführungsbeispiele ausgelenkt worden, und war die Temperatur zu Erlangung der optimalen Justage bzw. Ausrichtung hoch, kann es je nach Restbeweglichkeit von Vorteil sein, vor der Fixierung die Stege noch ein wenig über den optimalen Auslenkpunkt hinaus auszulenken, um dann im Betrieb eine unnötige Temperierung zur Feinjustage der Linse im Betrieb zu vermeiden.

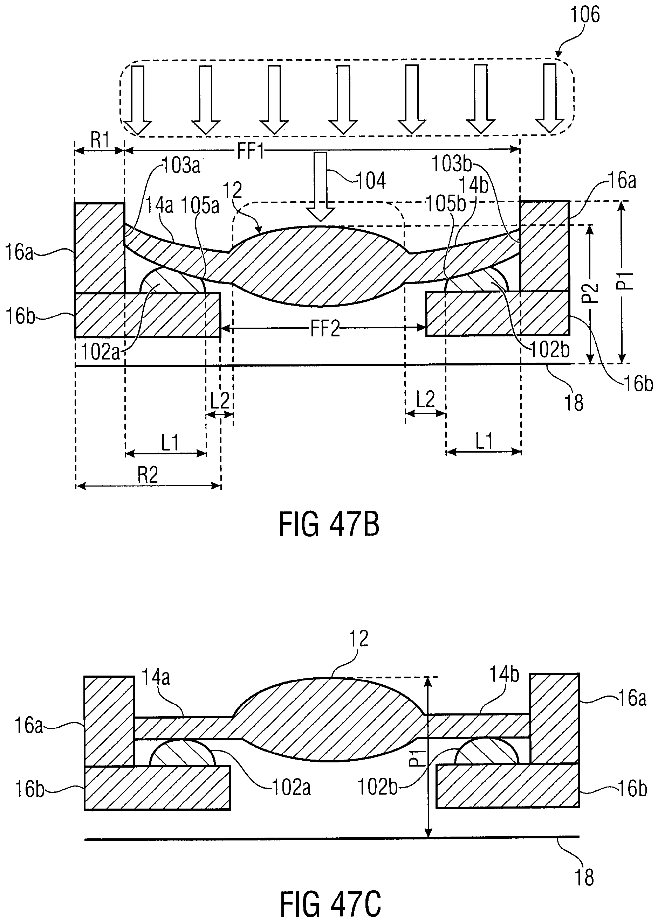

Fig. 47b zeigt eine Vorrichtung, bei der die tragende Struktur 16 aus zwei Abschnitten 16a und 16b besteht. Am Abschnitt 16a ist die Linse 12 über die Stege 14a und 14b angeordnet. Der Abschnitt 16a weist eine Breite R1 auf, die kleiner ist als eine Breite R2 des Abschnittes 16b der tragenden Struktur, welcher sich zu dem ersten Abschnitt 16a nach unten entrichtet. Ein dadurch durch den ersten Abschnitt 16a der tragenden Struktur definierter Zwischenraum FF1 ist somit größer als ein durch den zweiten Abschnitt 16b definierter Zwischenraum FF2. Durch das Einstellen einer neuen, von der ursprünglichen Position P1 verschiedenen Position P2 der Linse 12 bezüglich der Bezugsebene 18 durch den justierenden Einfluss 104 und ein Ausheilen 106 des Klebers 102 und Wegnahme des justierenden Einflusses 104 umfasst die Linse 12 die justierte Position P2 als neue Initialposition. Die Orte des ausgeheilten Klebers 102a und 102b definieren neue feste Ankerpunkte der Stege 14. Eine thermisch oder durch andere, beispielsweise elektrostatische, Kräfte induzierte Verformung der Stege 14 ist in diesem Fall nur noch in einem Bereich L2 zwischen der Linse 12 und dem durch den ausgeheilten Kleber definierten Fixpunkt wirksam.

Eine restliche Ausdehnung L1 der Stege 14 trägt beispielsweise nur unwesentlich zur Positionierung der Linse 12 im Raum bei. Ein alter Aufhängepunkt 103a/103b ist durch einen neuen Aufhängepunkt 105a/105b der Linse 12 ersetzt.

Fig. 47c zeigt eine Vorrichtung, bei der in einem für Fig. 47b vorbereitenden Schritt Kleber 102a und 102b zwischen den Stegen 14a und 14b sowie der tragenden Struktur im Abschnitt 16b angeordnet ist. Dabei ist der Abschnitt 16b der tragenden Struktur gegenüber den Stegen 14a und 14b unbeweglich ausgebildet, sodass die Stege 14a und 14b und mithin die Linse 12 gegenüber der Bezugsebene 18 justiert werden kann.

Obwohl in Fig. 47 der Kleber 102 UV-härtend ausgebildet ist und die Ausheilung 106 durch UV-Bestrahlung erfolgt, sind auch andere Formen von Klebstoff, bspw. ein thermisch aktivierbarer Klebstoff, vorstellbar, welche durch korrespondierende Ausheilprozesse, wie beispielsweise thermische Prozesse, ausgeheilt werden. Die Justierung 104 kann beispielsweise durch Aktivierung der Heizelemente 52 oder eine andere äußere Kraft erfolgen. Erfolgt die Justierung mittels Temperatur, entweder durch die Umgebungstemperatur oder durch Aktivieren der Heizelemente, so kann eine Fixierung durch Kleber derart ausgelegt sein, dass sie sowohl die Fertigungstoleranzen der Gesamtstruktur kompensiert als auch die Rückverformung der Stege, die gegebenenfalls auftritt, wenn die justierende Temperatur zurückgenommen wird und die Stege auf die reguläre Umgebungstemperatur zurückkühlen. Diese Rückverformung kann gegebenenfalls zu einer erneuten Verschiebung der Linse aus ihrer angestrebten Soll-Lage führen.

Alternativ ist auch vorstellbar, dass die Justage durch elektrostatische Antriebe erfolgt, die Kräfte derart auf die Stege einwirken lassen, dass die Soll-Lage der Linse erreicht und durch den Kleber fixiert wird. Alternativ kann auch eine externe Kraft, beispielsweise durch einen Greifer oder ein anderes externes Gerät, zur Auslenkung und Justage der Linse eingesetzt werden.

Die oben beschriebene und durch den neuen Fixierpunkt 105 erzeugte Verkürzung der später im Betrieb wirksamen Steglänge auf die Länge L2 kann sowohl während der Bereitstellung der Stege als auch durch eine entsprechende Dimensionierung der Stegmaterialien berücksichtigt werden, sodass die Stege beispielsweise länger ausgelegt werden, womit die Biegelinie zu einer größeren Amplitude führt, oder Materialien gewählt werden, die einen stärkeren Hub erzeugen, sodass die ermittelte Kennlinie zwischen Verschiebung der optischen Struktur und Verschiebung der optischen Charakteristik der Linse erhalten bleibt.

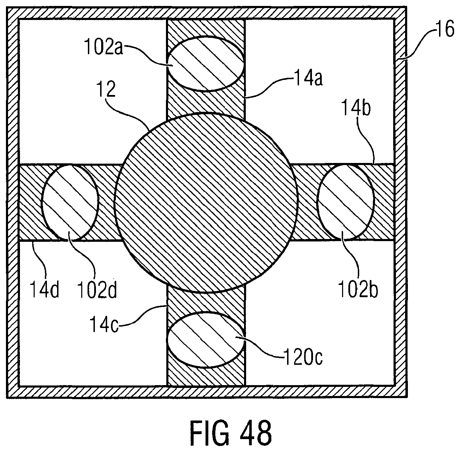

Fig. 48 zeigt Vorrichtung 30, bei der an den Stegen 14a-d ein durch UV-Strahlung ausheilbarer Kleber 102a-d angeordnet ist.

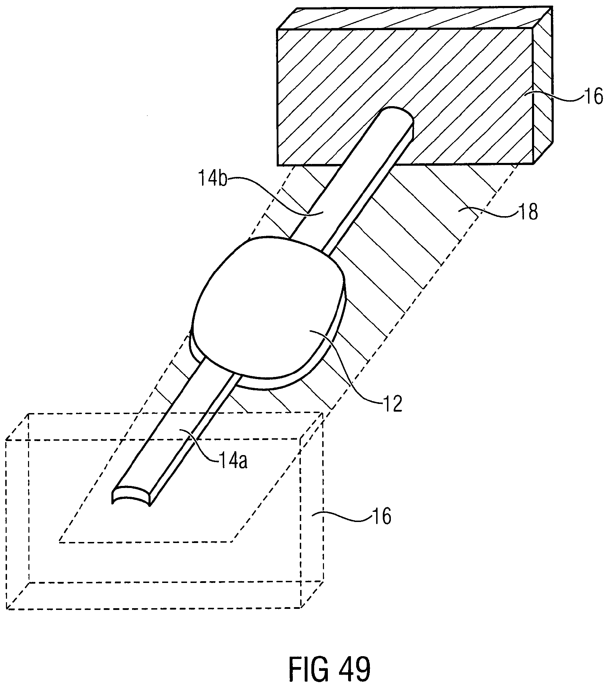

Fig. 49 zeigt eine Vorrichtung 10 bei der die Stege 14a und 14b mit einem konkav-konvexen Querschnitt eine gekrümmte Geometrie aufweisen. Dieser ermöglicht sowohl eine Stabilisierung der Ruhelage der Linse 12 als auch eine Definition der Bewegung der Linse 12, die über einlagige Stege an der tragenden Struktur 16 angeordnet ist.

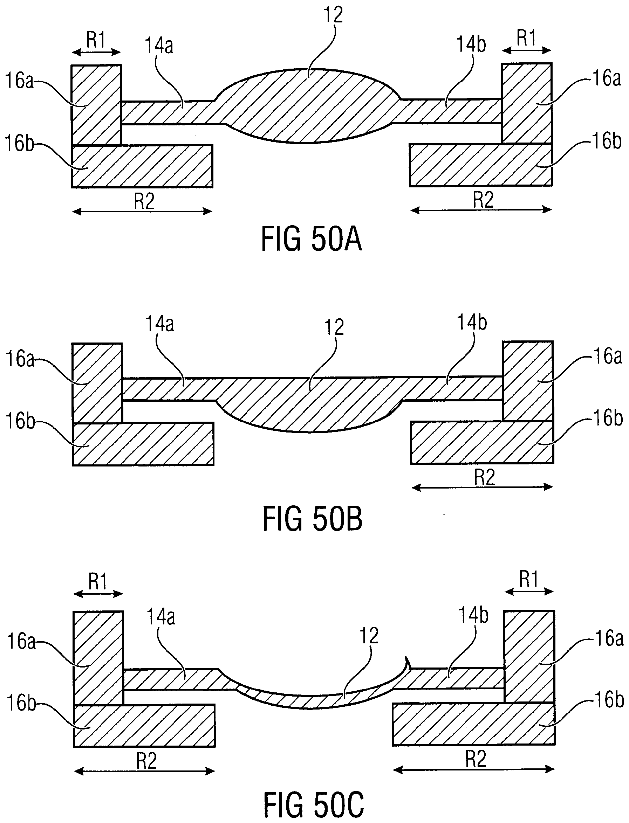

Fig. 50 zeigt eine Vorrichtung analog den Fig. 1 und 2, bei der die tragende Struktur 16 einen Abschnitt 16a mit einer Breite R1 und einen weiteren Abschnitt 16b mit einer Breite R2 umfasst, und die Stege 14a und 14b im Abschnitt 16a an der tragenden Struktur 16 angeordnet sind. Der zwischen den Stegen 14a respektive 14b und dem Abschnitt 16b der tragenden Struktur 16 Raum ist ausgebildet um eine Anordnung eines ausheilbareren Klebers 102 zur Fixierung einer neuen Initialposition zu ermöglichen.

51a zeigt eine Vorrichtung analog Fig. 26, bei der der Abschnitt 16b der tragenden Struktur 16 einen Raum zwischen den Stegen 14a und 14b sowie der tragendenden Struktur 16 in Richtung der Bezugsebene 18 begrenzt, der ausgebildet ist, eine Anordnung eines ausheilbareren Klebers 102 zur Fixierung einer neuen Initialposition zu ermöglichen.

51b zeigt eine Vorrichtung analog Fig. 27, bei der der Abschnitt 16b der tragenden Struktur 16 einen Raum zwischen den Stegen 14a und 14b sowie der tragendenden Struktur 16 in Richtung der Bezugsebene 18 begrenzt, der ausgebildet ist, eine Anordnung eines ausheilbareren Klebers 102 zur Fixierung einer neuen Initialposition zu ermöglichen.

52a zeigt eine Vorrichtung analog Fig. 26, bei der der Abschnitt 16b der tragenden Struktur 16 einen Raum zwischen den Stegen 14a und 14b sowie der tragendenden Struktur 16 in Richtung der mitbewegten Linse 75 begrenzt, der ausgebildet ist, eine Anordnung eines ausheilbareren Klebers 102 zur Fixierung einer neuen Initialposition zu ermöglichen.

52b zeigt eine Vorrichtung analog Fig. 27, bei der der Abschnitt 16b der tragenden Struktur 16 einen Raum zwischen den Stegen 14a und 14b sowie der tragendenden Struktur 16 in Richtung der mitbewegten Linse 75 begrenzt, der ausgebildet ist, eine Anordnung eines ausheilbareren Klebers 102 zur Fixierung einer neuen Initialposition zu ermöglichen.

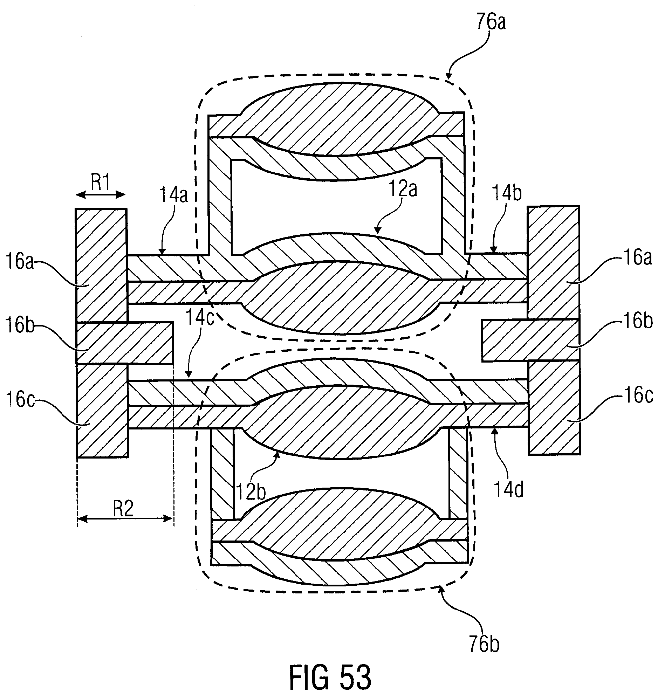

Fig. 53 zeigt eine Vorrichtung analog Fig. 29, bei der die tragende Struktur 16 im Bereich zwischen den beiden Linsenstapeln 76a und 76b einen Abschnitt 16b umfasst, der eine Breite R2 aufweist, der größer ist, als die Breite R1 des Abschnittes 16a und eines Abschnittes 16c der tragenden Struktur 16. An dem Abschnitt 16b mit der Breite R2 kann in Richtung der beiden Linsenstapel 76a und 76b jeweils Kleber 102 angeordnet werden, so dass beide Linsenstapel 76a und 76b mithilfe des Abschnittes 16b der tragenden Struktur 16 justiert werden können.

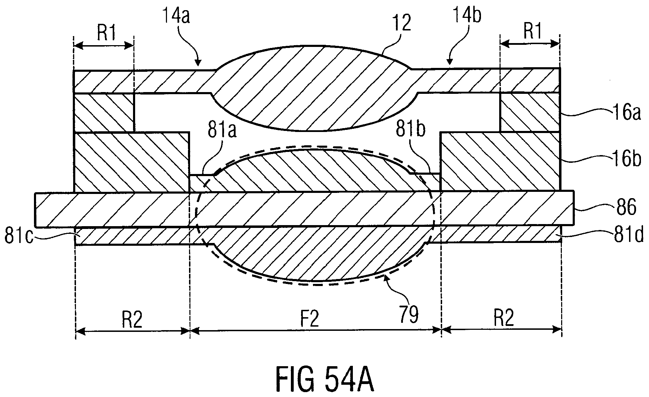

Fig. 54a zeigt eine Vorrichtung, bei der die tragende Struktur 16 einen Abschnitt 16a mit einer Breite R1 und einen Abschnitt 16b mit einer Breite R2 umfasst und die Breite R2 größer ist, als die Breite R1. An einer Ober- oder Unterseite der tragenden Struktur 16, die die Breite R1 an der tragenden Struktur 16 aufweist, ist eine bewegliche Linse 12 über die Stege 14a und 14b angeordnet. An der gegenüberliegenden Ober- oder Unterseite der Struktur 16 ist im Zwischenraum F2 des Abschnittes 16b eine unbewegte Linse 79a über weitere Schichten 81a und 81b angeordnet, wobei die unbewegte Linse 79a und die weiteren Schichten 81a und 81b mit der tragenden Struktur 16 einstückig ausgeführt sind.

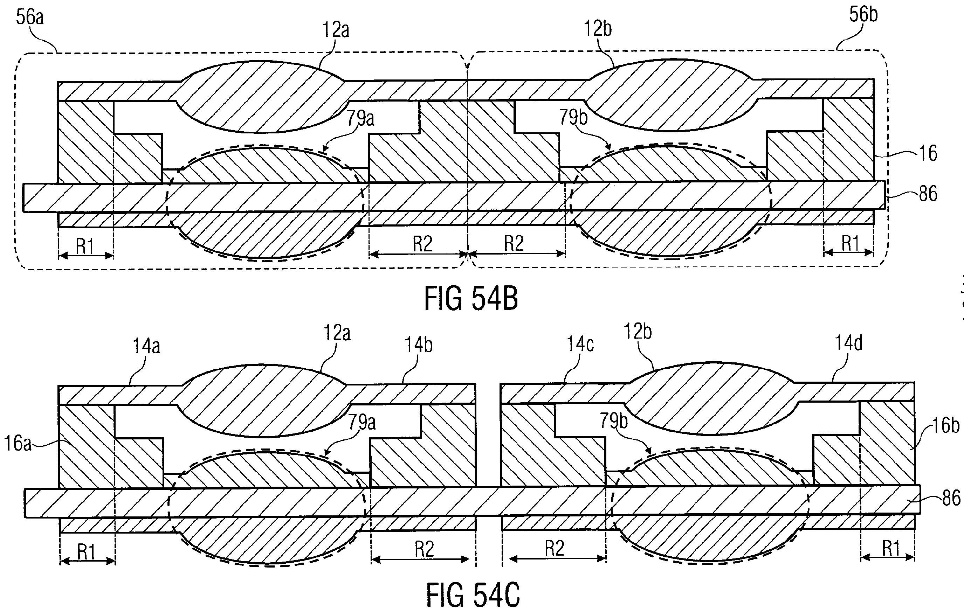

Fig. 54b zeigt eine Vorrichtung, die aus zwei Zellen 56a und 56b besteht, wobei jede der Zellen 56a und 56b im Sinne einer Vorrichtung aus der Fig. 54a gebildet ist. Die beiden Zellen sind direkt benachbart zueinander angeordnet und an einander angrenzende Materialschichten der Zellen mit den beweglichen Linsen 12a und 12b, der tragenden Struktur 16, des Glaswafers 86 sowie der der unbewegten Linsen 79a und 79b sind jeweils einstückig über den Verlauf ausgebildet.

Fig. 54c zeigt eine Vorrichtung analog Fig. 54b, bei der die Zellen 56a und 56b beabstandet voneinander auf dem durchgehend ausgeführten Glaswafer 86 angeordnet sind. Somit ist lediglich der Glaswafer 86 einstückig ausgebildet.

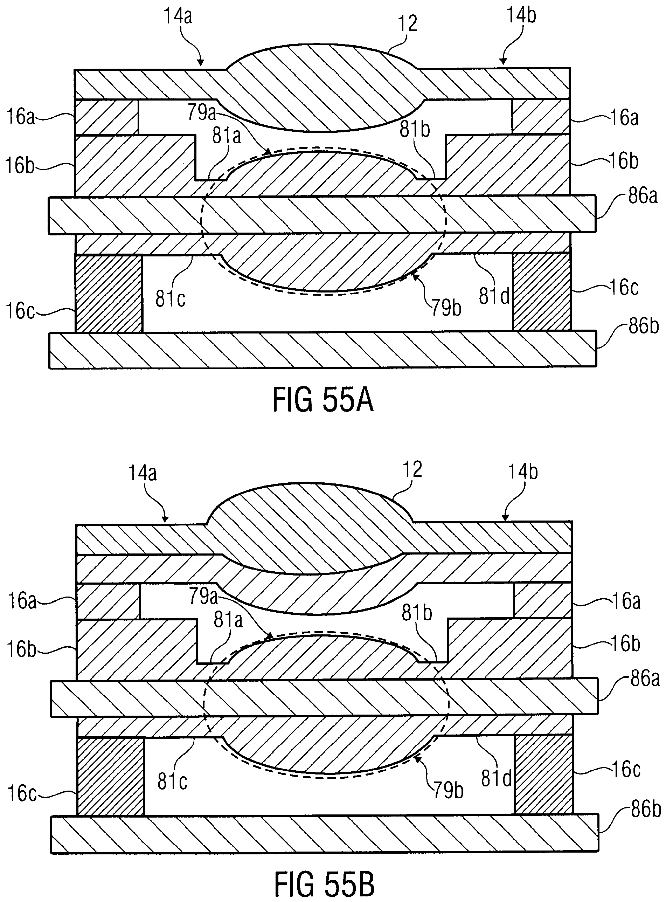

Fig. 55a zeigt eine Vorrichtung analog der Vorrichtung aus Fig. 54a, bei der an den an der Hälfte 79b der unbewegten Linse angeordneten Schichten 81c und 81d ein weiterer Abschnitt 16c der tragenden Struktur angeordnet ist, an dessen Ende ein zweiter Glaswafer 86b angeordnet ist.

Fig. 55b zeigt die Vorrichtung aus Fig. 55a, bei der die Linse 12 zweischichtig aufgebaut ist.

In einer Vorrichtung mit bewegten und unbewegten Linsen können einschichtige oder mehrschichtige bewegte oder unbewegte Linsen eingesetzt werden. Ebenso ist es möglich, auch mehrere Glaswafer 86 einzusetzen, um beliebige Eigenschaften entlang einer optischen Achse umzusetzen.

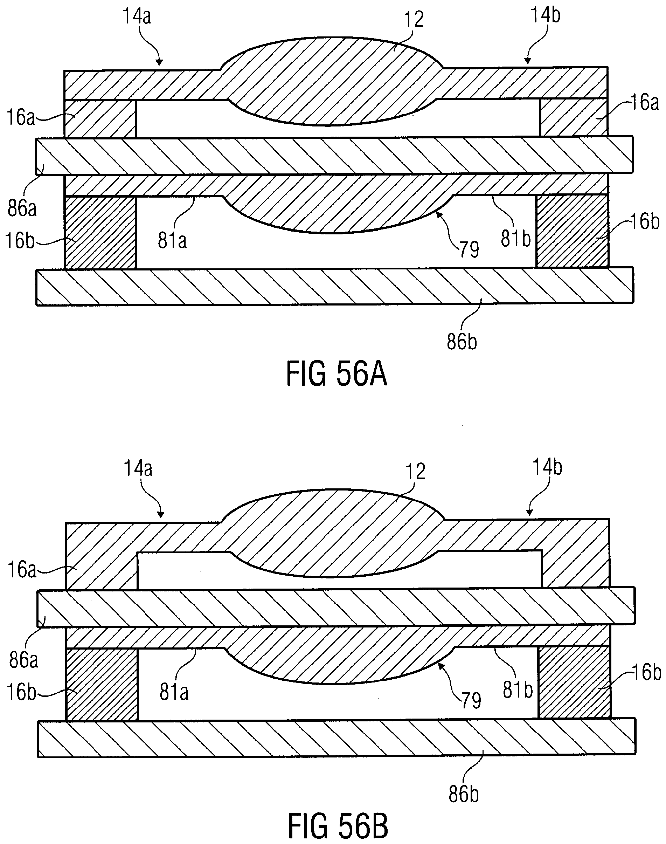

Fig. 56a, zeigt eine Vorrichtung, bei der die Abschnitte 16a und 16b der tragenden Struktur 16 aus unterschiedlichen Materialien ausgebildet sind. Der Abschnitt 16a ist an einem Glaswafer 86a angeordnet, wobei am dem Glaswafer 86a gegenüberliegenden Ende des Abschnittes 16a die Stege 14a und 14b angeordnet sind. Die der Linse 12 abgewandte Hauptseite des Glaswafers 86 umfasst eine unbewegliche Linse 79 mit daran angeordneten Schichten 81a und 81b, wobei die unbewegte Linse 79 und die Schichten 81a und 81b einstückig gebildet sind. An den Schichten 81a und 81b ist ein Abschnitt 16b der tragenden Struktur angeordnet, der aus einem anderen Material als der Abschnitt 16a gebildet ist. An dem der unbewegten Linse 79 abgewandten Ende des Abschnittes 16b ist ein zweiter Glaswafer 86b angeordnet.

Fig. 56b zeigt die Vorrichtung aus Fig. 56a, bei der die Stege 14a und 14b sowie der Abschnitt 16a der tragenden Struktur 16 mit der Linse 12 einstückig ausgebildet sind.

Je nach gewünschter Funktion, beispielsweise mechanische oder thermische Eigenschaften, kann jeder Abschnitt einer optischen Gesamtstruktur aus einem anderen Material gebildet sein. Zwischen gleiche oder unterschiedliche Abschnitte von Material kann ein Glaswafer integriert sein, der entweder eine stabilisierende Eigenschaft aufweist oder als Träger einer optischen Struktur, beispielsweise einer Linse, ausgebildet sein kann.

Um eine große Dynamik bezüglich der Auslenkung der Stege oder einer optischen Struktur umzusetzen, ist es vorstellbar, dass die Nutzung der vorangegangenen thermischen Beeinflussbarkeit der Stege, die auch über die dargelegten Heizelemente ausgenutzt wird, um eine externe Kraft erweitert wird, die an den Stegen angreift und diese aus ihrer Position herausbewegt. Diese Kraft kann beispielsweise durch elektrostatische Felder in elektrostatischen Antrieben erzeugt werden, wie es die nachfolgenden Ausführungsbeispiele zeigen. Vorstellbar ist neben mechanischen Haltern oder Greifen auch eine rein elektrostatische Auslenkung, ohne Ausnutzung bzw. Vorhandensein oben beschriebener Temperaturabhängigkeit der Auslenkung. Dabei können die elektrostatischen Antriebe auf unterschiedliche Art und Weise ausgebildet sein. Manche der nachfolgend beschriebenen Ausführungsbeispiele sehen eine Erweiterung der tragenden Struktur um einen Elektrodenträger im Sinne eines teilweise gekrümmten Formbauteils oder eines entsprechend ausgeformten Abschnittes der tragenden Struktur vor, an dem eine Elektrode angeordnet werden kann.

Ebenso können die elektrostatischen Antriebe über eine spezielle Ausformung der Stege mittels einer Auslegerelektrode ausgeführt sein, wie es bei weiteren nachfolgend beschrieben Ausführungen der Fall ist.

Obige Ausführungsbeispiele sind somit kombinierbar mit dem Aspekt nachfolgend beschriebener Ausführungsbeispiele, wonach elektrostatische Antriebe verwendet werden, um eine Positionierung der optischen Struktur und der Stege im Betrieb durchzuführen. Die nachfolgenden Ausführungsbeispiele sind aber auch losgelöst von dem Temperaturkompensationseffekt obiger Ausführungsbeispiele einsetzbar.

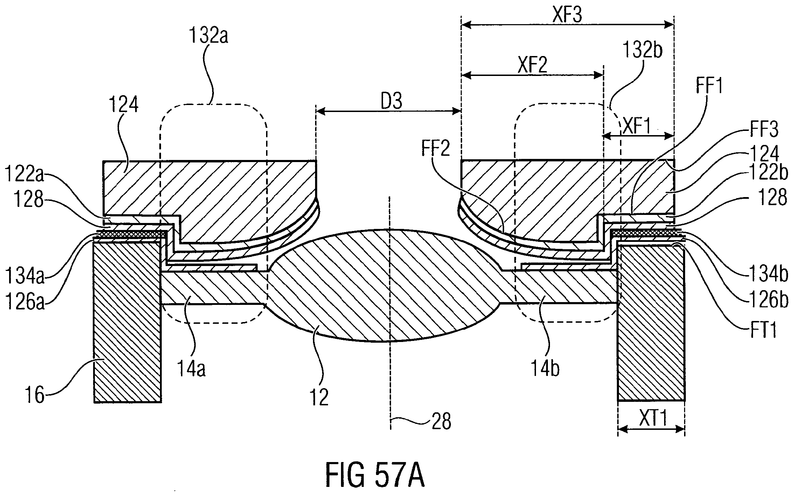

Fig. 57a zeigt eine Vorrichtung 120 analog Fig. 1 mit daran angeordnetem Formbauteil, bei der zweite Elektroden 126a und 126b ersten Elektroden 122a und 122b derart zueinander angeordnet sind, dass sie sich zumindest teilweise überlappen und zumindest durch eine Isolatorschicht 128 voneinander beabstandet sind. Die ersten Elektroden 122a und 122b und die zweiten Elektroden 126a und 126b bilden die elektrostatischen Antriebe 132a und 132b.

Das Formbauteil 124 weist in etwa mittig einen Durchmesser D3 auf, in dem das Material des Formbauteils 124, die Elektroden 126 und die Isolatorschicht 128 ausgespart sind und der in etwa zentrisch zur optischen Achse 28 der Linse 12 angeordnet ist. Das Formbauteil 124 umfasst zudem zwei, der tragenden Struktur 16 zugewandte Oberflächen. FF1 über eine Breite XF1 des Formbauteils 124 und eine kontinuierlich gekrümmte Oberfläche FF2 mit der Breite XF2. Die Oberfläche FF1 ist der Oberfläche FT1 gegenüberliegend angeordnet und die Breite XF1 entspricht im Wesentlichen der Breite XT1. Die Oberfläche FF1 ist eben ausgebildet, während die Oberfläche FF2 kontinuierlich gekrümmt ausgeformt ist. Eine Oberfläche FF3 des Formbauteils 124 ist in vorliegendem Ausführungsbeispiel über die Ausdehnung der Breite XF3 eben ausgebildet. Zwei zweite Elektroden 126a und 126b sind an der ebenen Oberfläche FF1 und der gekrümmten Oberfläche FF2 angeordnet und werden zumindest teilweise von einer Isolatorschicht 128 bedeckt.

Die elektrostatischen Antriebe erlauben das Anlegen eines elektrischen Feldes zwischen den Elektroden und mithin das Anlegen einer Kraft an die Elektroden 122 und 126. Dadurch lässt sich sowohl während einer initialen Justage als auch während des laufenden Betriebes eine Verschiebung oder aber eine Verkippung der optischen Struktur erzielen. Im laufenden Betrieb ist hierdurch eine dynamische Fokussierung der Linse möglich, die die Kompensation der thermisch induzierten Veränderungen der Linse 12 durch die Stege 14 ergänzt oder erst realisiert - ohne thermischen Ausgleich. Beispielsweise kann durch die Materialien der Stege und Linsen eine für variierende Umgebungstemperaturen gleichbleibende Fokuslage bezüglich eines definierten Objektabstandes erzielt werden. Wechselnde Objektabstände können mittels der elektrostatischen Antriebe fokussiert werden. Es kann insbesondere eine Steuerung (nicht gezeigt) vorgesehen oder zumindest anschließbar sein, die die elektrostatischen Antriebe entweder steuert, wie z.B. abhängig von der durch einen Temperaturfühler erfassten Temperatur, um den Auswirkungen der thermisch bedingten Änderung der optischen Eigenschaften der optischen Struktur entgegenzuwirken, oder regelt, wie z.B. abhängig von einer Auswertung eines von der optischen Eigenschaft der optischen Struktur abhängigen Signals, wie z.B. der Schärfe eines in einer Bildebene gewonnen Bilds, die zumindest teilweise durch die optische Struktur definiert wird, wie z.B. ein Linsensystem, das die an den Stegen aufgehängte Linse umfasst.

Die Vorrichtung von Fig. 57a kann beispielsweise wie nachfolgend beschrieben hergestellt werden.

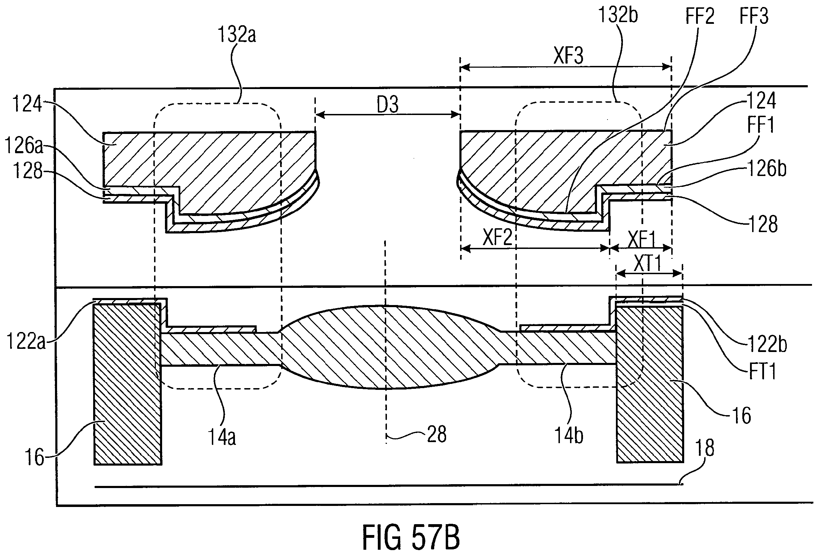

Fig. 57b zeigt die Vorrichtung 120 mit der tragenden Struktur 16 und den daran angeordneten Komponenten sowie dem Formbauteil 124 und den daran angeordneten Komponenten im ungefügten Zustand. Die Elektroden 122a und 126a sowie die Elektroden 122b und 126b sind ausgebildet, nach der Fügung von tragender Struktur 16 und Formbauteil 124 je als ein elektrostatischer Antrieb 132a respektive 132b bezüglich eines Steges 14a respektive 14b zu wirken.

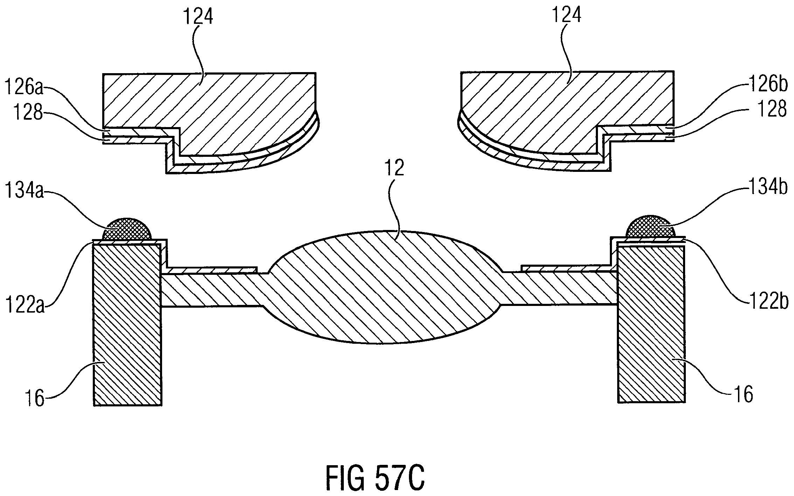

Fig. 57c zeigt die Anordnung eines ausheilbaren Klebers 134a und 134b zwischen den Oberflächen FT1 und FF1, über welchen das Formbauteil 124 an die tragende Struktur 16 gefügt wird.

Werden erste Elektroden 122 an den Stegen angeordnet und elektrostatische Antriebe 132 dazu genutzt, die Stege 14 und mithin die Linse 12 auszulenken, so kann dies mit einer sehr großen Dynamik geschehen, was eine schnelle Fokussierung der Linse 12 bezüglich der Bezugsebene und eines eventuellen, zu fokussierenden Objektabstandes, ermöglicht, sodass die optische Gesamtstruktur, in welcher die Linse 12 möglicherweise eingesetzt wird, eine schnellere Bildfolge erzielen kann.

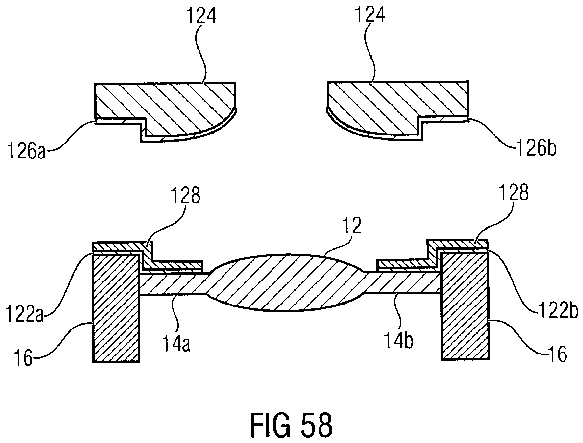

Fig. 58 zeigt eine Vorrichtung alternativ zu Fig. 57b, bei der die Isolatorschicht 128 auf den ersten Elektroden 122a und 122b angeordnet ist. Prinzipiell kann die Isolatorschicht 128 auch derart zwischen der ersten Elektrode 122 und der zweiten Elektrode 126 positioniert sein, dass sie weder an der jeweiligen ersten Elektrode 122a/122b noch an einer zweiten Elektrode 126a/b fest angeordnet ist, beispielsweise kann sie als separate Schicht während des Fügens zwischen die tragende Struktur 16 und das Formbauteil 124 eingelegt werden. Im Bereich zwischen einer Oberfläche FT1 der tragenden Struktur 16 und einer ebenen Oberfläche FF1 eines Formbauteils 124 sind lediglich die jeweils erste und zweite Elektrode 122a/122b, die zweite Elektrode 126a/126b, die Isolatorschicht 128 sowie Kleber 134a/134b angeordnet. In diesem Bereich ist der Abstand zwischen den ersten Elektroden 122a und 122b minimal und nimmt von der tragenden Struktur 16 in Richtung der Linse 12 hin kontinuierlich zu.

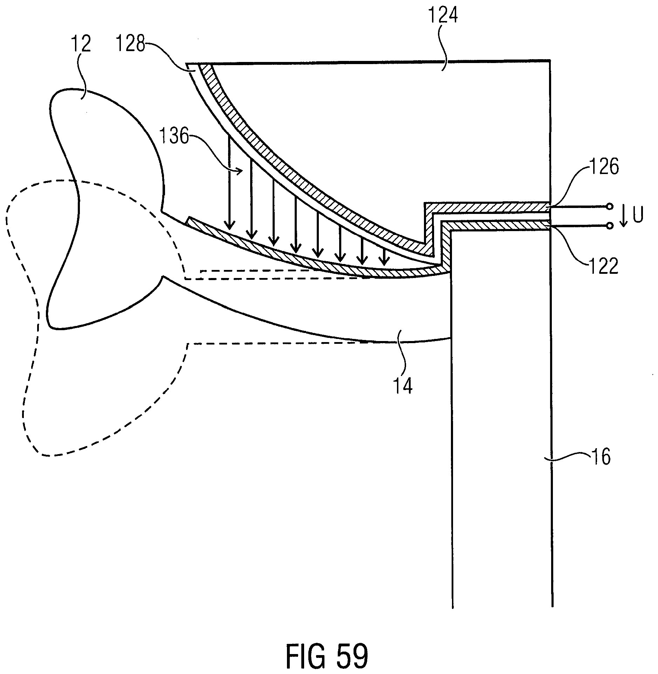

Fig. 59 zeigt einen Ausschnitt der Vorrichtung 120, bei der zwischen der ersten Elektrode 122 und der zweiten Elektrode 126 eine elektrische Spannung U angelegt ist. Die Spannung U führt zur Ausbildung eines elektrischen Feldes 136 zwischen den beiden Elektroden und mithin zu einer anziehenden Kraft zwischen den beiden Elektroden. Durch die Anordnung des Formbauteils 124 an der tragenden Struktur 16 ist die zweite Elektrode 126 bezüglich der tragenden Struktur 16 unbeweglich angeordnet. Die anziehende Kraft des elektrischen Feldes 136 führt dazu, dass sich die Linse 12 und der Steg 14 aus ihrer gestrichelt angedeuteten ursprünglichen Position in Richtung der zweiten Elektrode 126 bewegen.

Je nach Polarität des elektrischen Feldes kann auch eine abstoßende Kraft zwischen den beiden Elektroden erzeugt werden, was zu einer Bewegung des Steges 14 und der Linse 12 weg von der zweiten Elektrode 126 führt.

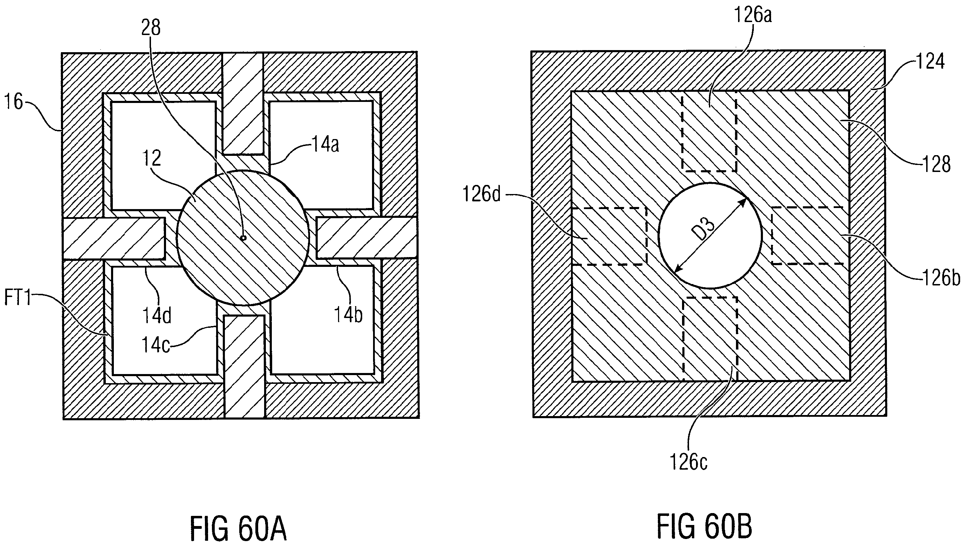

Fig. 60a zeigt eine Aufsicht auf eine Zelle 56 der Vorrichtung 30 aus Fig. 20 bei der die ersten Elektroden 122a-d an den Stegen angeordnet sind und sich auf die Oberfläche FT1 der tragenden Struktur 16 erstrecken. Die optische Achse 28 liegt im Zentrum der Linse 12. Fig. 60b zeigt eine Aufsicht auf das Formbauteil 124, auf welchem gestrichelt dargestellt die zweiten Elektroden 126a-d angeordnet sind, welche von der flächig angeordneten Isolatorschicht 128 bedeckt sind. Das Formbauteil weist mittig die runde Aussparung mit dem Durchmesser D3 auf, die nach einer Fügung des Formbauteils 124 an die tragende Struktur 16 einen ungehinderten Lichtdurchlass entlang der optischen Achse 28 der Linse 12 ermöglicht.

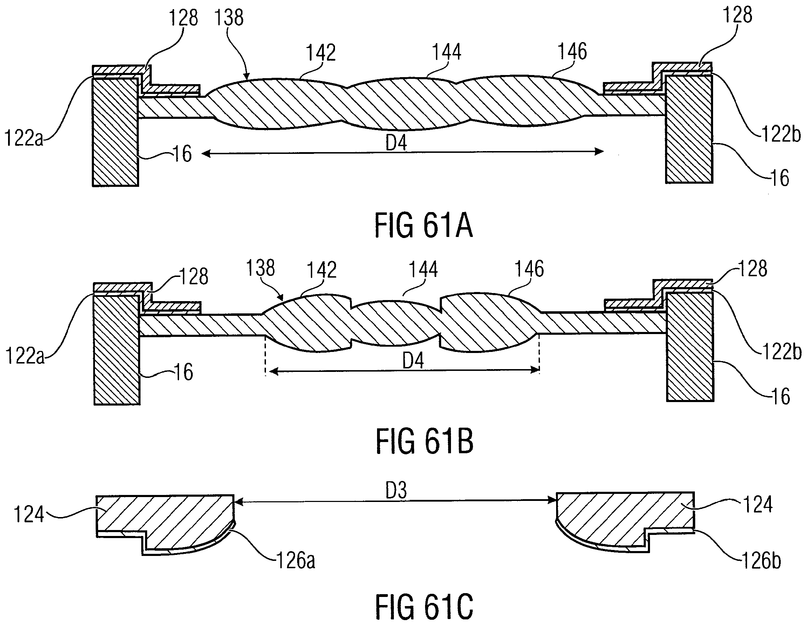

Fig. 61a zeigt eine Vorrichtung analog Fig. 58, bei der die optische Struktur anstelle der Linse 12 ein optisches Array 138 mit mehreren nebeneinander liegenden Linsen 142, 144 und 146, die direkt mit einander verbunden sind und den gemeinsamen Durchmesser D4 umfassen und gemeinsam über die Stege 14 an der tragenden Struktur 16 befestigt sind. Die Linsen 142, 144 und 146 stellen eine dem Linsenarray 68 aus Fig. 24 ähnliche optische Struktur dar. Die Linsen 142, 144 und 146 können dabei transparente, reflektierende oder absorbierende Bereiche umfassen.

Fig. 61b zeigt eine zu Fig. 61a alternative Ausführungsform, bei der die Linsen 142 und 146 des optischen Arrays 138 Ausschnitte aus Linsen umfassen.

Fig. 61c zeigt ein Formbauteil 124, an dessen Oberflächen FF1 und FF2 die zweiten Elektroden 126a und 126b angeordnet sind und dessen Durchmesser D3 kleiner ist als der Durchmesser D4 des optischen Arrays 138 in den Fig. 61a und 61b. Die Durchmesser D3 und D4 können unabhängig voneinander dimensioniert sein, insbesondere können sie voneinander verschieden sein.

Gemäß alternativen Ausführungsbeispielen kann das optische Array eine beliebige Anzahl von Linsen oder Ausschnitten daraus umfassen, wobei die jeweiligen Einzelkomponenten individuell geformt sein können.

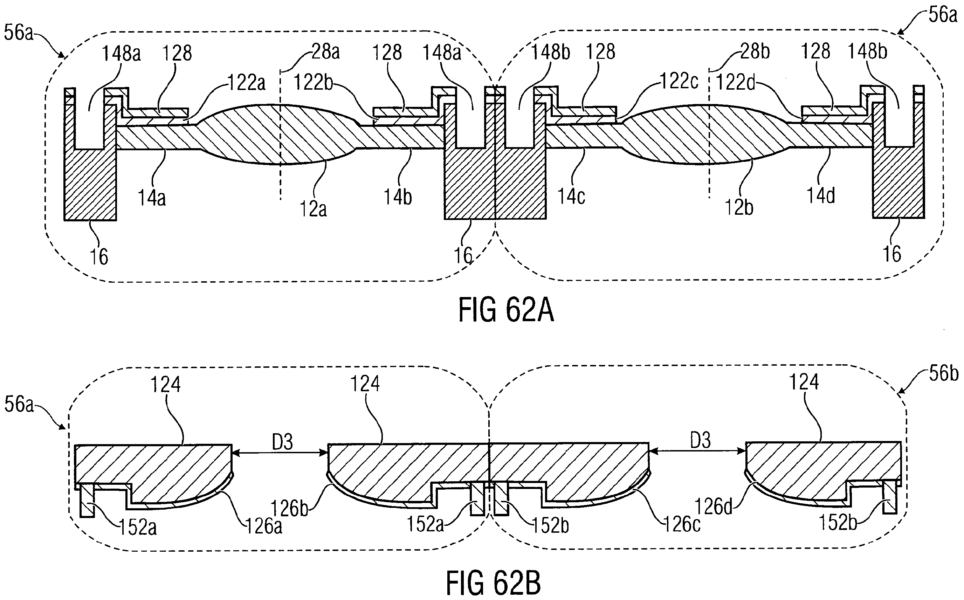

Fig. 62a zeigt den Querschnitt zweier nebeneinander liegenden Zellen 56a und 56b, mit je einer beweglichen Linse 12a und 12b, deren Stege 14a-d analog Vorrichtung 120 aus Fig. 58 mit den ersten Elektroden 122a-d und der Isolatorschicht 128 bedeckt sind und die tragende Struktur 16 Nuten 148a und 148b umfasst.

Fig. 62b zeigt den Querschnitt des ungefügten Formbauteils 124, das ausgebildet ist, an die beiden Zellen 56a und 56b der Fig. 62a gefügt zu werden und welches zwei Aussparungen mit einem Durchmesser D3 umfasst, die im gefügten Zustand je in etwa konzentrisch um die optische Achsen 28a und 28b der Linsen 12a und 12b positioniert sind. Das Formbauteil 124 umfasst Federn 152a und 152b, die ausgebildet sind, an den Nuten 148a und 148b von Fig. 62a angeordnet zu werden.

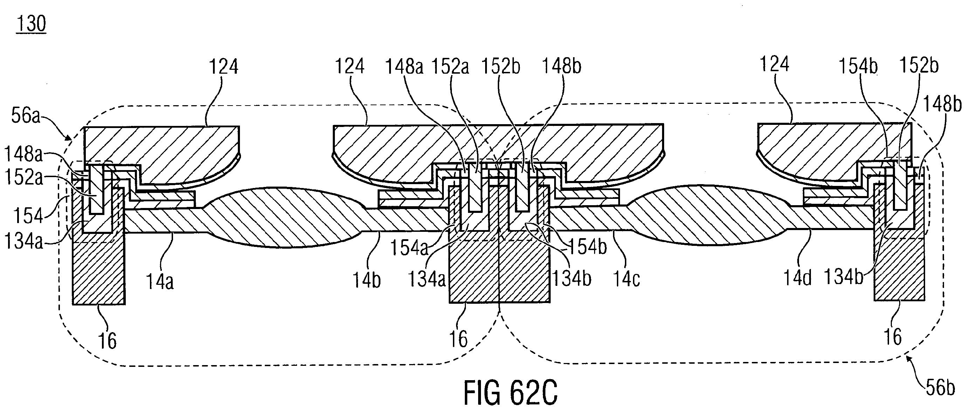

Fig. 62c zeigt Vorrichtung 130 im gefügten Zustand von Formbauteil 124 aus Fig. 62b und tragender Struktur 16 aus Fig. 62a, wobei die Federn 152a-b in die Nuten 148a-b eingeführt sind, zwischen den Nuten 148a-b und den Federn 152a-b Kleber 134a-d eingebracht ist und die Nuten 148a-b, die Federn 152a-b und der Kleber 134a-d die Fügezonen 154a-d bilden.

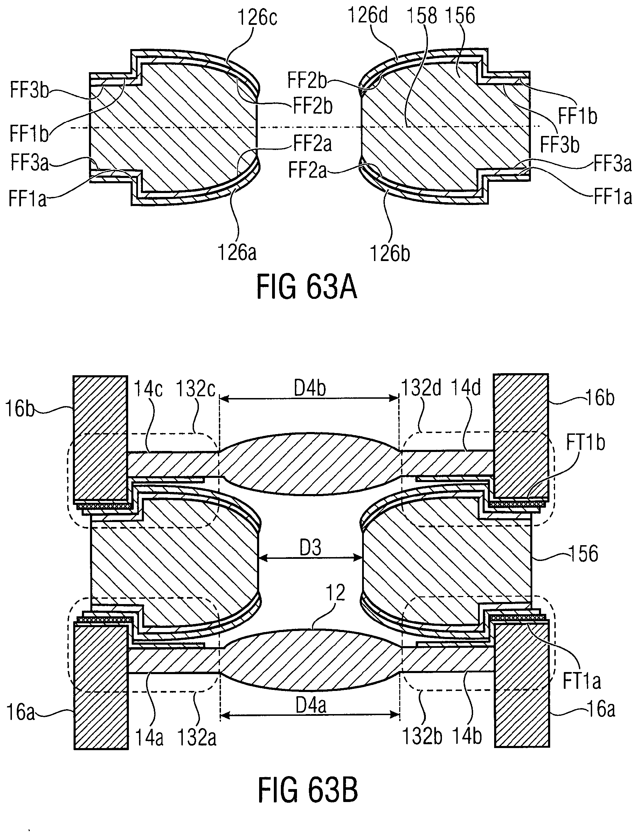

Fig. 63a zeigt den Querschnitt eines beidseitig gekrümmten Formbauteils 156, das bezüglich einer Symmetrieachse 158 symmetrisch aufgebaut ist und jede Hälfte des Formbauteils 156 als ein Formbauteil 124 aus Fig. 58 darstellbar ist, wobei die Oberflächen FF3a und FF3b der beiden Hälften des Formbauteils 156 deckungsgleich aneinander angeordnet sind. Das beidseitig gekrümmte Formbauteil 156 umfasst damit eine zweite ebene Oberfläche FF1b und eine zweite gekrümmte Oberfläche FF2b an welchen weitere zweite Elektroden 126c und 126d angeordnet sind und das Formbauteil 156 somit ausgebildet ist, Teil zweier elektrostatischer Antriebe 132a und 132b respektive 132c und 132d zu sein.

Alternative Ausführungsbeispiele umfassen ein beidseitig gekrümmtes Formbauteil, dessen Oberflächen keine Symmetrie zu einander ausweisen. Insbesondere, wenn sich Abschnitte der tragenden Struktur entlang der optischen Achsen voneinander unterscheiden, können die Abmessungen und Ausformungen beidseitig gekrümmter Formbauteile unabhängig von einander ausgeformt sein.

Fig. 63b zeigt eine Vorrichtung bei der zwei Vorrichtungen analog Fig. 58b über ein beidseitig gekrümmtes Formbauteil 156 derart aneinandergefügt, dass die optischen Achsen der Linsen 12a und 12b im Wesentlichen übereinstimmen und die Flächen FT1a und FT1b der tragenden Strukturen 16a und 16b einander zugewandt angeordnet sind und das Formbauteil 156 Teil von vier elektrostatischen Antrieben 132a, 132b, 132c und 132d ist.

Fig. 64 zeigt eine Vorrichtung, bei der das Formbauteil 124 einstückig mit der tragenden Struktur 16 gebildet ist.

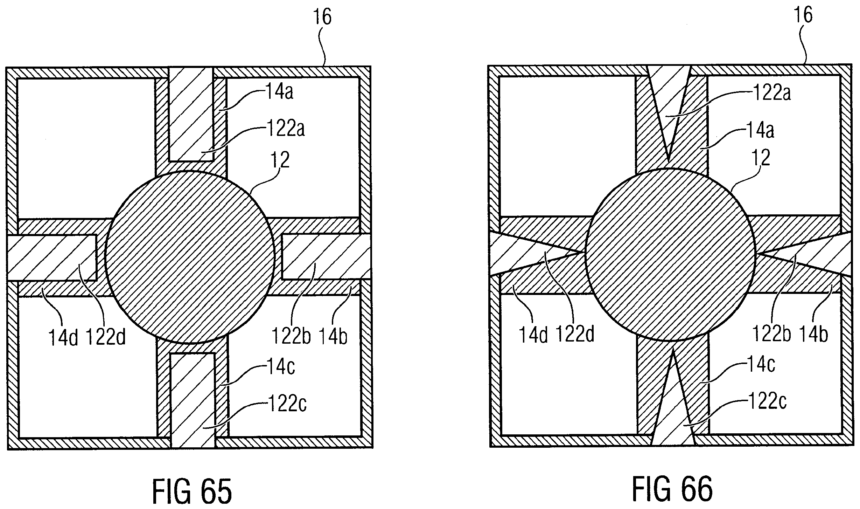

Fig. 65 zeigt Vorrichtung 30 aus Fig. 7, bei der auf Teilen der Stege 14a-d und Teilen der tragenden Struktur 16 rechteckig gebildete erste Elektroden 122a-d angeordnet sind.

Fig. 66 zeigt Vorrichtung 30, bei der auf Teilen der Stege 14a-d und Teilen der tragenden Struktur 16 dreieckig gebildete erste Elektroden 122a-d angeordnet sind, die sich von der tragenden Struktur 16 zur Linse 12 hin verjüngen.

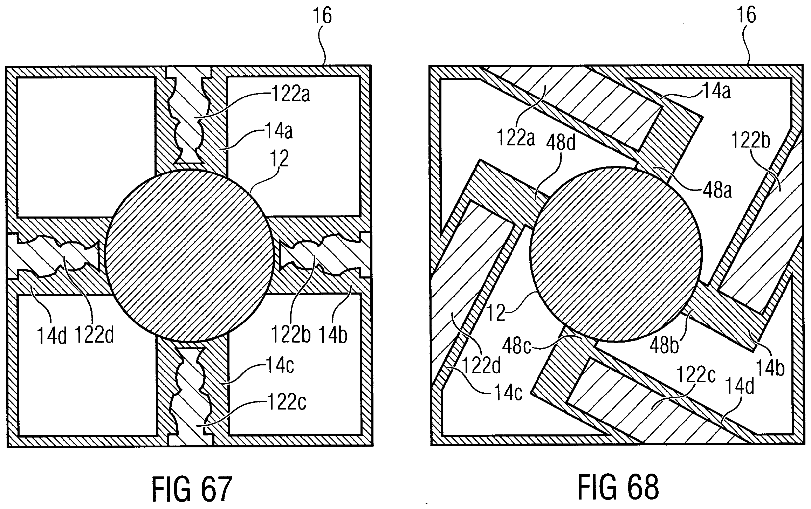

Fig. 67 zeigt Vorrichtung 30, bei der auf Teilen der Stege 14a-d und Teilen der tragenden Struktur 16 freiförmig gebildete erste Elektroden 122a-d angeordnet sind.

Fig. 68 zeigt eine Vorrichtung analog Fig. 11, bei der auf Teilen der Stege 14a-d und Teilen der tragenden Struktur 16 erste Elektroden 122a-d angeordnet sind, deren Außenkanten parallel zu den Stegen 14a-d verlaufen.

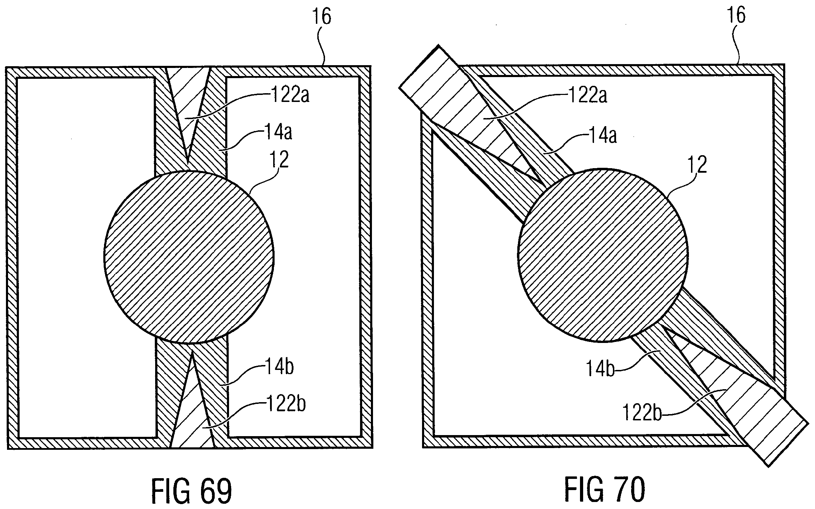

Fig. 69 zeigt eine Ausführungsform gemäß Fig. 8, bei der auf Teilen der Stege 14a und 14b und Teilen der tragenden Struktur 16 dreieckig gebildete erste Elektroden 122a und 122b angeordnet sind, die sich von der tragenden Struktur 16 zur Linse 12 hin verjüngen.

Fig. 70 zeigt eine Ausführungsform gemäß Fig. 9, bei der auf Teilen der Stege 14a und 14b und Teilen der tragenden Struktur 16 dreieckig gebildete erste Elektroden 122a und 122b angeordnet sind, die sich von der tragenden Struktur 16 zur Linse 12 hin verjüngen.

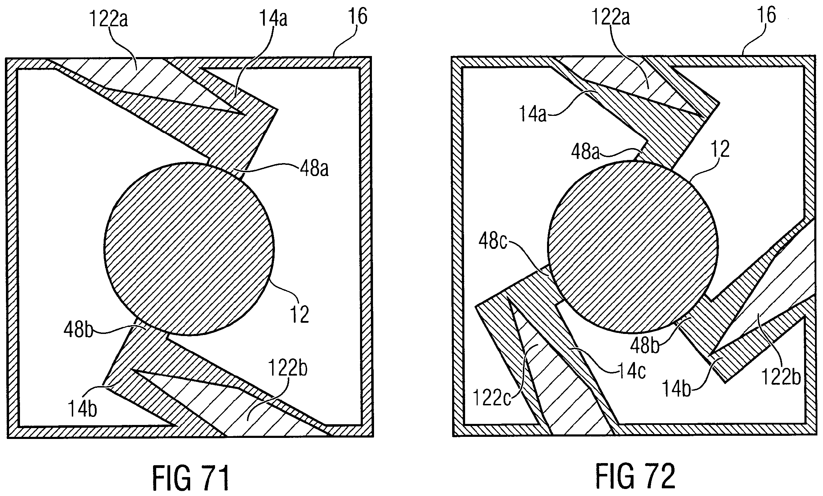

Fig. 71 zeigt eine Ausführungsform gemäß Fig. 11, bei der auf Teilen der Stege 14a und 14b und Teilen der tragenden Struktur 16 freiförmig gebildete erste Elektroden 122a und 122b angeordnet sind, die sich von der tragenden Struktur zur Linse 12 hin verjüngen.

Fig. 72 zeigt eine Ausführungsform gemäß Fig. 12, bei der auf Teilen der Stege 14a-c und Teilen der tragenden Struktur 16 freiförmig gebildete erste Elektroden 122a-c angeordnet sind, die sich von der tragenden Struktur zur Linse 12 hin verjüngen.

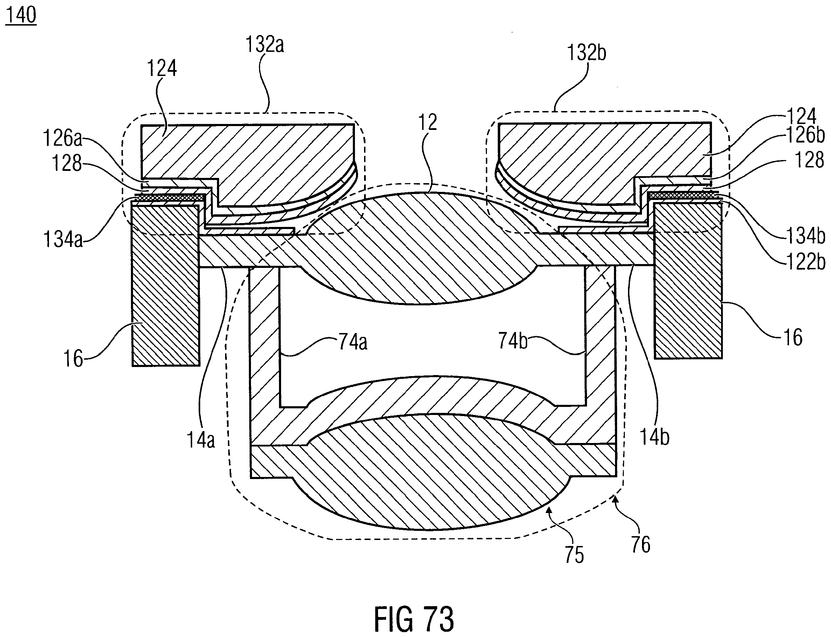

Fig. 73 zeigt eine Vorrichtung 140 gemäß Vorrichtung 120 aus Fig. 57c, bei der an den Stegen 14a und 14b analog Fig. 25 eine mitbewegte Linse 75 über weitere Strukturen 74a und 74b angeordnet ist und die Linse 12 und die mitbewegte Linse 75 einen Linsenstapel 76 bilden.

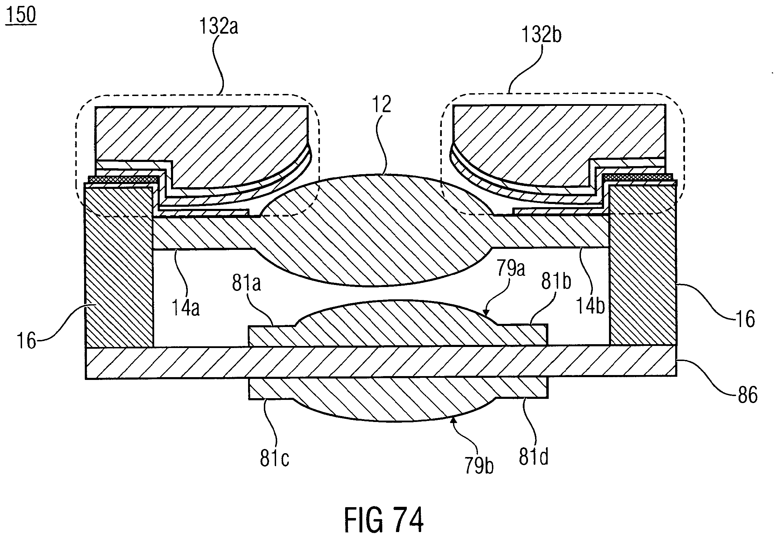

Fig. 74 zeigt eine Vorrichtung 150 gemäß Vorrichtung 70 aus Fig. 34, bei der benachbart zu den Stegen 14a und 14b elektrostatische Antriebe 132a und 132b angeordnet sind.

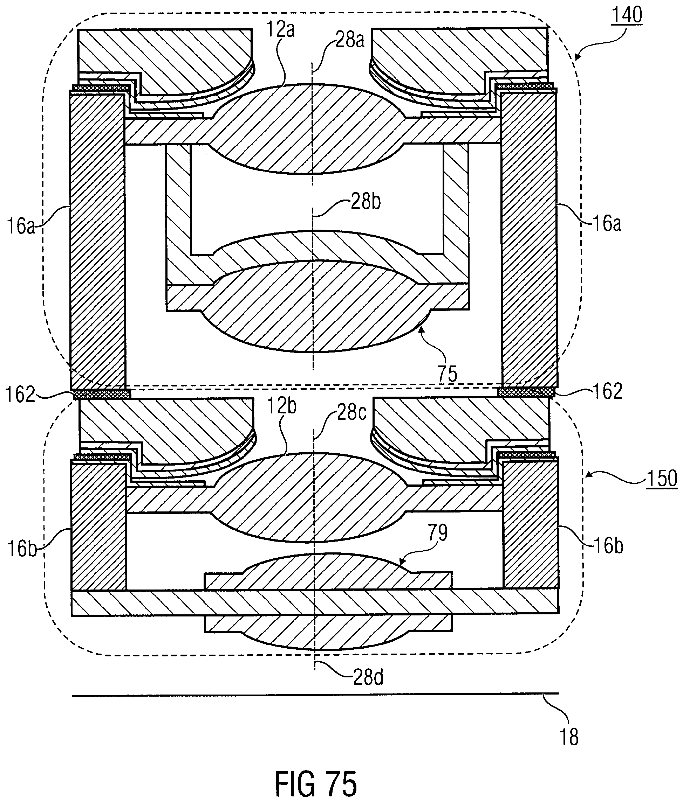

Fig. 75 zeigt Vorrichtung 140, an deren Oberfläche der tragenden Struktur 16a, die in Richtung der Bezugsebene 18 weist, Vorrichtung 150 über eine Klebschicht 162 derart gefügt ist, dass die optischen Achsen 28a-d der Linsen 12a, 12b, 75 und 79 im Wesentlichen übereinstimmen. Generell ist eine beliebige Kombination und Reihenfolge von Linsen 12, 75 und 79 und/oder den vorangegangen und nachfolgend erläuterten Vorrichtungen möglich.

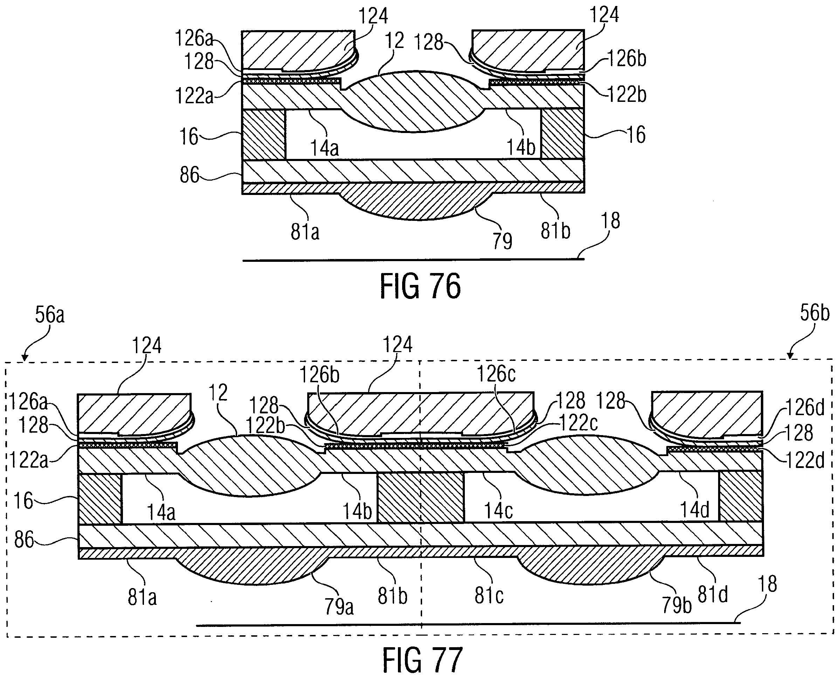

Fig. 76 zeigt eine Vorrichtung 160 analog Vorrichtung 150, bei der lediglich an der in Richtung der Bezugsebene 18 weisenden Oberfläche des Glaswafers 86 eine unbewegte Linse 79 und daran angeordneter Schichten 81a und 81b gebildet sind, wobei die unbewegte Linse 79 und die daran angeordneten Schichten 81a und 81b einstückig gebildet sind und sich über die gesamte Breite des Glaswafers 86 erstrecken. Die tragende Struktur 16 umfasst ein polymeres Material.

Fig. 77 zeigt eine Vorrichtung gemäß Vorrichtung 130 in Abwesenheit der Nuten 148 und der Federn 152, bei der die Zellen 56a und 56b jeweils im Sinne der Vorrichtung 160 ausgebildet sind und die unbewegte Linse 79a mit den daran angeordneten Schichten 81a und 81b und die unbewegte Linse 79b und die daran angeordneten Schichten 81c und 81d jeweils einstückig gebildet sind.

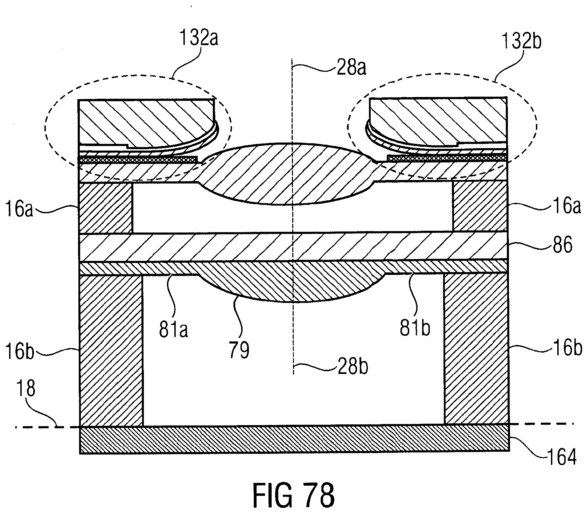

Fig. 78 zeigt eine Vorrichtung 170, die Vorrichtung 160 derart erweitert, dass an den an der unbewegten Linse 79 angeordneten Schichten 81a und 81b in Richtung der Bezugsebene 18 eine weitere tragende Struktur 16b angeordnet ist und die Bezugsebene 18 die der Linse 12 zugewandte Oberfläche eines Bildwandlers respektive Imagers 164 ist, der entlang der optischen Achse 28 am der unbewegten Linse 79 abgewandten Seite der weiteren tragenden Struktur 16b angeordnet ist.

Vorrichtung 170 bietet die Möglichkeit, eine Optik ohne aktive vorherige Justage auf einem Imager oder einem Bildwandler zu platzieren. Eine Anpassung einer optimalen Fokuslage und mithin der Ausgleich von Toleranzen und/oder Fertigungstoleranzen kann mittels einer Ansteuerung der elektrostatischen Antriebe 132a und 132b erfolgen. Weiterhin bietet sich mit diesem Ausführungsbeispiel die Möglichkeit, eine axiale Position der Linse 12 durch eine Ansteuerung der elektrostatischen Antriebe 132a und 132b ebenfalls zu ändern und somit unter anderem die von einem Objektabstand abhängige Fokuslage anzupassen, wie es in einem Autofokus geschieht. Hierzu kann möglicherweise eine Auswertung einer Bildaufnahme, welche in einem Bildwandler oder Imager durchgeführt wird, durch einen dafür ausgebildeten Algorithmus, wie es bei einem Autofokus üblich ist, durchgeführt werden.

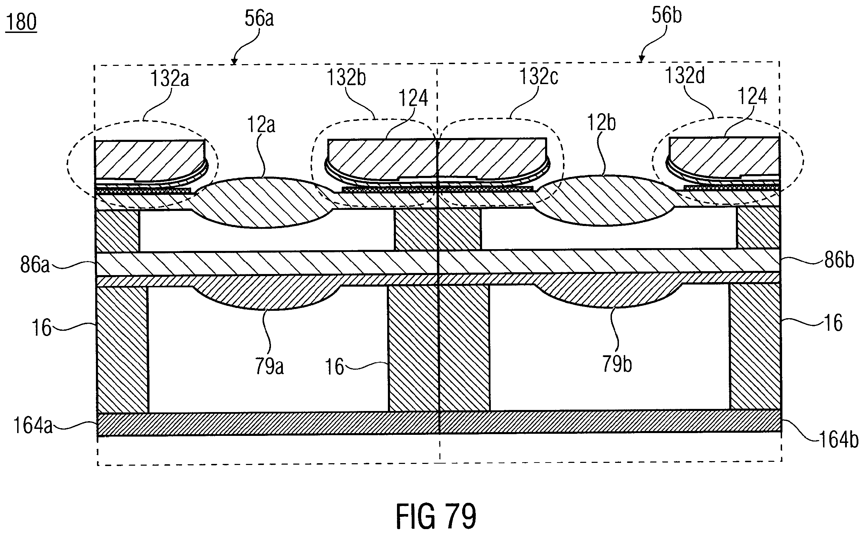

Fig. 79 zeigt eine Vorrichtung 180, die aus zwei nebeneinander angeordneten Zellen 56a und 56b, die jeweils als Vorrichtung 170 gebildet sind und deren Zellen 56a und 56b im Sinne der Vorrichtung 130 aus Fig. 77 aneinander angeordnet sind, wie es beispielsweise das Resultat eines Herstellungsprozesses der Vorrichtung auf Wafer-Level ist.

Hierdurch ist es möglich, eine Vielzahl von optischen Strukturen und Optiken im Verbund ohne eine vorherige aktive Justage auf einem Wafer mit einer Vielzahl von Bildwandlern/Imagern zu platzieren und eine Wafer-Level-Assembly durchzuführen. Nach erfolgter Wafer-Level-Assembly können die einzelnen optischen Module voneinander getrennt werden. Dies kann beispielsweise durch ein Zersägen stattfinden. Auch können mehrere optische Module eine Gruppe aus Einzelmodulen bilden, welche miteinander verbunden bleiben. So lassen sich Felder aus optischen Modulen erstellen, welche eine beliebige Ausdehnung haben können, beispielsweise 1x2, 2x2, 3x3 oder andere.

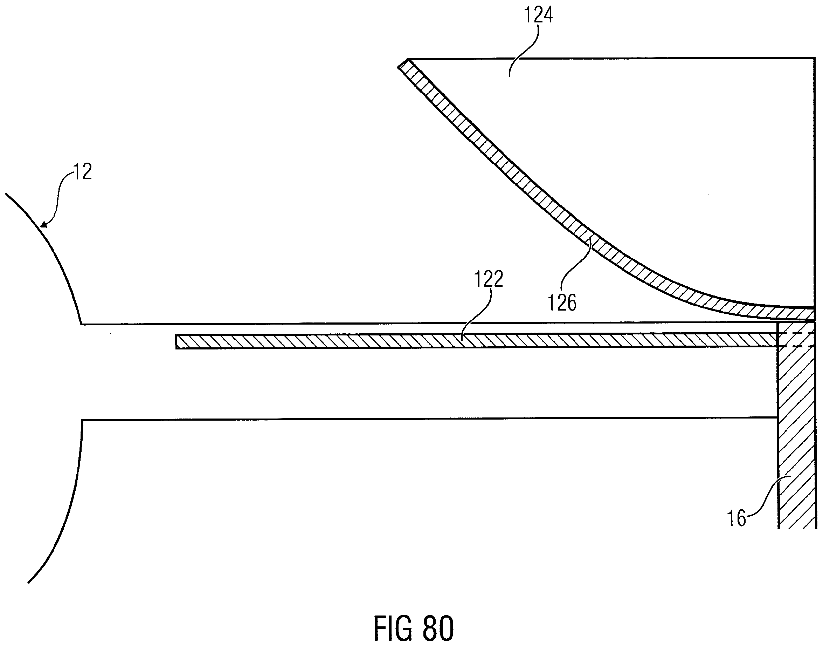

Fig. 80 zeigt eine Anordnung der ersten Elektrode 122 innerhalb des Steges 14 wobei die erste Elektrode 122 vom Material des Steges 14 auf der Seite, welche der zweiten Elektrode 126 zugewandt ist, vom Material des Steges 14 bedeckt ist. In dieser Ausführungsform fungiert das Material des Steges 14, welches zwischen der ersten Elektrode 122 und der zweiten Elektrode 126 angeordnet ist, gleichzeitig als Isolatorschicht 128.

Prinzipiell kann es von Vorteil sein, die Ausbildungen und die Anordnung der ersten und zweiten Elektroden 122 und 126 derart auf einander abzustimmen, dass sich ein linearisiertes Verhältnis von zwischen den Elektroden anliegender Spannung U und resultierender Auslenkung der Stege 14 und/oder der optischen Struktur ergibt. Eine solche Anpassung kann beispielsweise durch eine angepasste Geometrie der ersten oder zweiten Elektrode realisiert sein, die über eine axiale Ausdehnung unterschiedliche Breiten aufweist, sodass die Spannung U über den axialen Verlauf der Elektroden eine variable Kraft zwischen den Elektroden mittels eines variablen elektrischen Feldes erzeugt.

Obwohl der Durchmesser D3 als kleiner als der Durchmesser D4 dargestellt wurde, können die beiden Durchmesser D3 und D4 jedes Verhältnis zu einander aufweisen. Auch können die als Durchmesser dargestellten Aussparungen und Abstände eine andere Form aufweisen, beispielsweise oval oder rechteckig.

Die Formbauteile 124 und 156 können auch einstückig mit der tragenden Struktur 16 gebildet sein und bezeichnen generell Abschnitte, an denen eine zweite Elektrode 126 gemäß obiger Ausführungen zu einer ersten Elektrode angeordnet werden kann, also Elektrodenträger.

Die Umsetzung von elektrostatischen Antrieben kann auch mit einer alternativen Ausgestaltung der Elektroden erreicht werden, indem Teile der einen elektrostatischen Antrieb bildenden Stege mit einem inneren Teil ausgeformt werden. Nachfolgende Ausführungsbeispiele stellen eine alternative Ausführungsform elektrostatischer Antriebe für Stege optischer Strukturen dar. Die elektrostatischen Antriebe, die nachfolgend beschrieben werden, können jeweils eigenständig umgesetzt werden, wären aber auch mit den soeben schon beschriebenen kombinierbar. Im Prinzip stellen nachfolgend beschriebene Ausführungsbeispiele nur eine andere Struktur zur Umsetzung des elektrostatischen Wirkprinzips dar. Die Ansteuerung und die Ziele der Ansteuerung sind zu denjenigen gleich, wie sie bezüglich der vorhergehenden Ausführungsbeispiele beschrieben wurden. Nachfolgend beschriebene Ausführungsbeispiele weisen eine Ausgestaltung der Elektroden der elektrostatischen Antriebe dahingehend auf, dass lokal der Abstand zweier Elektroden zueinander durch die Ausbildung von Auslegern in einer der Elektroden eines elektrostatischen Antriebs minimiert wird, um die zu Ansteuerung des Antriebs erforderliche Spannung zum Erreichen einer mechanischen Auslenkung der Stege zu reduzieren und gleichzeitig auf ein gekrümmtes Formbauteil zu verzichten.

Fig. 81 zeigt eine Aufsicht auf eine Vorrichtung 200, mit einer Linse 12, welche über zwei Stege 14a und 14b an der tragenden Struktur 16 befestigt ist. Die Stege 14a und 14b umfassen Aussparungen, die einen Abschnitt 166a respektive 166b des Steges 14a respektive 14b teilweise freilegen, welcher ausgebildet ist, dass dieser aus der Ebene des Steges 14a respektive 14b herausragt und ein mit den Steg 14 verbundenes Ende aufweist.

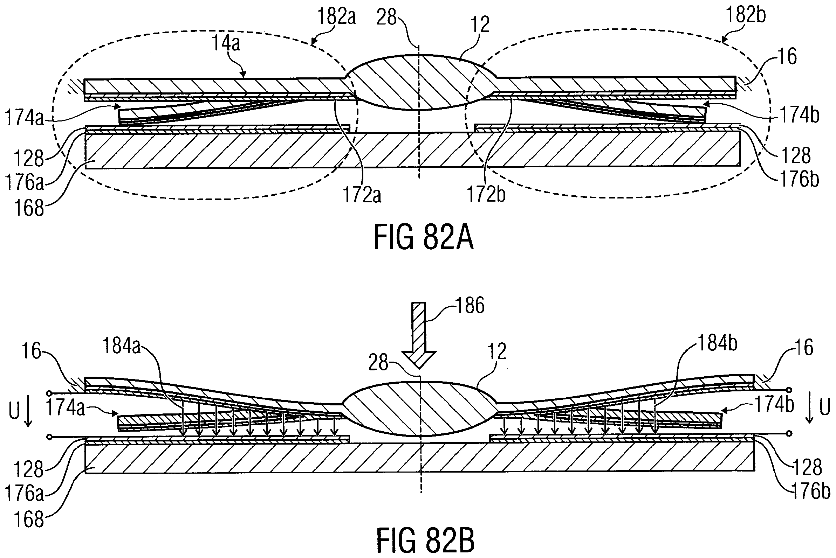

Fig. 82a zeigt eine Seitenansicht der Vorrichtung 200, bei der ein transparentes, eben ausgebildetes Formbauteil 168 entlang der optischen Achse 28 der Linse 12 angeordnet ist. Erste Elektroden 172a und 172b sind an der dem Formbauteil 168 zugewandten Seite der Stege 14a und 14b ausgebildet, sodass die Abschnitte 166a und 166b der Stege 14a und 14b je eine Auslegerelektrode 174a und 174b bilden. An der der Linse 12 zugewandten Seite des Formbauteils 168 ist sind zwei statische Elektroden 176a und 176b derart angeordnet, dass sie den Auslegerelektroden 174a und 174b zumindest teilweise gegenüberliegen und die auf der zu den Auslegerelektroden 174a und 174b hin weisenden Oberflächen der statischen Elektroden 176a und 176b von einer Isolatorschicht 128 bedeckt sind. Die Auslegerelektroden 174a und 174b ragen aus der Ebene der Stege 14a und 14b heraus und liegen am der Linse 12 abgewandten Ende benachbart zur Isolatorschicht 128 an. Der Ort, an dem die Auslegerelektroden 174a und 174b die Isolatorschicht 128 berühren, stellt einen Ort minimalen Abstandes zwischen der Auslegerelektrode 174a respektive 174b und den statischen Elektroden 176a respektive 176b dar, von dem aus der Abstand in Richtung der Linse 12 kontinuierlich zunimmt. Der Steg 14a, die Auslegerelektrode 174a, die statische Elektrode 176a und die Isolatorschicht 128 bilden so wie der Steg 14b, die Auslegerelektrode 174b, die statische Elektrode 176b und die Isolatorschicht je einen elektrostatischen Antrieb 182a respektive 182b.

Fig. 82b zeigt das Verhalten der Vorrichtung 200 bei Anlegen einer elektrischen Spannung zwischen der Auslegerelektrode 174a und der statischen Elektrode 176a respektive der Auslegerelektrode 174b und der statischen Elektrode 176b. Innerhalb des elektrischen Antriebs 182a respektive 182b bildet sich ein elektrisches Feld 184a respektive 184b aus, welches zu einer anziehenden Kraft zwischen den Auslegerelektroden und den statischen Elektroden führt. Durch die Anordnung der statischen Elektroden 176a und 176b auf dem Formbauteil 168 sind diese gegenüber den Auslegerelektroden 174a und 174b unbeweglich. Fig. 82b zeigt eine Verformung der Stege 14a und 14b sowie der Auslegerelektroden 174a und 174b durch die den elektrischen Feldern 184a und 184b inhärente Kräfte, welche zu einer Verschiebung 186 der Linse 12 in Richtung des Formbauteils 168 führt, womit sich der Abstand zwischen der Auslegerelektrode 174a respektive 174b und der statischen Elektrode 176a respektive 176b zumindest in dem Bereich, in dem sich die Elektroden überlappen, ändert.

Je nach Polarität des elektrischen Feldes kann auch eine abstoßende Kraft zwischen den beiden Elektroden erzeugt werden, was zur Verschiebung 186 der Linse 12 weg von Formbauteil 168 führt. Mit einer Anordnung eines elektrostatischen Antriebes 182 kann eine einfachere Umsetzung der statischen Elektroden erreicht werden, was fertigungstechnische Vorteile ermöglicht. Gleichzeitig kann anstelle eines gekrümmten Formbauteils 124 ein ebenes Formbauteil 168 genutzt werden.

Prinzipiell kann es von Vorteil sein, die Ausbildungen und die Anordnung der Auslegerelektrode und der statischen Elektroden 174a/b und 176a/b derart auf einander abzustimmen, dass sich ein linearisiertes Verhältnis von zwischen den Elektroden anliegender Spannung U und resultierender Auslenkung der Stege 14 und/oder der optischen Struktur ergibt. Eine solche Anpassung kann beispielsweise durch eine angepasste Geometrie der Auslegerelektrode oder der statischen Elektrode realisiert sein, die über eine axiale Ausdehnung unterschiedliche Breiten aufweist, sodass die Spannung U über den axialen Verlauf der Elektroden eine variable Kraft zwischen den Elektroden mittels eines variablen elektrischen Feldes erzeugt.

Die elektrostatischen Antriebe erlauben die Durchführung einer initialen Justage zur Kompensation von Fertigungstoleranzen als auch eine dynamische Fokussierung im laufenden Betrieb. Der Betrieb der elektrostatischen Antriebe kann die Eigenschaft der Stege, temperaturbedingte Änderungen optischer Charakteristika einer Linse selbsttätig zu kompensieren, im Sinne einer Fokussierung auf wechselnde, für die Linse relevante Objektabstände erfolgen.

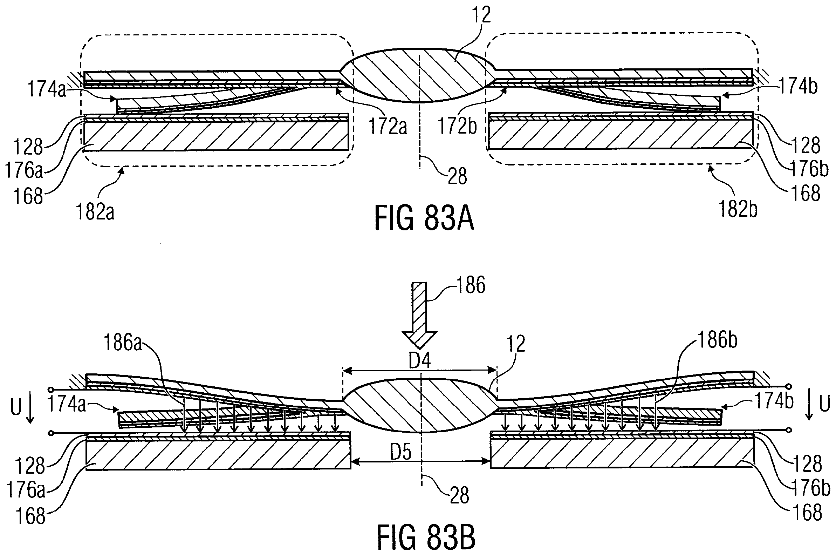

Fig. 83a und 83b zeigen Vorrichtung 200 bei der der Formbauteil 168 opak ausgeführt ist und der eine Materialaussparung mit einen Durchmesser D5 umfasst, der im Wesentlichen dem Durchmesser D4 der Linse 12 entspricht.

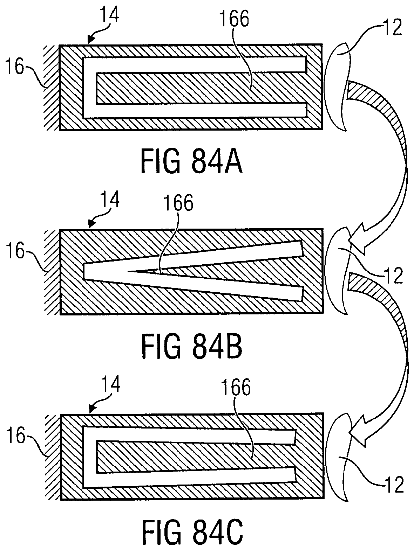

Fig. 84a zeigt den an der tragenden Struktur 16 befestigten Steg 14, der einen rechteckig geformten Abschnitt 166 umfasst, dessen mit dem Steg 14 verbundenes Ende benachbart zur Linse 12 angeordnet ist. Fig. 84b zeigt den an der tragenden Struktur 16 befestigten Steg 14, der einen dreieckig geformten Abschnitt 166 umfasst, der sich zur tragenden Struktur 16 hin verjüngt und dessen mit dem Steg 14 verbundenes Ende benachbart zur Linse 12 angeordnet ist. Fig. 84c zeigt den an der tragenden Struktur 16 befestigten Steg 14, der einen Abschnitt 166 in Form eines gleichschenkligen Trapezes umfasst, das sich zur Linse 12 hin verjüngt und dessen mit dem Steg 14 verbundenes Ende zur Linse 12 angeordnet ist.

Prinzipiell ist jede denkbare Form der Ausgestaltung eines Abschnitts 166 aus der Fläche eines Steges 14 vorstellbar.

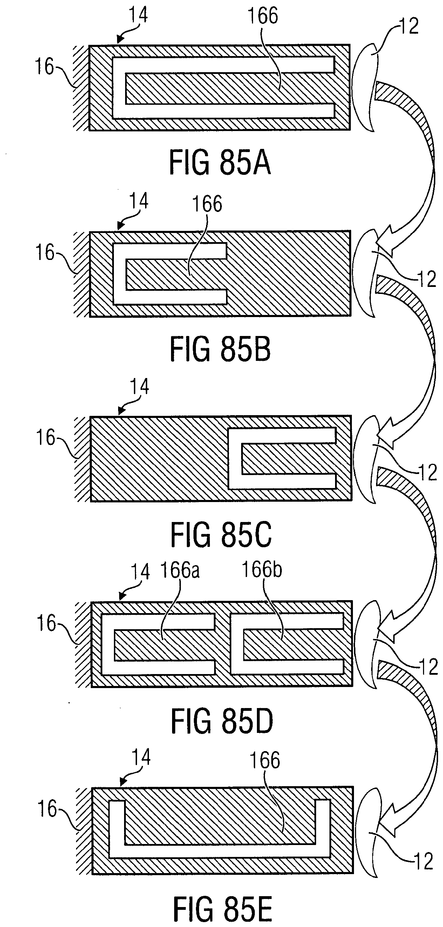

Fig. 85a zeigt eine zu Fig. 84a identische Form des Abschnitts 166 des Steges 14. Fig. 85b zeigt einen gegenüber Fig. 85a verkleinerten Abschnitt 166, der benachbart zur tragenden Struktur 16 im Steg 14 positioniert ist. Fig. 85b zeigt einen gegenüber Fig. 85a verkleinerten Abschnitt 166, der benachbart zur Linse 12 im Steg 14 positioniert ist. Fig. 85d zeigt einen Steg 14, der zwei Abschnitte 166a und 166b umfasst und der Abschnitt 166a benachbart zur tragenden Struktur 16 und der Abschnitt 166b benachbart zur Linse 12 im Steg 14 angeordnet ist. Fig. 85e zeigt einen Abschnitt 166, dessen mit dem Steg 14 verbundenes Ende parallel zur äußeren Kante des Steges 14 entlang der Richtung von der tragenden Struktur 16 hin zur Linse 12 verläuft.

Die Ausdehnung, Anzahl, Anordnung und Ausrichtung der Abschnitt 166 in den Stegen 14 ist für eine Funktionsweise der Vorrichtung beliebig.

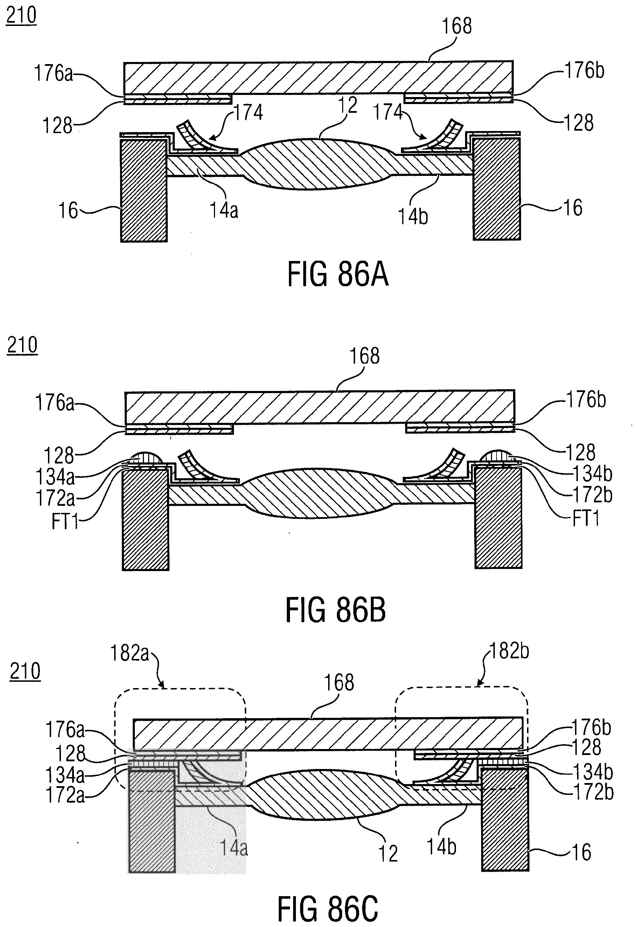

Fig. 86a zeigt eine Vorrichtung 210, analog Vorrichtung 120 bei der die Stege 14a und 14b analog den Fig. 82 und 83 ausgebildet sind, Auslegerelektroden 174a und 174b auszubilden und bei der die Vorrichtung anstelle des Formbauteils 124 mit den daran angeordneten Elektroden 126a und 126b das Formbauteil 168 mit den statischen Elektroden 176a und 176b und der Isolatorschicht 128 umfasst.

Fig. 86b zeigt die Anordnung eines ausheilbaren Klebers 134a und 134b benachbart zur Oberfläche FT1, über welchen das Formbauteil 168 an die tragende Struktur 16 gefügt wird. Fig. 86c zeigt den gefügten Zustand der Vorrichtung, bei der die elektrostatischen Antriebe 182a und 182b derart ausgeführt sind, dass im Bereich zwischen der Fläche FT1 und dem Formbauteil 168 lediglich die jeweils erste Elektrode 172a/172b, die statische Elektrode 176a/176b, die Isolatorschicht 128 sowie der Kleber 134a/134b ausgebildet ist.

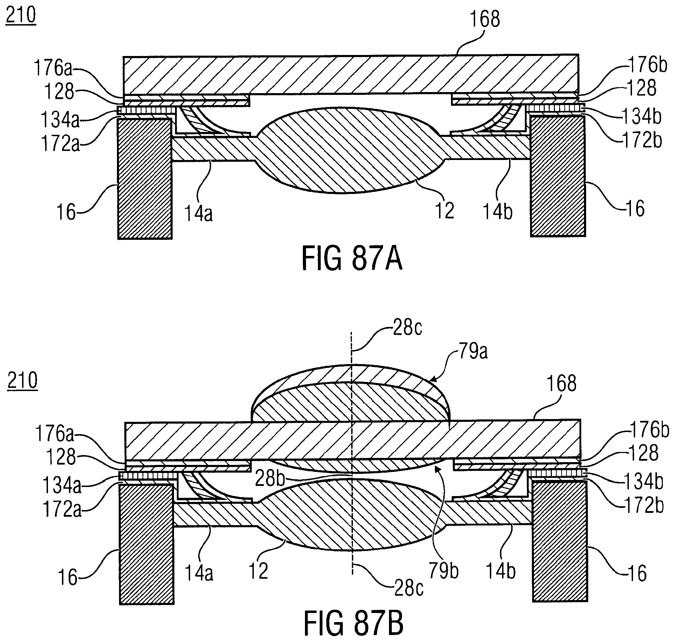

Fig. 87a zeigt Vorrichtung 210, bei der das Formbauteil 168 als Glasplatte ausgeführt ist.

Fig. 87b zeigt Vorrichtung 210 gemäß Fig. 80a, bei der das Formbauteil an der der Linse 12 abgewandten Oberfläche eine einschichtige unbewegliche Linse 86a und an der gegenüberliegenden, der Linse 12 abgewandten Oberfläche eine zweischichtige unbewegliche Linse 86b umfasst und die optischen Achsen 28a, 28b und 28c im Wesentlichen übereinstimmen. Die unbewegten Linsen 79a und 79b bilden dabei einen Linsenstapel auf dem Formbauteil 168.

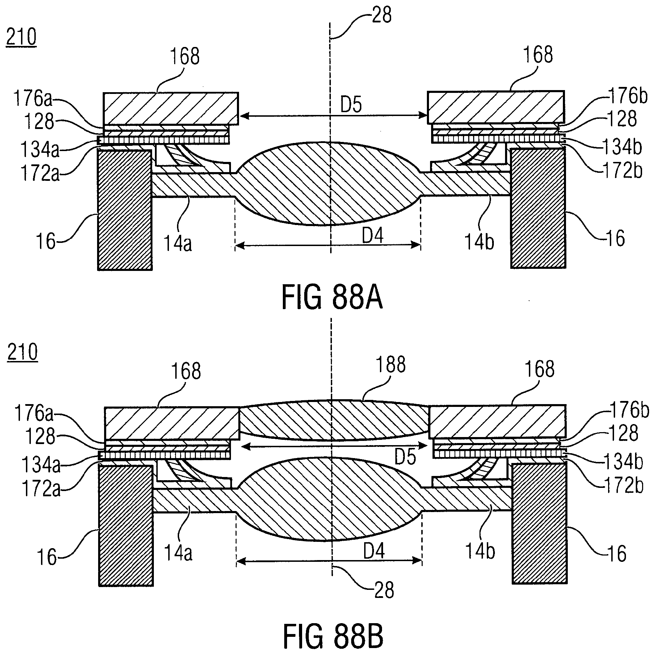

Fig. 88a zeigt Vorrichtung 210, bei der das Formbauteil 168 als opaker Körper mit dem Durchmesser D5 ausgeführt ist und die Materialaussparung im Wesentlichen konzentrisch um die optische Achse 28 der Linse 12 ausgebildet ist.

Fig. 88b zeigt Vorrichtung 210 gemäß Fig. 81a, bei der im Bereich des Durchmessers D5 eine optische Wirkfläche 188 angeordnet ist und die optische Achse 28b der optischen Wirkfläche 188 mit der optischen Achse 28a der Linse 12 im Wesentlichen übereinstimmt. Vorliegendes Ausführungsbeispiel stellt die optische Wirkfläche als Linse dar, es kann sich jedoch um eine beliebige optische Struktur gemäß vorherigen Ausführungen handeln.

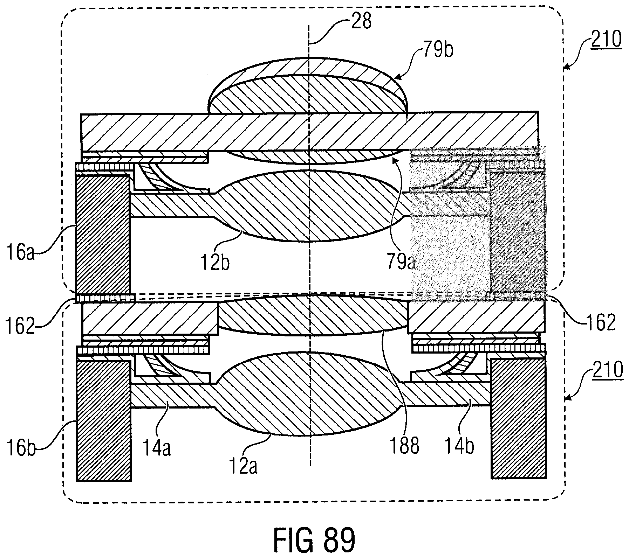

Fig. 89 zeigt eine Vorrichtung gemäß Fig. 88b, an die über die Klebschicht 162 eine Vorrichtung 210 gemäß Fig. 87 derart angeordnet ist, dass die optischen Achsen der Linsen 12a und 12b, der unbewegten Linsen 79a und 79b sowie der optischen Wirkfläche 188 im Wesentlichen übereinstimmen.

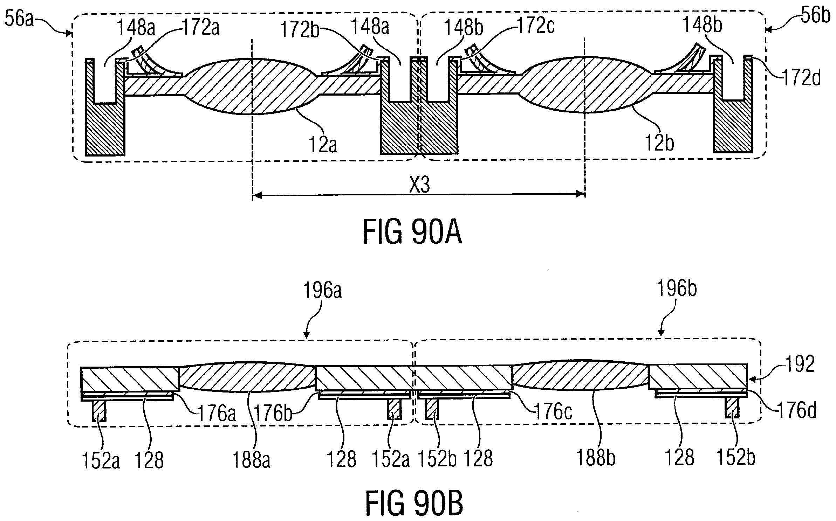

Fig. 90a zeigt den Querschnitt zweier nebeneinander liegender Zellen 56a und 56b, die je im Sinne der Vorrichtung 210 aus Fig. 86a ausgeführt sind, bei der die Zellen 56a und 56b den Abstand X3 zueinander aufweisen und bei der die tragende Struktur 16 analog Fig. 62a Nuten 148a und 148b umfasst.

Fig. 90b zeigt den Querschnitt eines ungefügten Formbauteils 192, bei welchem jeder der beiden Abschnitte 196a und 196b dem Formbauteil 168 mit angeordneten statischen Elektroden 176, Isolatorschicht 128 und optischer Wirkfläche 188 aus Vorrichtung 88b entspricht. Die beiden Abschnitte 196a und 196b des Formbauteils 168 sind einstückig gebildet. Das Formbauteil umfasst zudem Federn 152a und 152b, die ausgebildet sind, an den Nuten 148a und 148b angeordnet zu werden.

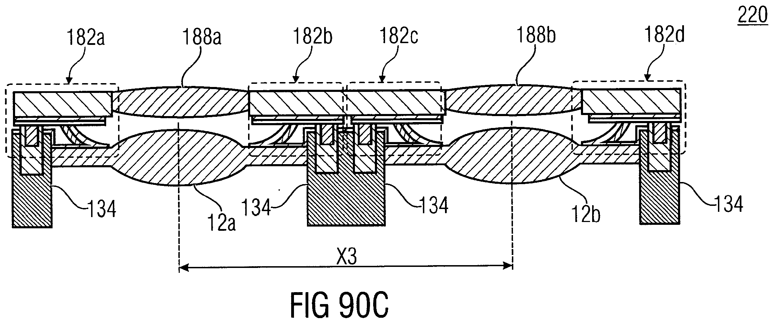

Fig. 90c zeigt eine Vorrichtung 220, die aus den Zellen 56a und 56b der Fig. 83a und dem Formbauteil 192 aus Fig. 90b, bei der die Federn 152a und 152b an den Nuten 148a und 148b angeordnet und über einen Klebstoff 134 gefügt sind, die Vorrichtung vier elektrostatische Antriebe 182a-d umfasst und die peripheren Strukturen Nuten 148a-b und Federn 152a-d die Fügezone zwischen Formbauteil 168 und tragender Struktur 16 definieren.

Gemäß dem Ausführungsbeispiel aus Fig. 90 ist es möglich, mehrere Zellen 56 nebeneinander zu fertigen, die einen identischen oder für jedes benachbarte Zellenpaar individuellen Abstand X3 haben können.

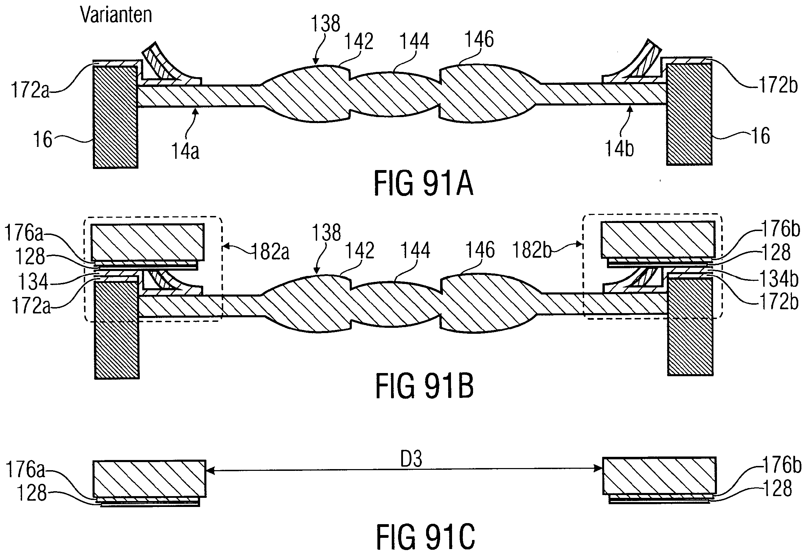

Fig. 91 zeigt eine Vorrichtung analog Fig. 61, bei der die elektrostatischen Antriebe in Form der elektrostatischen Antriebe 182a und 182b ausgeführt sind.

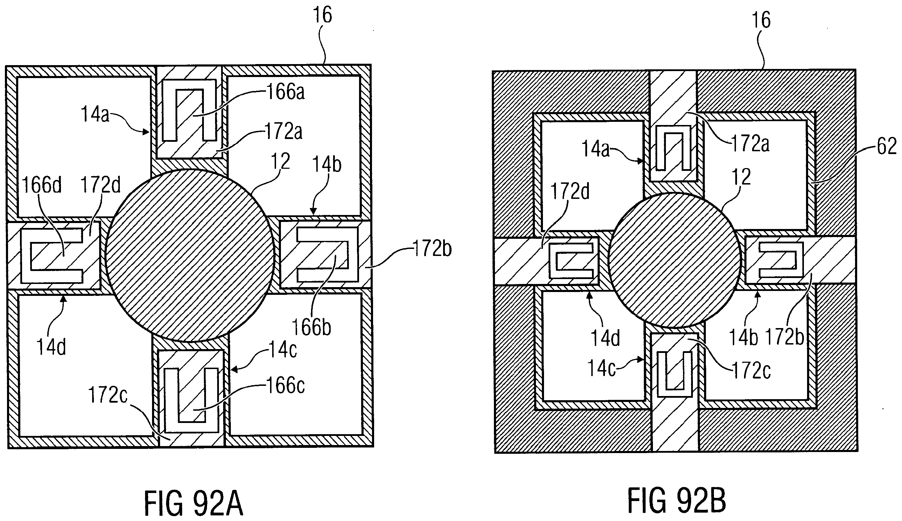

Fig. 92a zeigt Vorrichtung 30 aus Fig. 7, bei der an Teilen der Stege 14a-d und Teilen der tragenden Struktur 16 rechteckig gebildete erste Elektroden 172a-d angeordnet sind, die jeweils einen Abschnitt 166a-d gemäß Fig. 84a umfassen. Fig. 92b zeigt selbige Vorrichtung, bei der die Stege 14 in einem innliegenden Rahmen 62 münden, welcher Teil der tragenden Struktur 16 ist.

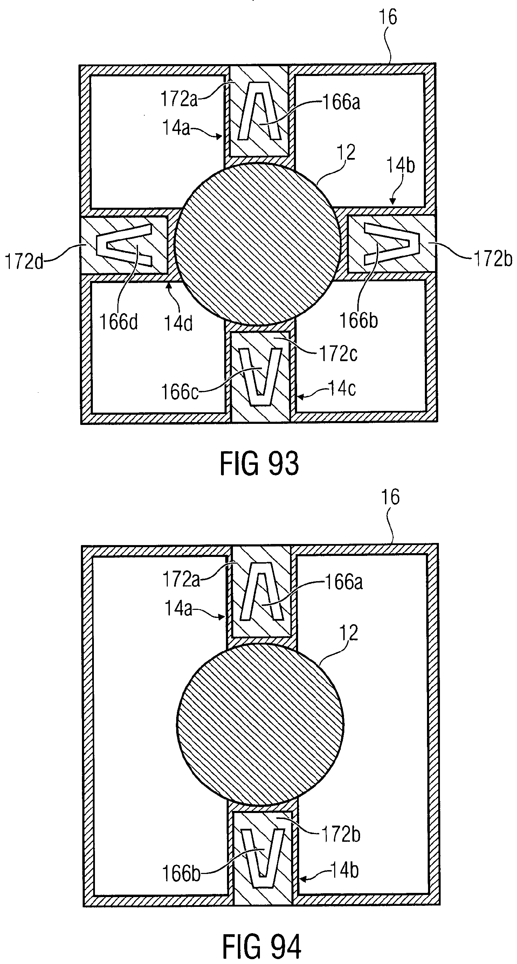

Fig. 93 zeigt Vorrichtung 30 aus Fig. 7, bei der an Teilen der Stege 14a-d und Teilen der tragenden Struktur 16 rechteckig gebildete erste Elektroden 172a-d angeordnet sind, die jeweils einen trapezförmig gebildeten Abschnitt 166a-d umfassen, der sich zur tragenden Struktur 16 hin verjüngt und dessen mit dem jeweiligen Steg 14a-d verbundenes Ende benachbart zur Linse 12 angeordnet ist.

Fig. 94 zeigt eine Ausführungsform gemäß Fig. 93, bei der lediglich zwei gegenüberliegende Stege 14a-b ausgebildet sind.

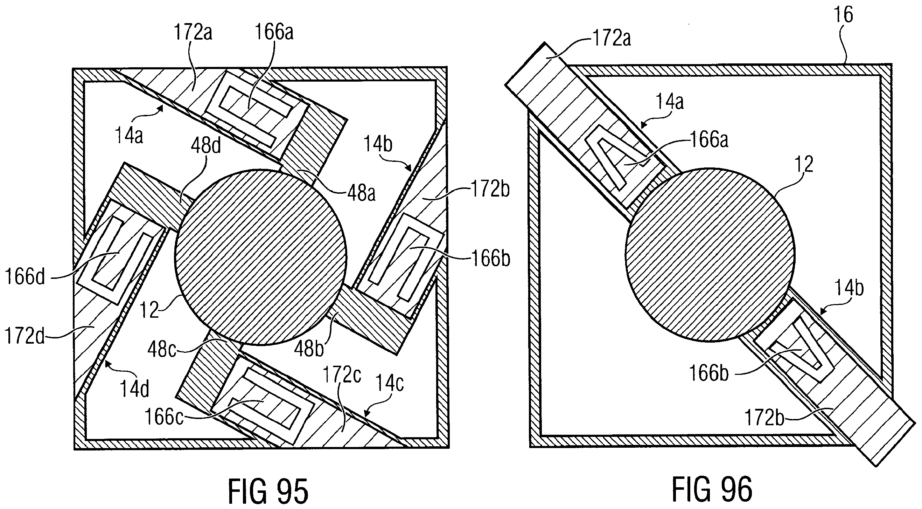

Fig. 95 zeigt eine Vorrichtung analog Fig. 11 bei der an Teilen der Stege 14a-d und Teilen der tragenden Struktur 16 erste Elektroden 172a-d angeordnet sind, deren Außenkante parallel zu den Außenkanten der Stege 14a-d verlaufen und die je einen Abschnitt 166a-d gemäß Fig. 84a umfassen, dessen mit dem jeweiligen Steg 14a-d verbundenes Ende benachbart zur Linse 12 angeordnet ist.

Fig. 96 zeigt eine Ausführungsform gemäß Fig. 70, bei der die ersten Elektroden 172a-b jeweils einen trapezförmigen Abschnitt 166a-b umfassen, der sich zur tragenden Struktur hin verjüngt und dessen mit dem jeweiligen Steg 14a und b verbundenes Ende benachbart zur Linse 12 angeordnet ist.

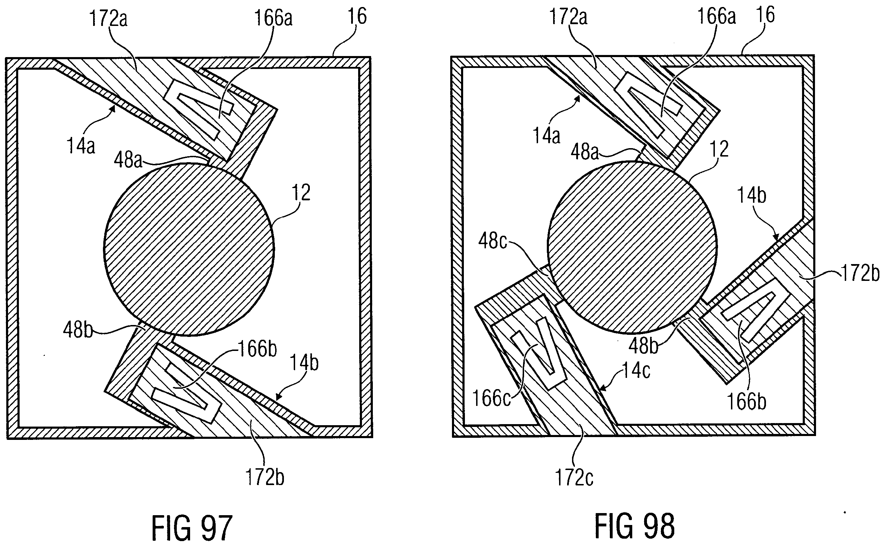

Fig. 97 zeigt eine Ausführungsform gemäß Fig. 11, bei der die ersten Elektroden 172a-b jeweils einen trapezförmigen Abschnitt 166a-b umfassen, der sich zur tragenden Struktur hin verjüngt und dessen mit dem jeweiligen Steg 14a-d verbundenes Ende benachbart zur Linse 12 angeordnet ist.

Fig. 98 zeigt eine Ausführungsform gemäß Fig. 12, bei der die ersten Elektroden 172a-c jeweils einen trapezförmigen Abschnitt 166a-c umfassen, der sich zur tragenden Struktur hin verjüngt und dessen mit dem jeweiligen Steg 14a-c verbundenes Ende benachbart zur Linse 12 angeordnet ist.

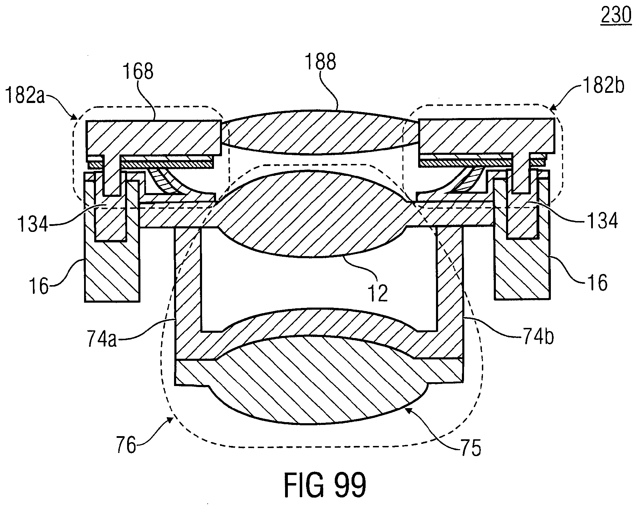

Fig. 99 zeigt eine Vorrichtung 230 gemäß Vorrichtung 210 aus Fig. 88b, bei der das Formbauteil 168 analog Fig. 90c über eine Nut 148, eine Feder 152 und Klebstoff 134 mit der tragenden Struktur 16 gefügt ist und bei der an den Stegen 14a und 14b analog Fig. 25 eine mitbewegte Linse 75 über weitere Strukturen 74a und 74b angeordnet ist und die Linse 12 und die mitbewegte Linse 75 einen Linsenstapel 76 bilden.

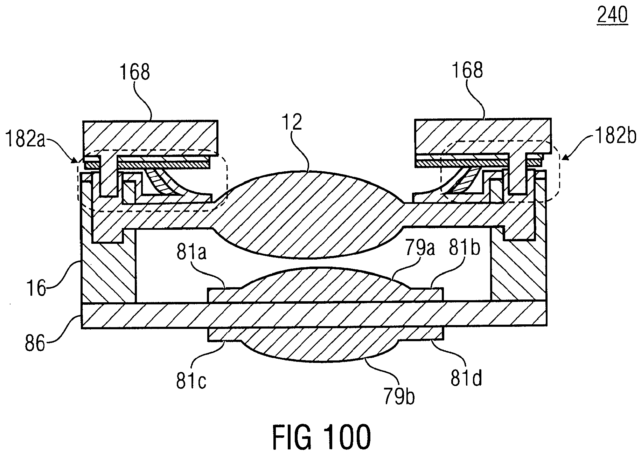

Fig. 100 zeigt eine Vorrichtung 240 gemäß Vorrichtung 210 aus Fig. 88a, bei der das Formbauteil 168 analog Fig. 90c über eine Nut 148, eine Feder 152 und Klebstoff 134 mit der tragenden Struktur 16 gefügt ist und am dem Formbauteil 168 abgewandten Ende der tragenden Struktur 16 gemäß Vorrichtung 70 ein Glaswafer 86 angeordnet ist, an welchem an der der Linse 12 zugewandten und an der der Linse 12 abgewandten Seite je eine unbewegte Linse 79a-b mit daran angeordneten Schichten 81a-b und 81c-d ausgeformt sind, wobei die Schichten beabstandet von der tragenden Struktur 16 angeordnet sind.

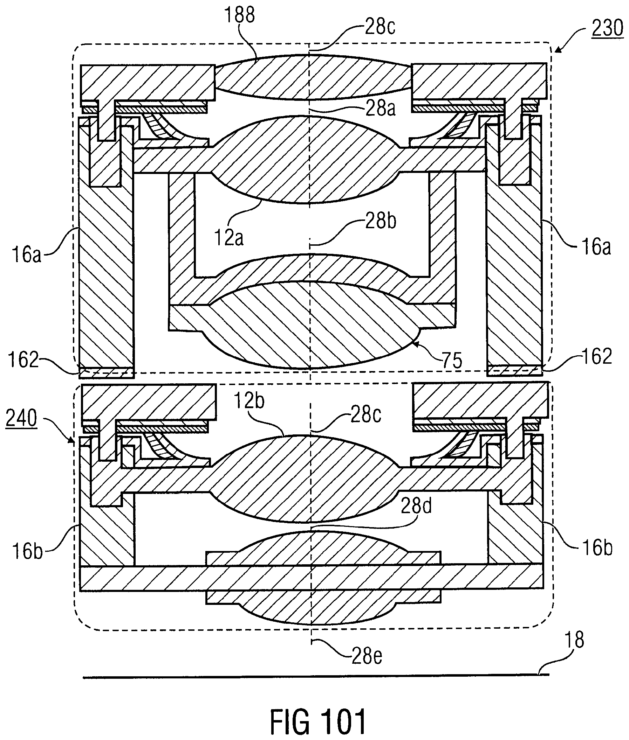

Fig. 101 zeigt Vorrichtung 230, an deren Oberfläche der tragenden Struktur 16a, die in Richtung der Bezugsebene 18 weist, Vorrichtung 240 über eine Klebschicht 162 derart gefügt ist, dass die optischen Achsen 28a-e der Linsen 12a, 12b, 75 und 79a und 79b im Wesentlichen übereinstimmen. Generell ist eine beliebige Kombination und Reihenfolge von Linsen 12, mitbewegten Linsen 75 und unbewegten Linsen 79 sowie optischer Wirkflächen 188 und/oder den erläuterten Vorrichtungen möglich.

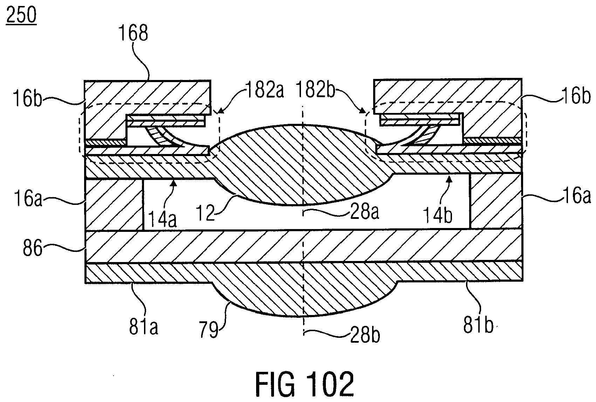

Fig. 102 zeigt eine Vorrichtung 250 analog Fig. 81a, bei der die tragende Struktur 16 aus einem polymeren Werkstoff gebildet ist und am der Linse 12 abgewandten Ende der tragenden Struktur 16 ein Glaswafer 86 angeordnet ist, dessen der Linse 12 abgewandte Oberfläche eine unbewegte Linse 79 mit angeordneten Schichten 81a und 81b umfasst, welche sich von der unbewegten Linse 79 aus zu den äußeren Enden des Glaswafers 86 erstrecken. Die beiden optischen Achsen 28a der Linse 12 und 28b der unbewegten Linse 79 stimmen im Wesentlichen überein.

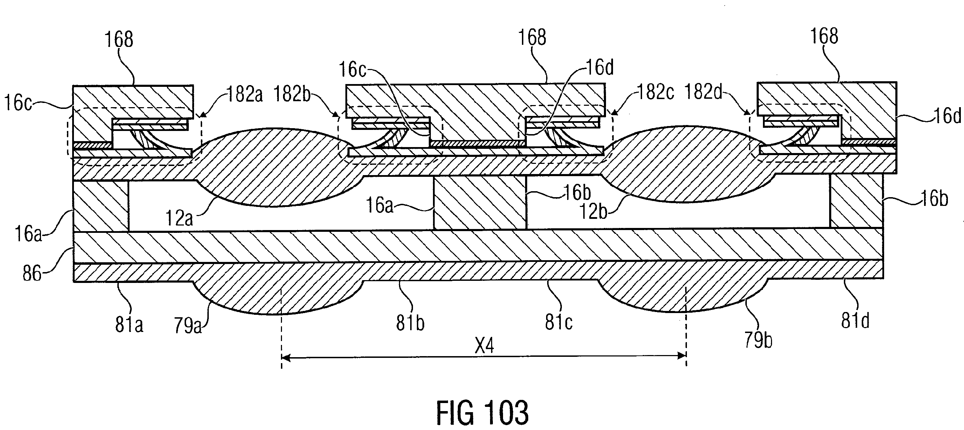

Fig. 103 zeigt eine Vorrichtung bei der zwei Zellen 56a und 56b nebeneinander mit einem Abstand X4 zueinander angeordnet sind, analog Vorrichtung 220. Die beiden Zellen 56a und 56b sind analog Vorrichtung 250 ausgebildet. Die unbewegte Linse 79a mit den daran angeordneten Schichten 81a und 81b, die unbewegte Linse 79b mit den daran angeordneten Schichten 81c und 81d sowie die Teile 16a und 16b der tragenden Struktur 16 sind jeweils einstückig gebildet.

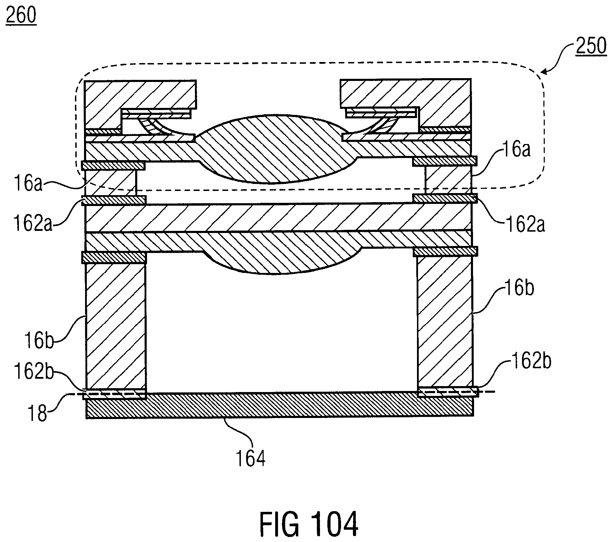

Fig. 104 zeigt eine Vorrichtung 260, die Vorrichtung 150 derart erweitert, dass zwischen den an der unbewegten Linse 79 angeordneten Schichten 81a und 81b und der Bezugsebene 18 eine weitere tragende Struktur 16b angeordnet ist und die Bezugsebene 18 die der Linse 12 zugewandte Oberfläche des Bildwandlers respektive Imagers 164 ist, der entlang der optischen Achse 28 am der unbewegten Linse 79 abgewandten Seite der weiteren tragenden Struktur 16b angeordnet ist.

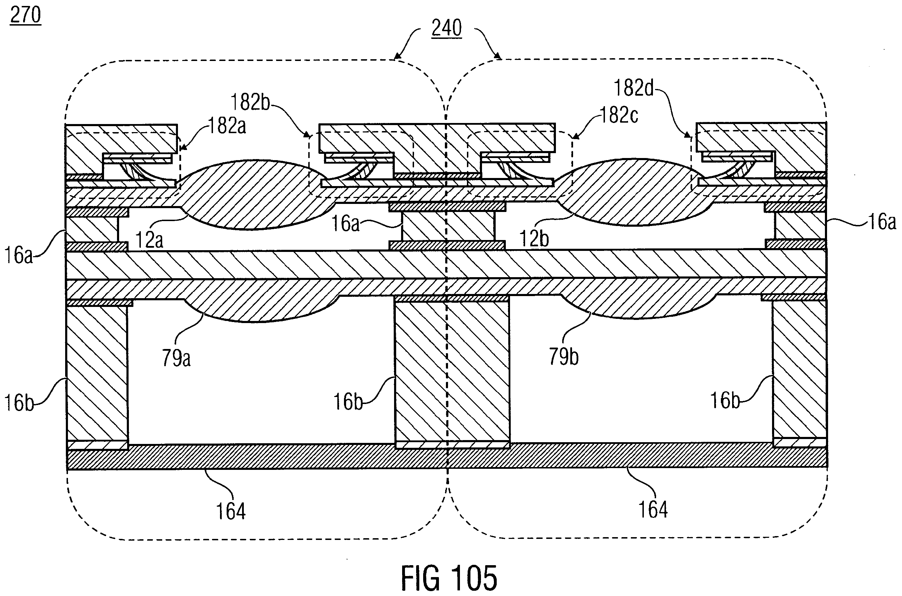

Fig. 105 zeigt eine Vorrichtung 270, die aus zwei nebeneinander angeordneten Vorrichtungen 260 gebildet ist und deren Zellen im Sinne der Vorrichtung 220 aus Fig. 97 aneinander gefügt sind. Vorrichtung 270 stellt beispielhaft den Zustand zweier benachbarter Zellen 56 nach deren Fertigung im Vielfachnutzen auf Wafer-Level dar. Nach erfolgter Fertigung besteht die Möglichkeit, die Zellen voneinander zu trennen oder sie im Sinne mehrerer Kanäle eines optischen Gesamtsystems nebeneinander angeordnet zu belassen.

Die in obigen Ausführungsbeispielen beschriebenen Komponenten, insbesondere thermisch beeinflussbare Stege, Heizelemente zur Erwärmung der Stege, Kleber zur Fixierung einer neuen Initialposition sowie elektrostatische Antriebe zur Auslenkung der Stege mit gekrümmtem Formbauteil oder Auslegerelektrode sind in Vorrichtungen mit einander kombinierbar.

Obwohl in vorangegangenen Ausführungsbeispielen stets Klebschichten 78 und 92 zur Fügung unterschiedlicher Segmente von weiteren Strukturen 74 und der tragenden Struktur 16 dargestellt wurden, können die Schichten 78 und 92 prinzipiell auch andere fügende Stoffe oder Materialien umfassen, beispielsweise Grenzschichten, die durch thermisches Verschmelzen der jeweiligen Segmente entstehen.

Linsenstapel 78 können neben Glaswafern 86 auch Spacerwafer umfassen, die einen definierten Abstand zwischen zwei benachbarten Elementen einer Vorrichtung definieren.

Obwohl in vorangegangenen Ausführungsbeispielen stets Linsen oder Linsenfelder an den Stegen und/oder der tragenden Struktur dargestellt wurden, kann es sich hierbei, wie bereits angedeutet, prinzipiell um jedwede Form optischer Strukturen und/oder Elemente wie Asphären, Freiformflächen, diffraktive Strukturen, Spiegel, Prismen oder Linsenarrays handeln. Linsenarrays können aus mehreren gleichen oder unterschiedlichen, auch beliebig kombinierbaren, gerade aufgelisteten optischen Elementen bestehen. Jedes optische Element kann transparente, reflektierende oder absorbierende Bereiche umfassen, die sich zusätzlich in den spektralen Bereichen oder der Polarisationswirkung unterscheiden können.

Obwohl in vorangegangenen Ausführungsbeispielen die ersten Elektroden 122 und die zweiten Elektroden 126 stets von einer Isolatorschicht 128 beabstandet wurden, ist prinzipiell jeder mögliche Abstandshalter denkbar, bspw. auch Luft.

Obwohl in vorangegangenen Ausführungsbeispielen die Auslegerelektroden Elektroden 174 und die statischen Elektroden 176 stets von einer Isolatorschicht 128 beabstandet wurden, ist prinzipiell jeder mögliche Abstandshalter denkbar, bspw. auch Luft.

Einige obiger Ausführungsbeispiele beschrieben eine Vorrichtung, die eine optische Struktur und zumindest zwei Stege enthält, die jeweils die optische Struktur mit einer tragenden Struktur verbinden und die Stege ausgebildet sind, um eine Bewegung der optischen Struktur bezogen auf eine Bezugsebene zu ermöglichen.

Einige Ausführungsbeispiele zeigten, dass die Bewegung der Stege und mithin der optischen Struktur einer thermisch induzierten Änderung einer optischen Charakteristik der optischen Struktur entgegenwirken kann.

Die Stege sind dabei bevorzugt polymere optische Komponenten mit integrierten mechanischen Strukturen, die eine thermisch induzierte, axiale Positionsänderung der optischen Struktur ermöglichen. Die Stege sind dabei Biegeranordnungen als Monomorph, also einlagig ausgeführt, oder Bimorph, also zweilagig, ausgeführt und damit analog zu Bimetallstreifen wirksam. Dabei kann die thermisch induzierte Bewegung der Stege so ausgelegt werden, dass sie einer ebenfalls thermisch induzierten Änderung einer optischen Charakteristik der optischen Struktur, beispielsweise der Brennweite einer Linse, entgegenwirkt und zumindest teilweise eine Athermisierung erreicht wird. Durch die Dimensionierung der Stege kann ein beliebiger, determinierter Stellweg der Stege erreicht werden.

Zusätzlich ist eine Anordnung von Heizelementen an den Stegen zur lokalen Änderung der Temperatur der Stege denkbar, möglicherweise in Form von elektrischen, ohmschen Widerständen. Die Heizelemente können aus gedruckten, gesputterten, aufgedampften und elektrisch leitenden Heizstrukturen bestehen und gerade, gebogen oder mäanderförmig ausgeformt sein. Im Fall von Linsen kann durch Heizen der elektrischen Heizelemente der Abstand der Linsen zu einer fixen Grundfläche, beispielsweise der Ebene, in der sich ein Bildwandler einer Kamera befindet, geändert werden und unter anderem eine Abstimmung der Fokussierung erfolgen, also ein Autofokusantrieb realisiert werden. Gleichzeitig kann die Heizleistung und damit die Auslenkung der einzelnen Stege getrennt voneinander geregelt werden, so dass sowohl eine parallele Verschiebung der optischen Struktur im Raum entlang der optischen Achse als auch eine Verkippung der optischen Struktur möglich ist.

Die Stege können direkt am Gehäusematerial anschließen, wobei dieses vorzugsweise nicht transparent ausgeführt ist. Alternativ können die Stege gehäuseseitig in einem die Gesamtstruktur umlaufenden Rahmen aus dem Stegmaterial münden, der an das Gehäuse lückenlos anschließt.

Bezüglich der optischen Struktur sind viele identische oder nicht identische Aufbauten möglich, wie sie in den Figuren beschrieben werden. Die Aufbauten bestehen jeweils aus einer optischen Struktur, Stegen, ggf. einem Rahmen und/oder einem Gehäuse und sind nebeneinander angeordnet und möglicherweise parallel, das bedeutet in denselben Arbeitsschritten, hergestellt.

Die Bewegung der optischen Struktur entlang der optischen Achse wird bei einlagigen Stegen durch eine unterschiedliche Ausdehnung von Stegen und dem umgebenden Gehäuse bei einer Temperaturänderung erreicht. Bei einem einlagigen Aufbau bestehen die optische Struktur und die Haltestege aus demselben Material, wobei das Material einen größeren thermischen Ausdehnungskoeffizienten als das umgebende Gehäusematerial aufweist. Bei einer Temperaturerhöhung dehnt sich das Stegmaterial stärker aus als das umgebende Gehäuse. Infolge einer mindestens beidseitigen Aufhängung und einer Zwangslage der optischen Struktur bewegt sich die optische Struktur entlang der optischen Achse.

Die Bewegung entlang der optischen Achse wird im Fall von zweilagigen Stegen durch die unterschiedliche Ausdehnung der Materialien der zweilagigen Stege erreicht. Dabei wird der Ausdehnungsunterschied zu dem Gehäuse nebensächlich. Die Biegung resultiert aus unterschiedlichen Ausdehnungskoeffizienten, CTE, der Schichtmaterialien. Wenn die Schichtfolge unten einen kleineren CTE und oben einen größeren CTE umfasst, dann erfolgt bei einer Temperaturänderung eine Bewegung nach unten. Wenn alternativ hierzu die Schichtfolge unten einen größeren CTE und oben einen kleineren CTE umfasst, so erfolgt bei einer Temperaturänderung eine Bewegung nach oben. Der Schichtaufbau kann dabei kontinuierlich oder diskontinuierlich umgesetzt sein. Ist der Schichtaufbau kontinuierlich, kann die optische Struktur mit den gleichen Materialien und in gleicher Folge ausgebildet sein, wie es die Stege sind. Die Wahl der Materialien definiert in diesem Fall gleichzeitig die mechanischen und die optischen Eigenschaften. Wird beispielsweise ein Achromat, welcher aus zwei Schichten besteht, umgesetzt, so erfolgt die Paarung der Materialien gemäß den Abbe-Zahlen, hieraus folgen die CTEs der Materialien, die die Richtung der Bewegung bei einer Temperaturerhöhung bestimmen.

Alternativ kann auch ein diskontinuierlicher Schichtaufbau umgesetzt sein. In diesem Fall können die optische Struktur und die Stege aus verschiedenen Materialien, bzw. in unterschiedlicher Folge und mehr als zwei Lagen ausgebildet sein. In diesem Fall erfolgt die Wahl des Materials nach mechanischen Eigenschaften, bei Entkopplung der Betrachtung der optischen Eigenschaften. Am Beispiel des obigen Achromats erfolgt die Paarung der Materialien entsprechend der Abbe-Zahlen. Hieraus folgen die CTEs der Materialien. Eine unterschiedliche Schichtfolge und -ausdehnung in den Bereichen der Stege und der optischen Struktur ermöglicht trotz der festgelegten CTEs eine freie Wahl der Bewegungsrichtung bei einer Temperaturerhöhung.

Zusätzlich ist ein Stapeln beliebiger weiterer optischer Strukturen möglich. Die entsprechenden Halteelemente sind in vertikaler Richtung, entlang einer optischen Achse, mechanisch an die Stege darüber- und/oder darunterliegender freitragender Schichten gekoppelt und vollziehen die gleiche Bewegung. Alternativ hierzu können die Halteelemente auch an das Gehäuse gekoppelt sein und sich unabhängig von weiteren Schichtfolgen im Stapel bewegen. Unbewegliche, fixe Linsen des Linsenstapels können durchgehende Glaswafer aufweisen.

Vorteilhaft ist, dass die beschriebenen Anordnungen eine thermisch beeinflusste Position optischer Komponenten aus Polymerwerkstoffen allgemein erlauben. Insbesondere relevant sind dabei Linsen, die entlang der Richtung der Normalen der Bildebene bewegt werden. Bei korrekter Auslegung kann die thermisch induzierte Abstandänderung der Hauptebene einer Linse/eines Objektivs zu deren/dessen Bildebene so gewählt werden, dass sie der thermisch induzierten Änderung der Brennweite entspricht. Folglich liegt die Bildebene der Linse/des Objektivs stets an derselben axialen Position, wodurch auch bei sich ändernder Temperatur eine stets scharfe Abbildung realisiert werden kann. Hierdurch wird der Einsatzbereich polymerer Optiken wesentlich erweitert. Die Anordnungen können im Vielfachnutzen auf Wafer-Level gefertigt werden und ermöglichen damit eine weitere Kostenreduktion.

Durch Nutzung von elektrischen Heizelementen kann die Temperatur, mithin die Durchbiegung der Haltestrukturen und letztlich die axiale Position der Linsen unabhängig von der Umgebungstemperatur gesteuert werden, was unter anderem für eine aktive Fokussierung, beispielsweise in Form eines Autofokus, genutzt werden kann.

Durch gezielt unterschiedliche Auslenkung der Haltestrukturen der Linsen kann auch eine Verkippung erzielt werden.

Einige der obigen Ausführungsbeispiele zeigten eine Möglichkeit der Einstellung einer bestimmten Position und Verkippung der optischen Struktur durch Verbiegen der Stegstrukturen und Fixierung der Lage nach erfolgter Justage mittels UV-härtendem Adhäsiv. Damit ist die Kompensation von Fertigungstoleranzen polymerer optischer Komponenten und im Speziellen die Abstimmung der Bildlage von Objektiven, insbesondere nach einer erfolgten Fügung von Optik- und Imagerwafern, möglich. Gegebenenfalls vorhandene Zusatzeinrichtungen, wie thermisch oder elektrostatisch beeinflussbare Stege, ermöglichen weiterhin die thermisch beeinflusste Position optischer Komponenten aus Polymerwerkstoffen. Elektrostatische Antriebe sind gemäß Ausführungsbeispielen gemeinsam mit Heizstrukturen zum Erwärmen der Stege angeordnet. Ferner können mit Heizelementen und/oder elektrostatischen Antrieben auslenkbare thermisch beeinflussbare Stege mit einem Kleber in einer von der ursprünglichen Initialposition verschiedenen Position justiert werden.

Weitere der obigen Ausführungsbeispiele zeigten vorangegangene Erläuterungen, dass eine angelegte Spannung zwischen den Elektroden des elektrostatischen Antriebes genutzt werden kann, um die Verschiebung der optischen Struktur im Raum zu ermöglichen. Die Aktuation erfolgt durch das Nutzen eines elektrostatischen Feldes, welches aus dem Anlegen einer elektrischen Spannung zwischen den Elektroden des elektrostatischen Antriebes resultiert. Ggf. kann ein zusätzlicher Elektrodenträger mit ggf. gekrümmten, kontinuierlichem Profil genutzt werden, um einen elektrostatischen Antrieb an einer tragenden Struktur umzusetzen. Durch Minimierung des Abstandes respektive des Spaltes zwischen den Elektroden eines elektrostatischen Antriebes kann die für eine Bewegung erforderliche Spannung reduziert werden.

Eine Bewegung entlang einer optischen Achse wird erreicht durch die Änderung der anliegenden Spannung zwischen einer Steg- und einer Formelektrode. Hierbei kann jeder Steg mit einer unterschiedlichen Spannung beaufschlagt werden, so dass sich für jeden Steg eine andere Wegstrecke ergibt und neben einer Bewegung der optischen Struktur entlang der optischen Achse auch eine Verkippung der optischen Struktur erzielt werden kann.

Zusätzlich können die Aktuatoren genutzt werden, um die axiale Position der optischen Strukturen bezüglich des Imagers in Abhängigkeit des Objektabstandes einzustellen, um eine bestmögliche Abbildungsqualität zu erzielen und einen Autofokus umzusetzen.

Nach Fertigung der beschriebenen optischen Strukturen inklusive der Häusungskomponenten erfolgt das Fügen der Formbauteile, einzeln oder im Verbund auf Wafer-Level, die linsenseitig über eine gekrümmte, kontinuierliche Form verfügen. Die Formbauteile dienen als Elektrodenträger und sind mit der jeweils zweiten Elektrode der elektrostatischen Antriebe versehen. Mindestens eine der Elektroden, Steg- oder Formelektrode, ist mit einer Isolationsschicht versehen, die wie die Elektroden mittels Verdampfen oder Sputtern oder durch eine zusätzliche Abformung von Polymeren aufgebracht werden kann.

Die vorgestellten Vorrichtungen können in jedweder Ausgestaltungsform in Form vieler Komponenten und Systeme nebeneinander in Wafer-Level-Fertigung und in hoher Präzision gefertigt und mit einer Vielzahl von Komponenten verbunden werden. Es ist insbesondere möglich, einen Optikwafer mit einem Imagerwafer zu verbinden und durch Nutzung der Aktuatoren in jedem Kanal nachträglich die optimale Fokusposition einzustellen.

Eine optimale Funktion der optischen Vorrichtungen kann sichergestellt werden, indem die axialen Positionen der optischen Strukturen, welche vorrangig als Linsen ausgeführt sein können, nach erfolgtem Fügen der einzelnen Linsenlagen durch Aktuatoren, insbesondere thermische oder elektrostatische, angepasst werden. Dadurch kann eine optimale Ausrichtung der optischen Strukturen bezüglich einer Bezugsebene und mithin die Kompensation der in Folge auftretender Herstellungs- und Fügetoleranzen resultierenden Abweichungen von evtl. Sollparametern erreicht werden.

Allgemein erlauben die beschriebenen Anordnungen eine Kompensation von Fertigungstoleranzen polymerer optischer Komponenten und im Speziellen die dynamische Abstimmung der Bildlage von Objektiven im Sinne eines Autofokus. Hierdurch wird der Einsatzbereich polymerer Optiken wesentlich erweitert. Die Anordnungen können im Vielfachnutzern auf Wafer-Level gefertigt werden und ermöglichen damit eine weitere Kostenreduktion. Es kann im Speziellen der gesamte Optikwafer mit einem Imagerwafer gefügt werden und jedes einzelne Modul durch eine Wahl der Ansteuerspannung oder Ansteuerspannungen in die optimale Fokuslage gebracht werden. Durch gezielt unterschiedliche Auslenkung der Stege und mithin der damit verbundenen optischen Strukturen kann auch eine Verkippung der optischen Strukturen erzielt werden.

Es wurde erläutert, dass die Stege, die die optische Struktur mit der tragenden Struktur verbinden und an denen ein elektrostatischer Antrieb angeordnet ist, derart ausgeformt werden können, dass ein Abschnitt der Stege zumindest teilweise aus der Ebene des jeweiligen Steges in Richtung der korrespondierenden zweiten Elektrode ausgelenkt ist, um so die Effizienz des elektrostatischen Antriebes zu steigern.

Die Aktuatoren können miniaturisiert und in Wafer-Level-Technik hergestellt werden. Zugleich können die Aktuatoren sowohl Fertigungstoleranzen kompensieren als auch eine veränderliche Fokussierung im Betrieb des optischen Gesamtsystems ermöglichen.

Ausführungsbeispiele beziehen sich auf eine Vorrichtung mit einem Abstandshalter (128), der zwischen der Ausleger- (174a; 174b) und der stationären (176a; 176b) Elektrode angeordnet ist.

Gemäß Ausführungsbeispielen umfasst der der Abstandshalter (128) eine Isolationsschicht, die zumindest teilweise auf der Auslegerelektrode (174a; 174b) und/oder der stationären Elektrode (176a; 176b) angeordnet ist.

Weitere Ausführungsbeispiele beziehen sich auf eine Vorrichtung, bei der die Auslegerelektrode (174a; 174b) zumindest teilweise in den Steg (14; 14a-p) eingebettet ist.

Weitere Ausführungsbeispiele beziehen sich auf eine Vorrichtung mit einem Elektrodenträger (168), auf dem die stationären Elektrode (176a; 176b) angebracht ist und bei der der Elektrodenträger (168) ein ebenes Profil aufweist.

Weitere Ausführungsbeispiele beziehen sich auf eine Vorrichtung, bei der der Elektrodenträger (168) mittels eines Klebers (134a; 134b) an der tragenden Struktur (16) angeordnet ist.

Weitere Ausführungsbeispiele beziehen sich auf eine Vorrichtung, bei der der Elektrodenträger (168) und/oder die tragende Struktur (16) periphere Strukturen (148a; 148b; 152a; 152b) aufweist, die eine Fügezone (182a; 182b) zwischen Steg (14; 14a-p) und Elektrodenträger (168) und/oder einen Einbringungsort für den Kleber (134a; 134b) ausbilden.

Weitere Ausführungsbeispiele beziehen sich auf eine Vorrichtung, bei der der Elektrodenträger (168) so an der tragenden Struktur (16) angeordnet ist, dass die zweite Elektrode (176a; 176b) der ersten Elektrode (172a; 172b) zugewandt ist und zumindest eine Kontaktstelle zwischen der Tragestruktur (16) und dem Elektrodenträger (168) ausgebildet ist, wobei an der Kontaktstelle zwischen den beiden Elektroden (172a; 172b; 176a; 176b) ausschließlich der Kleber (134a; 134b) und der Abstandshalter (128) angeordnet ist.

Weitere Ausführungsbeispiele beziehen sich auf eine Vorrichtung, bei der sich die erste Schicht (34a; 34b) der Stege von der optischen Struktur (12) zu der tragenden Struktur (16) erstreckt, und bei der die zweite Schicht (36a; 36b) der Stege die erste Schicht (34a; 34b) teilweise oder vollständig bedeckt.

Weitere Ausführungsbeispiele beziehen sich auf eine Vorrichtung, bei der die zweite Schicht (36a; 36b), die die erste Schicht (34 a; 34b) teilweise bedeckt, mit einem Abstand zu der optischen Struktur (12) und/oder der tragenden Struktur (16) angeordnet ist.

Weitere Ausführungsbeispiele beziehen sich auf eine Vorrichtung, bei der die erste Schicht (34a; 34b) und/oder die zweite Schicht (36a; 36b) eine konstante oder eine sich verändernde Dicke umfassen.

Weitere Ausführungsbeispiele beziehen sich auf eine Vorrichtung, bei der sich die Dicke der ersten Schicht (34a; 34b) und/oder der zweiten Schicht (36a; 36b) zumindest über einen Teil der Länge stetig ändert, oder bei der sich die Dicke unstetig ändert.

Weitere Ausführungsbeispiele beziehen sich auf eine Vorrichtung, bei der die zumindest zwei Stege (14; 14a-p) zumindest eine weitere Schicht (37a; 37b) umfassen, die relativ zu der ersten (34a; 34b) und zweiten Schicht (36a; 36b) unterschiedlich auslenkbar ist.

Weitere Ausführungsbeispiele beziehen sich auf eine Vorrichtung, bei der die zumindest zwei Stege (14; 14a-p) eine Schicht umfassen, die einen höheren Temperaturausdehnungskoeffizienten als die tragende Struktur (16) hat.

Weitere Ausführungsbeispiele beziehen sich auf eine Vorrichtung, bei der die Schicht eine konstante oder eine stetig oder unstetig veränderliche Dicke aufweist.

Weitere Ausführungsbeispiele beziehen sich auf eine Vorrichtung, bei der die Schicht der Stege (14; 14a-p) und die optischen Struktur (12) einstückig sind.

Weitere Ausführungsbeispiele beziehen sich auf eine Vorrichtung, bei der die weitere optische Struktur (79; 188) eine Glasschicht (86) und zumindest ein optisches Element (79a), das auf der Glasschicht (86) angebracht ist, umfasst.

Weitere Ausführungsbeispiele beziehen sich auf eine Vorrichtung mit einem aushärtbaren Kleber (102), der zwischen den Stegen (14; 14a-p) und der tragenden Struktur (16) angeordnet ist, wobei der Kleber (102a; 102b) wirksam ist, um nach dessen Aushärtung eine vorbestimmte Ausrichtung der optischen Struktur (12) bezüglich der Bezugsebene (18) zu bewirken.

Weitere Ausführungsbeispiele beziehen sich auf eine Vorrichtung, bei der die optische Struktur (12) eine erste Schicht (34c) umfasst, wobei die erste Schicht (34c) und die Schicht der Stege (14; 14a-p) aus demselben Material gebildet sind.

Weitere Ausführungsbeispiele beziehen sich auf eine Vorrichtung, bei der die optische Struktur (12) eine zweite Schicht (36c) auf der ersten Schicht (34c) umfasst.

Weitere Ausführungsbeispiele beziehen sich auf eine Vorrichtung, bei der die Längsmittellinie (38) der Stege (14; 14a-p) eine optische Achse (28) der optischen Struktur (12) schneidet oder an einer optischen Achse (28) der optischen Struktur (12) vorbei läuft.

Weitere Ausführungsbeispiele beziehen sich auf eine Vorrichtung, bei der die optische Struktur (12) ein oder mehrere optische Elemente (12; 142; 144; 146) umfasst.

Weitere Ausführungsbeispiele beziehen sich auf eine Vorrichtung, bei der das optische Element (12; 142; 144; 146) über transparente, reflektierende oder absorbierende Bereiche verfügt.

Weitere Ausführungsbeispiele beziehen sich auf eine Vorrichtung, bei der das optische Element (12; 142; 144; 146) eine Linse, eine Asphäre, eine Freiformfläche, eine diffraktive Struktur, einen Spiegel, ein Prisma oder ein Linsenarray, welches aus identischen oder nicht identischen Zellen, die jeweils als Linse, Asphäre, Freiformfläche, diffraktive Struktur, Spiegel oder Prisma ausgeführt sind, oder eine Kombination derselben umfasst.

Weitere Ausführungsbeispiele beziehen sich auf eine Vorrichtung, bei der eine weitere Tragestruktur (16b) mit der Tragestruktur (16a) verklebt ist.

Weitere Ausführungsbeispiele beziehen sich auf ein Verfahren, mit folgenden Schritten:
Anordnen eines aushärtbaren Klebers (102) zwischen den Stegen (14; 14a-p) und der tragenden Struktur (16); und
Aushärten des Klebers (102), um eine vorbestimmte Ausrichtung der optischen Struktur (12) bezüglich der Bezugsebene (18) zu bewirken.

Weitere Ausführungsbeispiele beziehen sich auf ein Verfahren, bei dem das Aushärten des Klebers (102) folgenden Schritt umfasst:
Einstellen einer Aushärttemperatur oder Aushärtdauer abhängig von einer erwünschten Verkippung oder einem erwünschten Abstand der optischen Struktur (12) bezüglich der Bezugsebene (18).

Weitere Ausführungsbeispiele beziehen sich auf ein Verfahren, bei dem der Kleber (102) einen UV-härtenden Kleber umfasst.

## Patentansprüche

1. Vorrichtung mit:
einer optischen Struktur (12);
zumindest zwei Stegen (14; 14a-p), die jeweils die optische Struktur (12) mit einer tragenden Struktur (16) verbinden; und
einem elektrostatischen Antrieb (182a; 182b) zum Auslenken der optischen Struktur (12),
wobei der elektrostatische Antrieb (182a; 182b) eine Auslegerelektrode (174a; 174b) und eine von der Auslegerelektrode elektrisch isolierte stationäre Elektrode (176a; 176b), die der Auslegerelektrode (174a; 174b) zumindest teilweise gegenüber liegt, umfasst,
wobei die Auslegerelektrode (174a; 174b) auf oder in zumindest einem Abschnitt (166a; 166b) zumindest eines Steges (14; 14a-p) angeordnet ist und wobei die Auslegerelektrode (174a; 174b) zumindest teilweise aus einer Ebene des zumindest einen Steges (14; 14a-p) herausragt und in Richtung der stationären Elektrode (176a; 176b) ausgelenkt ist, um bei Anlegen eines elektrischen Feldes (186) zwischen der Auslegerelektrode (174a; 174b) und stationären Elektrode (176; 176b) eine Verformung des Steges (14; 14a-p) zu bewirken;
wobei der der Abstand zwischen der Auslegerelektrode (174a; 174b) und der stationären Elektrode (176a; 176b) ausgehend von einer Position benachbart zu der tragenden Struktur (16) im unausgelenkten Zustand des Aktuators in Richtung der optischen Struktur (12) zunimmt.

2. Vorrichtung nach Anspruch 1, bei der die stationären Elektrode (176a; 176b) einen Abschnitt umfasst, auf dem die Auslegerelektrode (174a; 174b) aufliegt ohne das ein elektrisches Feld (186) angelegt wurde.

3. Vorrichtung gemäß einem der Ansprüche 1 bis 6, mit einem Elektrodenträger (168), auf dem die stationären Elektrode (176a; 176b) angebracht ist.

4. Vorrichtung gemäß Anspruch 1 bis 3, bei der die Geometrie der Auslegerelektrode (174a; 174b) und/oder der der stationären Elektrode (176a; 176b) ausgebildet ist, um ein linearisiertes Verhältnis von zwischen den Elektroden (174a; 174b; 176a; 176b) angelegter Spannung und der resultierenden Auslenkung der optischen Struktur (12) aufzuweisen, so dass die Geometrie über eine axiale Ausdehnung unterschiedliche Breiten aufweist, sodass die Spannung (U) über den axialen Verlauf der Elektroden eine variable Kraft zwischen den Elektroden mittels eines variablen elektrischen Feldes erzeugt.

5. Vorrichtung gemäß einem der Ansprüche 1 bis 4, bei der die zumindest zwei Stege (14; 14a-p) eine erste Schicht (34a; 34b) und eine zweite Schicht (36a; 36b) umfassen, die relativ zueinander unterschiedlich auslenkbar sind.

6. Vorrichtung nach Anspruch 5, bei der die erste Schicht (34a; 34b) und die zweite Schicht (36a; 36b) unterschiedliche thermische Ausdehnungskoeffizienten umfassen.

7. Vorrichtung nach Anspruch 5 oder 6, bei der die optische Struktur (12) eine Schicht (34c) umfasst, wobei die Schicht der optischen Struktur und die erste Schicht (34a; 34b) der Stege (14; 14a-p) aus demselben Material gebildet sind.

8. Vorrichtung nach Anspruch 7, bei der die optische Struktur (12) eine weitere Schicht (36c) umfasst, wobei die weitere Schicht (36c) der optischen Struktur (12) und die zweite Schicht (36a; 36b) der Stege (14; 14a-p) aus demselben Material gebildet sind.

9. Vorrichtung nach Anspruch 7 oder 8, bei der die Schicht (34c) der optischen Struktur (12) und die erste Schicht (34a; 34b) der Stege (14; 14a-p) und/oder die weitere Schicht (36c) der optischen Struktur (12) und die zweite Schicht (36a; 36b) der Stege (14; 14a-p) einstückig sind.

10. Vorrichtung nach einem der Ansprüche 1 bis 9, bei der die tragende Struktur (16) einen Abschnitt (62) aus dem Stegmaterial umfasst.

11. Vorrichtung nach einem der Ansprüche 1 bis 10, mit zumindest einer weiteren optischen Struktur (75; 79; 188), wobei die weitere optische Struktur (75; 79; 188) bezüglich der optischen Struktur (12) angeordnet ist, so dass deren optische Achsen (28) im Wesentlichen übereinstimmen.

12. Vorrichtung nach einem der Ansprüche 1 bis 11, bei der die zumindest eine weitere optische Struktur (75; 79; 188) über weitere Strukturen (74; 81) an der tragenden Struktur (16) oder an der optischen Struktur (12) angeordnet ist.

13. Vorrichtung nach Anspruch 12, bei der die weiteren Strukturen (74; 81) an der weiteren optischen Struktur (12) durch Klebstoff (78) angeordnet sind.

14. Verfahren zum Herstellen einer Vorrichtung mit einer optischen Struktur (12) mit zumindest zwei Stegen (14; 14a-p), die jeweils die optische Struktur (12) mit einer tragenden Struktur (16) verbinden, und einem elektrostatischen Antrieb (182), wobei das Verfahren folgende Schritte umfasst:
Ausbilden der Stege (14; 14a-p), um eine Bewegung der optischen Struktur (12) bezogen auf eine Bezugsebene (18) zu ermöglichen;
Anordnen einer Auslegerelektrode (174a; 174b) auf oder in einem Abschnitt (166a; 166b) der Stege (14; 14a-p);
Anordnen der stationären Elektrode (176a; 176b) derart, dass sie der Auslegerelektrode (174a; 174b) zumindest teilweise gegenüberliegt und von der Auslegerelektrode elektrisch isoliert ist;
Auslenken der Auslegerelektrode (174a; 174b) zumindest teilweise aus einer Ebene zumindest eines Steges (14; 14a-p) heraus und in Richtung der stationären Elektrode (176a; 176b), wobei ein Anlegen eines elektrischen Feldes (184) zwischen der Auslegerelektrode (174a; 174b) und der stationären Elektrode (176a; 176b) eine Verformung des Steges (14; 14a-p) und eine Bewegung der optischen Struktur (12) bewirkt;
wobei die Auslegerelektrode oder die stationäre Elektrode so angeordnet werden, dass der der Abstand zwischen der Auslegerelektrode (174a; 174b) und der stationären Elektrode (176a; 176b) ausgehend von einer Position benachbart zu der tragenden Struktur (16) im unausgelenkten Zustand des Aktuators in Richtung der optischen Struktur (12) zunimmt.

15. Verfahren gemäß Anspruch 14, bei dem das Anordnen der zweiten Elektrode (176a; 176b) folgende Schritte umfasst:
Bereitstellen eines Elektrodenträgers (168);
Anordnen eines Abstandshalters (128) an der Auslegerelektrode (174a; 174b) oder der stationären Elektrode (176a; 176b);
Anordnen des Elektrodenträgers (168) derart, dass die stationären Elektrode (176a; 176b) der Auslegerelektrode (174a; 174b) zumindest teilweise gegenüberliegt;
Fixierung des Elektrodenträgers (168) mittels eines Klebstoffs (134a; 134b) sodass zwischen der Auslegerelektrode (174a; 174b) und der stationären Elektrode (176a; 176b) lediglich der Abstandshalter (128) und der Klebstoff (134a; 134b) angeordnet ist.

## Claims

1. Apparatus comprising:
an optical structure (12);
at least two ridges (14; 14a-p), each connecting the optical structure (12) to a supporting structure (16); and
an electrostatic drive (182a; 182b) for deflecting the optical structure (12),
wherein the electrostatic drive (182a; 182b) includes a cantilever electrode (174a; 174b) and a stationary electrode (176a; 176b) electrically insulated from the cantilever electrode, which at least partly opposes the cantilever electrode (174a; 174b),
wherein the cantilever electrode (174a; 174b) is arranged on or in at least one portion (166a; 166b) of at least one ridge (14; 14a-p) and wherein the cantilever electrode (174a; 174b) projects at least partly out of a plane of the at least one ridge (14; 14a-p) and is deflected in the direction of the stationary electrode (176a; 176b), in order to effect deformation of the ridge (14; 14a-p) when an electric field (186) is applied between the cantilever electrode (174a; 174b) and stationary electrode (176a; 176b);
wherein the distance between the cantilever electrode (174a; 174b) and the stationary electrode (176a; 176b) increases starting from a position adjacent to the supporting structure (16) in the non-deflected state of the actuator in the direction of the optical structure (12).

2. Apparatus according to claim 1, wherein the stationary electrode (176a; 176b) includes a portion on which the cantilever electrode (174a; 174b) is supported without the application of an electric field (186).

3. Apparatus according to one of claims 1 to 6 having an electrode carrier (168) on which the stationary electrode (176a; 176b) is mounted.

4. Apparatus according to one of claims 1 to 3, wherein the geometry of the cantilever electrode (174a; 174b) and/or the stationary electrode (176a; 176b) is implemented to have a linearized ratio between voltage applied between the electrodes (174a; 174b; 176a; 176b) and the resulting deflection of the optical structure (12), such that the geometry across an axial extension has different widths, such that the voltage (U) generates a variable force between the electrodes by means of a variable electric field across the axial curve of the electrodes.

5. Apparatus according to one of claims 1 to 4, wherein the at least two ridges (14; 14a-p) include a first layer (34a; 34b) and a second layer (36a; 36b) that are deflectable differently in relation to one another.

6. Apparatus according to claim 5, wherein the first layer (34a; 34b) and the second layer (36a; 36b) have different coefficients of thermal expansion.

7. Apparatus according to claim 5 or 6, wherein the optical structure (12) includes a layer (34c), wherein the layer of the optical structure and the first layer (34a; 34b) of the ridges (14; 14a-p) are formed of the same material.

8. Apparatus according to claim 7, wherein the optical structure (12) includes a further layer (36c), wherein the further layer (36c) of the optical structure (12) and the second layer (36a; 36b) of the ridges (14; 14a-p) are formed of the same material.

9. Apparatus according to claims 7 or 8, wherein the layer (34c) of the optical structure (12) and the first layer (34a; 34b) of the ridges (14; 14a-p) and/or the further layer (36c) of the optical structure (12) and the second layer (36a; 36b) of the ridges (14; 14a-p) are integrated.

10. Apparatus according to one of claims 1 to 9, wherein the supporting structure (16) includes a portion (62) of the ridge material.

11. Apparatus according to one of claims 1 to 10 having at least one further optical structure (75; 79; 188), wherein the further optical structure (75; 79; 188) is arranged with regard to the optical structure (12) such that their optical axes (28) essentially coincide.

12. Apparatus according to one of claims 1 to 11, wherein the at least one further optical structure (75; 79; 188) is arranged at the supporting structure (16) or the optical structure (12) via further structures (74; 81).

13. Apparatus according to claim 12, wherein the further structures (74; 81) are arranged at the further optical structure (12) by adhesive (78).

14. Method for producing an apparatus having an optical structure (12) with at least two ridges (14; 14a-p), each connecting the optical structure (12) to a supporting structure (16), and an electrostatic drive (182), the method comprising:
forming the ridges (14; 14a-p) in order to allow a movement of the optical structure (12) in relation to a reference plane (18);
arranging a cantilever electrode (174a; 174b) on or in a portion (166a; 166b) of the ridges (14; 14a-p);
arranging the stationary electrode (176a; 176b) such that the same opposes the cantilever electrode (174a; 174b) at least partly and is electrically insulated from the cantilever electrode;
deflecting the cantilever electrode (174a; 174b) at least partly out of a plane of at least one ridge (14; 14a-p) and in the direction of the stationary electrode (176a; 176b), wherein applying an electric field (184) between the cantilever electrode (174a; 174b) and the stationary electrode (176a; 176b) causes a deformation of the ridge (14; 14a-p) and a movement of the optical structure (12);
wherein the cantilever electrode or the stationary electrode are arranged such that the distance between the cantilever electrode (174a; 174b) and the stationary electrode (176a; 176b) increases starting from a position adjacent to the supporting structure (16) in the non-deflected state of the actuator in the direction of the optical structure (12).

15. Method according to claim 14, wherein arranging the second electrode (176a; 176b) comprises:
providing an electrode carrier (168);
arranging a spacer (128) at the cantilever electrode (174a; 174b) or the stationary electrode (176a; 176b);
arranging the electrode carrier (168) such that the stationary electrode (176a; 176b) at least partly opposes the cantilever electrode (174a; 174b);
fixing the electrode carrier (168) by means of an adhesive (134a; 134b), so that merely the spacer (128) and the adhesive (134a; 134b) are arranged between the cantilever electrode (174a; 174b) and the stationary electrode (176a; 176b).

## Revendications

1. Dispositif avec:
une structure optique (12);
au moins deux bretelles (14; 14a à p) qui relient, chacune, la structure optique (12) à une structure portante (16); et
un entraînement électrostatique (182a; 182b) destiné à dévier la structure optique (12),
dans lequel l'entraînement électrostatique (182a; 182b) comporte une électrode en porte-à-faux (174a; 174b) et une électrode stationnaire (176a; 176b) isolée électriquement de l'électrode en porte-à-faux et qui se situe au moins partiellement opposée à l'électrode en porte-à-faux (174a; 174b),
dans lequel l'électrode en porte-à-faux (174a; 174b) est disposée sur ou dans au moins un segment (166a; 166b) d'au moins une bretelle (14; 14a à p), et dans lequel l'électrode en porte-à-faux (174a; 174b) ressort au moins partiellement d'un plan de l'au moins une bretelle (14; 14a à p) et est déviée en direction de l'électrode stationnaire (176a; 176b) pour provoquer, lors de l'application d'un champ électrique (186) entre l'électrode en porte-à-faux (174a; 174b) et une électrode stationnaire (176; 176b), une déformation de la bretelle (14; 14a à p);
dans lequel la distance entre l'électrode en porte-à-faux (174a; 174b) et l'électrode stationnaire (176a; 176b) augmente, en partant d'une position voisine de la structure portante (16) à l'état non dévié de l'actionneur, en direction de la structure optique (12).

2. Dispositif selon la revendication 1, dans lequel l'électrode stationnaire (176a; 176b) comporte un segment sur lequel s'appuie l'électrode en porte-à-faux (174a; 174b) sans que soit appliqué un champ électrique (186).

3. Dispositif selon l'une des revendications 1 à 6, avec un porte-électrode (168) sur lequel est placée l'électrode stationnaire (176a; 176b).

4. Dispositif selon la revendication 1 à 3, dans lequel la géométrie de l'électrode en porte-à-faux (174a; 174b) et/ou celle de l'électrode stationnaire (176a; 176b) est conçue pour présenter un rapport linéarisé de la tension appliquée entre les électrodes (174a; 174b; 176a; 176b) et la déviation résultante de la structure optique (12), de sorte que la géométrie présente des largeurs différentes sur une extension axiale, de sorte que la tension (U) génère, sur l'extension axiale des électrodes, une force variable entre les électrodes au moyen d'un champ électrique variable.

5. Dispositif selon l'une des revendications 1 à 4, dans lequel les au moins deux bretelles (14; 14a à p) comportent une première couche (34a; 34b) et une deuxième couche (36a; 36b) qui peuvent être déviées de manière différente l'une par rapport à l'autre.

6. Dispositif selon la revendication 5, dans lequel la première couche (34a; 34b) et la deuxième couche (36a; 36b) comportent des coefficients de dilatation thermique différents.

7. Dispositif selon la revendication 5 ou 6, dans lequel la structure optique (12) comporte une couche (34c), où la couche de la structure optique et la première couche (34a; 34b) des bretelles (14; 14a à p) sont réalisées dans le même matériau.

8. Dispositif selon la revendication 7, dans lequel la structure optique (12) comporte une autre couche (36c), où l'autre couche (36c) de la structure optique (12) et la deuxième couche (36a; 36b) des bretelles (14; 14a à p) sont réalisées dans le même matériau.

9. Dispositif selon la revendication 7 ou 8, dans lequel la couche (34c) de la structure optique (12) et la première couche (34a; 34b) des bretelles (14; 14a à p) et/ou l'autre couche (36c) de la structure optique (12) et la deuxième couche (36a; 36b) des bretelles (14; 14a à p) sont d'une seule pièce.

10. Dispositif selon l'une des revendications 1 à 9, dans lequel la structure portante (16) comporte un segment (62) réalisé dans le matériau des bretelles.

11. Dispositif selon l'une des revendications 1 à 10, avec au moins une autre structure optique (75; 79; 188), dans lequel l'autre structure optique (75; 79; 188) est disposée par rapport à la structure optique (12) de sorte que leurs axes optiques (28) coïncident substantiellement.

12. Dispositif selon l'une des revendications 1 à 11, dans lequel l'au moins une autre structure optique (75; 79; 188) est disposée par l'intermédiaire d'autres structures (74; 81) sur la structure portante (16) ou sur la structure optique (12).

13. Dispositif selon la revendication 12, dans lequel les autres structures (74, 81) sont disposées sur l'autre structure optique (12) au moyen d'un adhésif (78).

14. Procédé de fabrication d'un dispositif avec une structure optique (12) avec au moins deux bretelles (14; 14a à p) qui relient, chacune, la structure optique (12) à une structure portante (16), et un entraînement électrostatique (182), le procédé comportant les étapes suivantes consistant à:
réaliser les bretelles (14; 14a à p) pour permettre un mouvement de la structure optique (12) par rapport à un plan de référence (18);
disposer une électrode en porte-à-faux (174a; 174b) sur ou dans un segment (166a; 166b) des bretelles (14; 14a à p);
disposer l'électrode stationnaire (176a; 176b) de sorte qu'elle se situe au moins partiellement opposée à l'électrode en porte-à-faux (174a; 174b) et qu'elle soit isolée électriquement de l'électrode en porte-à-faux;
dévier l'électrode en porte-à-faux (174a; 174b) au moins partiellement hors d'un plan d'au moins une bretelle (14; 14a à p) et en direction de l'électrode stationnaire (176a; 176b), où une application d'un champ électrique (184) entre l'électrode en porte-à-faux (174a; 174b) et l'électrode stationnaire (176a; 176b) provoque une déformation de la bretelle (14; 14a à p) et un mouvement de la structure optique (12);
dans lequel l'électrode en porte-à-faux ou l'électrode stationnaire sont disposées de sorte que la distance entre l'électrode en porte-à-faux (174a; 174b) et l'électrode stationnaire (176a; 176b) augmente, en partant d'une position voisine de la structure portante (16) à l'état non dévié de l'actionneur, en direction de la structure optique (12).

15. Procédé selon la revendication 14, dans lequel la disposition de la deuxième électrode (176a; 176b) comporte les étapes suivantes consistant à:
prévoir un porte-électrode (168);
disposer une entretoise (128) sur l'électrode en porte-à-faux (174a; 174b) ou l'électrode stationnaire (176a; 176b);
disposer le porte-électrode (168) de sorte que l'électrode stationnaire (176a; 176b) se situe au moins partiellement opposée à l'électrode en porte-à-faux (174a; 174b);
fixer le porte-électrode (168) au moyen d'un adhésif (134a; 134b) de sorte qu'entre l'électrode en porte-à-faux (174a; 174b) et l'électrode stationnaire (176a; 176b) ne soient disposés que l'entretoise (128) et l'adhésif (134a; 134b).
